# EUROPEAN PATENT APPLICATION

(11) **EP 4 682 712 A1**
(43) Date of publication of application: **21.01.2026**
(21) Application number: 24842277.6
(22) Date of filing: 11.07.2024
(51) Int. Cl.: G06F 9/451

(54) **DISPLAY METHOD AND ELECTRONIC DEVICE**

(30) Priority: 18.07.2023 CN 202310886138
(71) Applicant: Huawei Technologies Co., Ltd., Shenzhen, Guangdong 518129 (CN)
(72) Inventor: WANG, Hongjun, Shenzhen, Guangdong 518129 (CN); CHEN, Yifan, Shenzhen, Guangdong 518129 (CN); ZHANG, Yanan, Shenzhen, Guangdong 518129 (CN); HWANG, Wooseok, Shenzhen, Guangdong 518129 (CN); TAI, Yankun, Shenzhen, Guangdong 518129 (CN); ZHOU, Yuxiao, Shenzhen, Guangdong 518129 (CN)
(74) Representative: Huawei European IPR
(86) International application number: PCT/CN2024/104985
(87) International publication number: WO 2025/016283

(57) **Abstract**

This application provides a display method and an electronic device. The method may be applied to an electronic device. A first display interface of the electronic device includes an entry indicator for invoking an AI service. The method includes: detecting a first operation on the entry indicator; and in response to the first operation, displaying a second display interface for interacting with the AI service. In the technical solution, a display interface of the electronic device may include the entry indicator for invoking the AI service. A user may perform an operation on the entry indicator to invoke a display interface for interacting with the AI service, so that the user can conveniently use the AI service on the electronic device.

## Description

This application claims priority to Chinese Patent Application No. 202310886138.5, filed with the China National Intellectual Property Administration on July 18, 2023 and entitled "DISPLAY METHOD AND ELECTRONIC DEVICE", which is incorporated herein by reference in its entirety.

### TECHNICAL FIELD

Embodiments of this application relate to the field of electronic technologies, and more specifically, to a display method and an electronic device.

### BACKGROUND

Currently, with rapid development of artificial intelligence (artificial intelligence, AI) technologies, users often need to use some AI services on electronic devices such as mobile phones and tablet computers for convenience. However, when the user uses the AI service, for example, when the user queries some information by using a voice assistant on the mobile phone, an interaction process is complex.

Therefore, how to conveniently use the AI service on the electronic device becomes a technical problem that needs to be resolved.

### SUMMARY

This application provides a display method and an electronic device, so that a user can conveniently use an AI service on an electronic device.

According to a first aspect, a display method is provided. The method is applied to an electronic device, a first display interface of the electronic device includes an entry indicator for invoking an artificial intelligence AI service, and the method includes: detecting a first operation on the entry indicator; and in response to the first operation, displaying a second display interface for interacting with the AI service.

The entry indicator may be located at a bottom or a side of the first display interface. The entry indicator may be a small bar, an icon, an AI status bar, or the like.

The first operation may be an operation like a tap, a touch and hold, or a slide. This is not limited in this application.

The first display interface may be a home screen of the electronic device, may be a lock screen display interface, or may be a display interface of an application.

The second display interface may be a display interface overlaying a part of the first display interface, or may be a full-screen display interface.

The electronic device may be various electronic devices such as a mobile phone, a desktop computer, a laptop computer, a watch, a head-mounted device, and a vehicle-mounted computer. A display of the electronic device may be foldable or extendable, may be non-foldable or non-extendable, or the like. A type of the electronic device and a specific form of the electronic device are not limited in this application.

Based on embodiments of this application, the first display interface of the electronic device may include the entry indicator for invoking the AI service. When detecting the first operation of a user on the entry indicator, the electronic device may display the second display interface for interacting with the AI service. According to the technical solution, the user can conveniently use the AI service on the electronic device.

With reference to the first aspect, in some implementations of the first aspect, before detecting the first operation of the user on the entry indicator, the method further includes: determining that the AI service has content that needs to be recommended to the user; and changing the entry indicator from a first form to a second form in response to determining that the AI service has the content that needs to be recommended to the user.

For example, the first form may be single-color display, and the second form may be color display and display a flowing light effect. Alternatively, the first form may be a bar indicator with a preset length, and the second form may be a circular indicator or an indicator longer than the bar indicator in the first form.

Based on embodiments of this application, when determining that the AI service has the content that needs to be recommended to the user, the electronic device changes the entry indicator from the first form to the second form, to remind the user that there is recommended content currently.

With reference to the first aspect, in some implementations of the first aspect, the second display interface includes a display control of recommended content.

For example, the display control may be a display widget, a display box, or the like.

Based on embodiments of this application, the second display interface may include a display widget or a display box of the recommended content, so that the user can directly access a corresponding display interface through the display widget or the display box, without using a corresponding application. This can improve efficiency of accessing the display interface by the user.

With reference to the first aspect, in some implementations of the first aspect, the method further includes: in response to an operation of dragging target content in the first display interface to the entry indicator, displaying the entry indicator as an input control, and displaying the target content in the input control; and displaying a third display interface, where the third display interface includes a display control that uses the target content as a first task instruction and a display control that is used by the electronic device to execute the first task instruction by using the AI service.

For example, the target content may be text, a picture, a table, or the like. The input control may be an input box or the like.

Based on embodiments of this application, the user may drag, to the input control formed at the entry indicator, content such as text or a picture that the user expects to query in a display interface. The electronic device may perform a corresponding operation based on the corresponding content, and display an execution result. This can improve convenience of performing query by the user by using the AI service.

With reference to the first aspect, in some implementations of the first aspect, the method further includes: displaying a fourth display interface in response to an operation of inputting a second task instruction, where the fourth display interface includes a display control of the second task instruction and a display control for executing the second task instruction; and collapsing the fourth display interface in response to a second operation of the user in the fourth display interface.

Based on embodiments of this application, the electronic device may collapse the display interface of the AI service based on an operation of the user.

With reference to the first aspect, in some implementations of the first aspect, collapsing the fourth display interface includes: if the second task instruction is not completely executed, collapsing the fourth display interface into a collapsed display control having a task incomplete indicator, where the collapsed display control is located in a status bar of the electronic device or in the first display interface.

Based on embodiments of this application, when the second task instruction is not completely executed, the electronic device may collapse the fourth display interface into the collapsed display control having the task incomplete indicator, so that after the fourth display interface is collapsed, the electronic device can still remind the user that there is a task that is being executed.

With reference to the first aspect, in some implementations of the first aspect, the method further includes: displaying a task completed indicator in the collapsed display control after the second task instruction is completely executed; and displaying the fourth display interface in response to a third operation on the collapsed display control.

Based on embodiments of this application, after the second task instruction is completely executed, the task completed indicator may be displayed in the collapsed display control, so that the electronic device can remind the user that the current task has been completely executed.

With reference to the first aspect, in some implementations of the first aspect, the fourth display interface is collapsed into the entry indicator, and the method further includes: displaying a fifth display interface in response to a fourth operation on the entry indicator, where the fifth display interface includes a display control that is executing the second task instruction.

Based on embodiments of this application, the fourth display interface is collapsed into the entry indicator. When the user performs the fourth operation (for example, a tap) on the entry indicator, the fifth display interface may be displayed. The fifth display interface may include the display control for executing the second task instruction by the AI service, so that the user can invoke the display interface of the AI service again through a simple operation after the display interface is collapsed, and can obtain related information of the task that is being executed.

With reference to the first aspect, in some implementations of the first aspect, the method further includes: displaying a sixth display interface in response to an operation of inputting a third task instruction, where the sixth display interface includes a display control of the third task instruction, a display control for executing the third task instruction, and an indicator indicating that the second task instruction is being executed.

Based on embodiments of this application, when detecting the third task instruction, the electronic device may display the display, in the sixth display interface, control related to the third task instruction, and display the indicator indicating that the second task instruction is not completely executed, so that the electronic device can remind the user that there is still a task that is not completely executed.

With reference to the first aspect, in some implementations of the first aspect, the entry indicator is a bar indicator that has the preset length and that is located at the bottom or the side of the first display interface.

In some other examples, the entry indicator may alternatively be a rounded-corner indicator or the like.

With reference to the first aspect, in some implementations of the first aspect, a location of the entry indicator in the first display interface is adjustable.

Based on embodiments of this application, the location of the entry indicator may be adjusted based on an operation of the user, so that flexibility of the entry indicator can be improved.

With reference to the first aspect, in some implementations of the first aspect, the entry indicator is an AI status bar, the AI status bar is located at the bottom of the first display interface, and the method further includes: hiding the AI status bar in response to an operation of sliding downward on the AI status bar by the user; and re-displaying the AI status bar at the bottom of the first display interface in response to an operation of sliding upward at the bottom of the first display interface by the user.

Based on embodiments of this application, the entry indicator may be the AI status bar, and the electronic device may hide the AI status bar or invoke the AI status bar based on an operation of the user, so that display flexibility of the AI status bar can be improved.

With reference to the first aspect, in some implementations of the first aspect, the first display interface is a home screen of the electronic device, the entry indicator is an AI icon, and the method further includes: displaying a seventh display interface of an application in response to an operation of starting the application, where the seventh display interface includes the AI icon, and a location of the AI icon in the seventh display interface is adjustable.

Based on embodiments of this application, the entry indicator may be the AI icon, and the AI icon is also displayed in the display interface of the application, and the user can conveniently adjust a location of the AI icon.

With reference to the first aspect, in some implementations of the first aspect, the seventh display interface further includes a target display control of content recommended by the AI service, and the method further includes: displaying an eighth display interface in response to an operation of tapping the target display control by the user, where the eighth display interface includes content related to the content in the target display control; or displaying the seventh display interface and an eighth display interface in split-screen mode in response to an operation of tapping the target display control by the user, where the eighth display interface includes content related to the content in the target display control.

Based on embodiments of this application, when the seventh display interface includes the target display control of the content recommended by the AI service, when the user taps the target display control, the electronic device may display corresponding content; or the electronic device may further display the seventh display interface and the content recommended by the AI service in split-screen mode.

With reference to the first aspect, in some implementations of the first aspect, the second display interface overlays a part of the first display interface.

For example, the second display interface may be stacked over the first display interface and overlay a part of the first display interface. In this way, the user may continue to browse content of the first display interface while invoking the AI service.

In some other examples, the second display interface may be further displayed in full screen.

With reference to the first aspect, in some implementations of the first aspect, the method further includes: closing the second display interface in response to a fifth operation on the second display interface.

Based on embodiments of this application, the user may further close the second display interface by performing a simple operation.

With reference to the first aspect, in some implementations of the first aspect, the second display interface includes a plurality of instruction input icons, and the instruction input icon is used to trigger an instruction input.

For example, the instruction input icon may include a text input icon, a voice input icon, a visual input icon, and the like.

According to a second aspect, an electronic device is provided, including one or more processors and one or more memories, where the one or more memories store one or more programs, and when the one or more programs are executed by the one or more processors, the display method according to any one of the first aspect and the possible implementations of the first aspect is performed.

According to a third aspect, a display apparatus is provided, including a module configured to implement the display method according to any one of the first aspect and the possible implementations of the first aspect.

According to a fourth aspect, a chip is provided. The chip includes a processor and a communication interface, the communication interface is configured to: receive a signal, and transmit the signal to the processor, and the processor processes the signal, so that the display method according to any one of the first aspect and the possible implementations of the first aspect is performed.

According to a fifth aspect, a readable storage medium is provided. The readable storage medium stores instructions. When the instructions are run on an electronic device, the display method according to any one of the first aspect and the possible implementations of the first aspect is performed.

According to a sixth aspect, a program product is provided. The program product includes program code, and when the program code is run on an electronic device, the display method according to any one of the first aspect and the possible implementations of the first aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3(a) to FIG. 3(c) are diagrams of a group of GUIs according to an embodiment of this application;
FIG. 4(a) to FIG. 4(d) are diagrams of another group of GUIs according to an embodiment of this application;
FIG. 5(a) to FIG. 5(c) are diagrams of another group of GUIs according to an embodiment of this application;
FIG. 6(a) to FIG. 6(c) are diagrams of another group of GUIs according to an embodiment of this application;
FIG. 7(a) to FIG. 7(d) are diagrams of another group of GUIs according to an embodiment of this application;
FIG. 8(a) to FIG. 8(c) are diagrams of another group of GUIs according to an embodiment of this application;
FIG. 9(a) to FIG. 9(c) are diagrams of another group of GUIs according to an embodiment of this application;
FIG. 10(a) to FIG. 10(c) are diagrams of another group of GUIs according to an embodiment of this application;
FIG. 11(a) to FIG. 11(e) are diagrams of another group of GUIs according to an embodiment of this application;
FIG. 12(a) to FIG. 12(e) are diagrams of another group of GUIs according to an embodiment of this application;
FIG. 13(a) to FIG. 13(g) are diagrams of another group of GUIs according to an embodiment of this application;
FIG. 14(a) to FIG. 14(e) are diagrams of another group of GUIs according to an embodiment of this application;
FIG. 15(a) to FIG. 15(d) are diagrams of another group of GUIs according to an embodiment of this application;
FIG. 16(a) to FIG. 16(c) are diagrams of another group of GUIs according to an embodiment of this application;
FIG. 17 is a diagram of another group of GUIs according to an embodiment of this application;
FIG. 18(a) to FIG. 18(d) are diagrams of another group of GUIs according to an embodiment of this application;
FIG. 19(a) to FIG. 19(d) are diagrams of another group of GUIs according to an embodiment of this application;
FIG. 20(a) and FIG. 20(b) are diagrams of another group of GUIs according to an embodiment of this application;
FIG. 21(a) and FIG. 21(b) are diagrams of another group of GUIs according to an embodiment of this application;
FIG. 22(a) to FIG. 22(c) are diagrams of another group of GUIs according to an embodiment of this application;
FIG. 23(a) to FIG. 23(f) are diagrams of another group of GUIs according to an embodiment of this application;
FIG. 24(a) to FIG. 24(c) are diagrams of another group of GUIs according to an embodiment of this application;
FIG. 25(a) and FIG. 25(b) are diagrams of another group of GUIs according to an embodiment of this application;
FIG. 26(a) to FIG. 26(g) are diagrams of another group of GUIs according to an embodiment of this application;
FIG. 27(a) to FIG. 27(f) are diagrams of another group of GUIs according to an embodiment of this application;
FIG. 28 is a schematic flowchart of a display method according to an embodiment of this application; and
FIG. 29 is a block diagram of an electronic device according to an embodiment of this application.

### DESCRIPTION OF EMBODIMENTS

The following describes technical solutions of this application with reference to the accompanying drawings.

A display method in embodiments of this application may be applied to an electronic device like a smartphone, a foldable mobile phone, a tablet computer, a laptop computer, a personal computer (personal computer, PC), an ultra-mobile personal computer (ultra-mobile personal computer, UMPC), a netbook, a vehicle-mounted device, or an internet of things (internet of things, IoT) device.

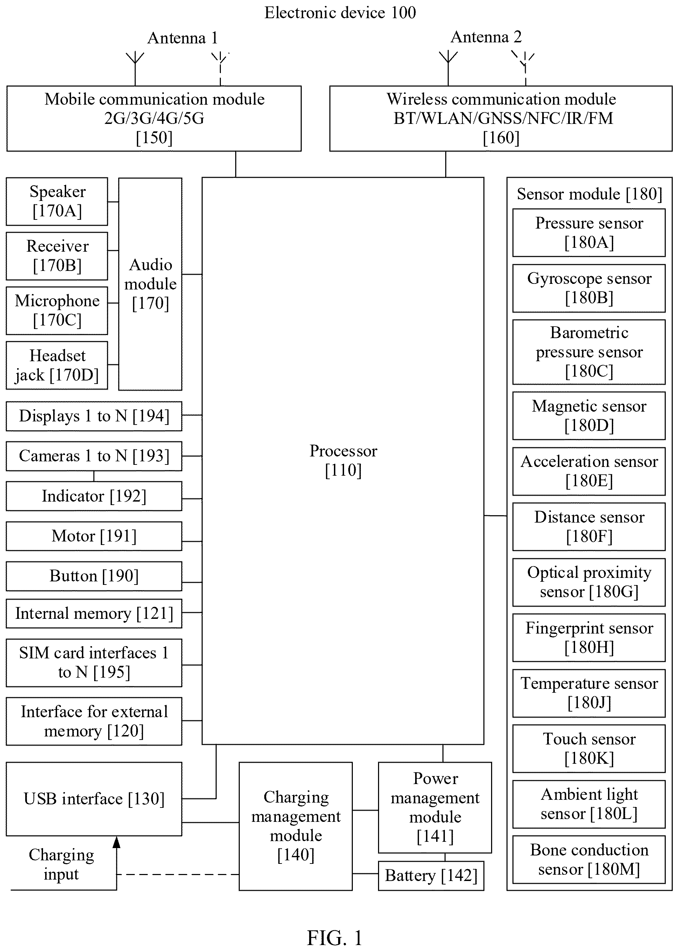

FIG. 1 is a diagram of a structure of an electronic device 100. The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the electronic device 100. The controller may generate an operation control signal based on instruction operation code and a time sequence signal, to complete control of instruction fetching and instruction execution.

A memory may be further disposed in the processor 110, and is configured to store instructions and data.

In some embodiments, the processor 110 may include one or more interfaces. The interface may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The charging management module 140 is configured to receive a charging input from the charger.

The power management module 141 is configured to connect the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP may be configured to process data fed back by the camera 193. The camera 193 is configured to capture a static image or a video.

The digital signal processor is configured to process a digital signal, and may process another digital signal in addition to the digital image signal.

The video codec is configured to: compress or decompress a digital video. The electronic device 100 may support one or more video codecs.

The interface for external memory 120 may be configured to connect to an external memory card, for example, a micro SD card, to extend a storage capability of the electronic device 100.

The internal memory 121 may be configured to store computer-executable program code, and the executable program code includes instructions. The processor 110 runs the instructions stored in the internal memory 121 to perform various function applications of the electronic device 100 and data processing.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a moving posture of the electronic device 100.

The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect accelerations in various directions (usually on three axes) of the electronic device 100.

The distance sensor 180F is configured to measure a distance.

The fingerprint sensor 180H is configured to collect a fingerprint.

The touch sensor 180K is also referred to as a touch panel. The touch sensor 180K may be disposed on the display 194, and the touch sensor 180K and the display 194 constitute a touchscreen, which is also referred to as a "touch screen".

The bone conduction sensor 180M may obtain a vibration signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In embodiments of this application, an operating system with a layered architecture is used as an example to describe the software structure of the electronic device 100.

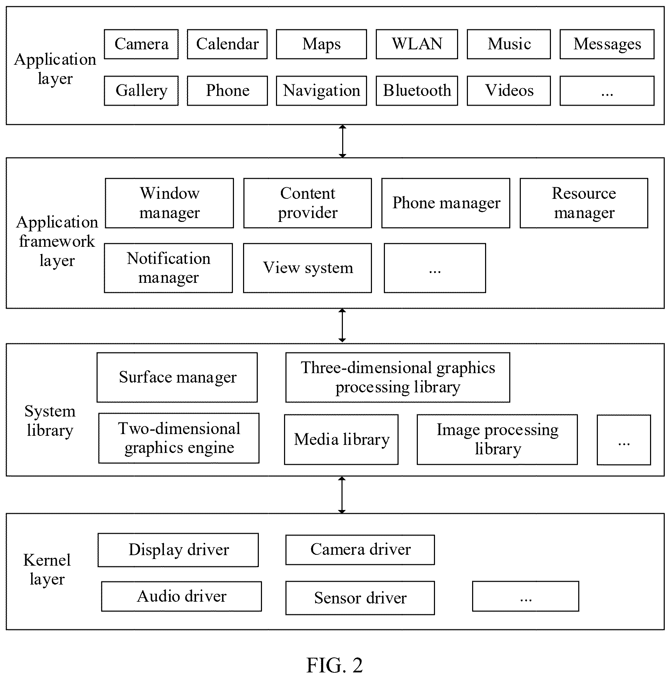

FIG. 2 is a block diagram of a software structure of the electronic device 100 according to an embodiment of this application. In the layered architecture, software is divided into several layers, and each layer has a clear role and task. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, Messages, and Wallet.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, hang-up, or the like).

The resource manager provides, for an application, various resources such as a localized character string, an icon, an image, a layout file, and a video file.

The notification manager enables an application to display notification information in a status bar, and may be configured to transmit a notification-type message. The displayed information may automatically disappear after a short pause without user interaction.

The core library includes two parts: One part is a performance function that a java language needs to invoke, and the other part is a core library.

The application layer and the application framework layer run on the virtual machine. The virtual machine executes Java files of the application layer and the application framework layer as binary files. The virtual machine is configured to perform functions such as object life cycle management, stack management, thread management, security and exception management, and garbage collection.

The system library may include a plurality of function modules, for example, a surface manager (surface manager), a media library (media library), a three-dimensional graphics processing library (for example, an OpenGL ES), and a two-dimensional graphics engine (for example, an SGL).

The surface manager is configured to: manage a display subsystem and provide fusion of two-dimensional and three-dimensional layers for a plurality of applications.

The media library supports playback and recording of a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

Currently, with rapid development of artificial intelligence (artificial intelligence, AI) technologies, users often need to use some AI services on electronic devices such as mobile phones and tablet computers for convenience. However, when the user uses the AI service, for example, when the user queries some information by using a voice assistant on the mobile phone, an interaction process is complex.

In view of this, this application provides a display method and an electronic device. According to technical solutions, a user can use an AI service on the electronic device more conveniently.

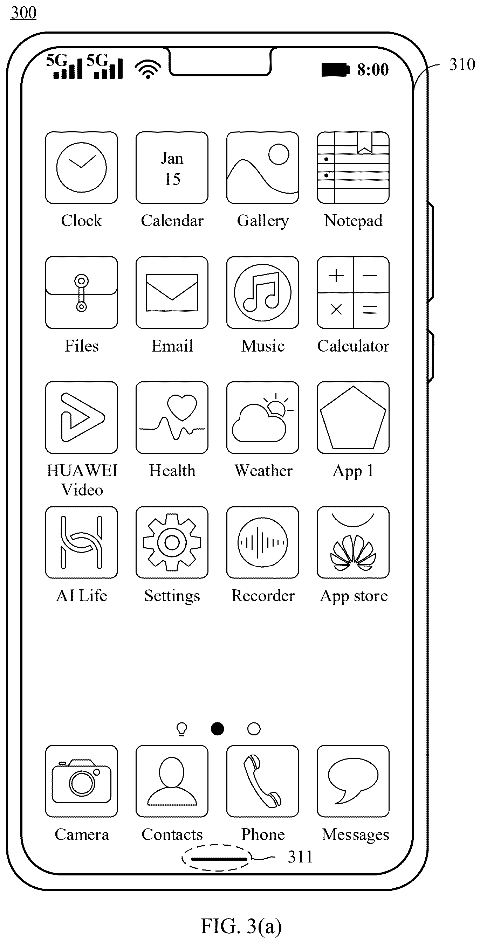

The following describes the technical solutions of this application with reference to graphical user interfaces (graphical user interfaces, GUIs) in FIG. 3(a) to FIG. 27(f).

FIG. 3(a) to FIG. 3(c) are diagrams of a group of GUIs according to an embodiment of this application. FIG. 3(a) to FIG. 3(c) show a process in which a user invokes an AI service on an electronic device 300.

For example, refer to FIG. 3(a). A GUI is a display interface 310 of the electronic device 300. The display interface 310 may be a display home screen of the electronic device 300. The display interface 310 may include a plurality of applications (applications, apps) in the electronic device and an entry indicator 311 of the AI service. The entry indicator 311 may be located at a bottom of the display interface 310.

The entry indicator 311 may be an AI icon, an AI status bar, a bar indicator with a preset length or a rounded-corner indicator, or the like.

It should be understood that the entry indicator 311 may also be displayed at a bottom of a lock screen when the electronic device 300 is in a screen-locked state.

In some examples, the entry indicator 311 may be a horizontal small bar shown in FIG. 3(a), and the small bar may be gray, color, or the like. In some other examples, the entry indicator 311 may alternatively be an icon or the like. A specific form of the entry indicator 311 is not limited in embodiments of this application.

A specific location of the entry indicator 311 is not limited in this application. For example, the entry indicator 311 may alternatively be located on a side of the display interface 310, and may be displayed as a vertical small bar.

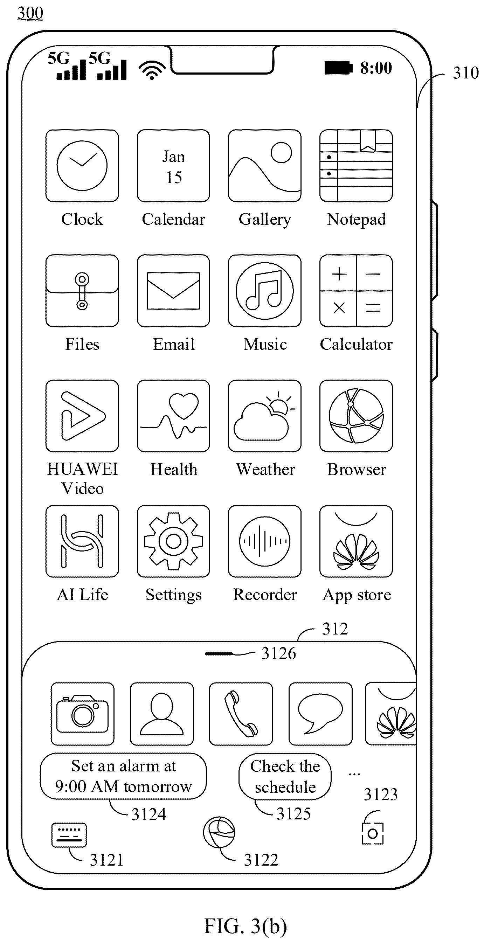

After detecting a first operation of the user on the entry indicator 311, the electronic device may display a GUI shown in FIG. 3(b).

For example, the first operation may be an operation of tapping the entry indicator 311, may be an operation of double-tapping or touching and holding the entry indicator 311, or may be an operation of sliding on the entry indicator 311. This is not limited in embodiments of this application.

Refer to FIG. 3(b). The electronic device 300 may display a display interface 312 of the AI service. The display interface 312 may be stacked over the display interface 310. The display interface 312 may include icons of a plurality of applications, a plurality of display boxes 3124, 3125, or the like of recommended content, a collapse button 3126, a text input icon 3121, a voice input icon 3122, and a visual input icon 3123.

It should be understood that the display interface of the AI service may also be referred to as a display panel. Alternatively, when the display interface overlays a part of a display, the display interface may also be referred to as a semi-modal display panel, a display widget, or the like. A specific name of the display interface is not limited in embodiments of this application.

It should be understood that a style and a form of the display box are not limited in this application provided that the display box can display corresponding content. For example, the display box may also be referred to as a display control, a display area, a display component, a display widget, a display button, a display capsule, a rounded-corner display area, a rectangular display area, or the like. In the following, the display box may be referred to as different names in specific scenarios, but this should not constitute any limitation on this application.

It should be understood that the display interface 312 may further include other content, for example, a display widget with a link.

In some other examples, the display interface 312 may further occupy the entire display interface of the electronic device 300. This is not limited in embodiments of this application.

The user may tap the collapse button 3126 to collapse the display interface 312. In this case, the electronic device may display the GUI shown in FIG. 3(a). In another example, the user may further collapse the display interface 312 by performing a slide operation on the display interface. A specific operation of collapsing the display interface 312 is not limited in embodiments of this application.

The user may tap the text input icon 3121 to jump to a text input interface to input text. The user may tap the voice input icon 3122 to input a voice instruction. The user may alternatively tap the visual input icon 3123 to invoke a camera to take a photo, recognize an object, or the like.

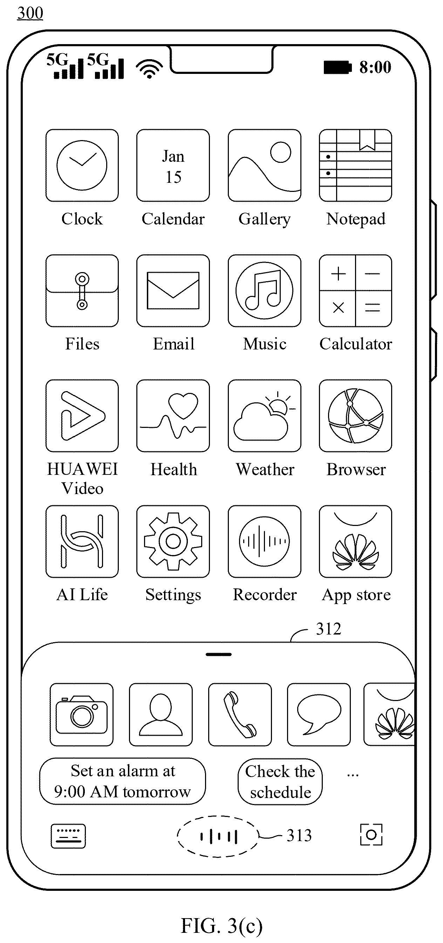

After detecting an operation of tapping the voice input icon 3122 by the user, the electronic device 300 may display a GUI shown in FIG. 3(c).

In some other examples, after detecting an operation of touching and holding or double-tapping the entry indicator 311 in FIG. 3(a) by the user, the electronic device may also display the GUI shown in FIG. 3(c). In this way, efficiency of inputting a voice instruction by the user can be improved.

Refer to FIG. 3(c). The voice input icon 3122 in the display interface 312 changes to a voice recognition state icon 313. In this case, the user may directly input a voice instruction. For example, the user inputs some questions or query tasks through a voice.

Based on this embodiment of this application, the entry indicator of the AI service may be directly displayed in the display interface of the electronic device. The user only needs to tap or touch and hold the entry indicator to invoke the AI service for interaction. According to the technical solution, the user can use the AI service more conveniently.

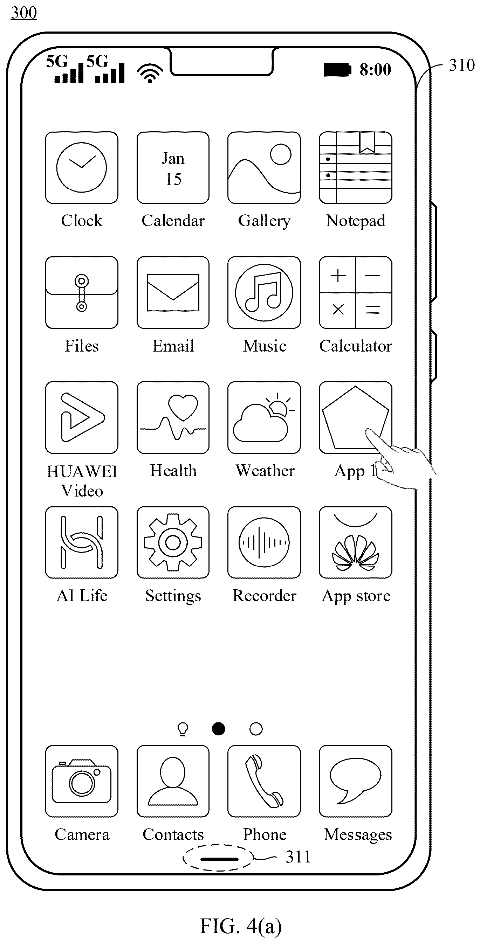

FIG. 4(a) to FIG. 4(d) are diagrams of another group of GUIs according to an embodiment of this application. FIG. 4(a) to FIG. 4(d) show a process in which a user invokes an AI service on an electronic device.

It should be understood that for FIG. 4(a), refer to the related descriptions of FIG. 3(a). For brevity, details are not described herein again.

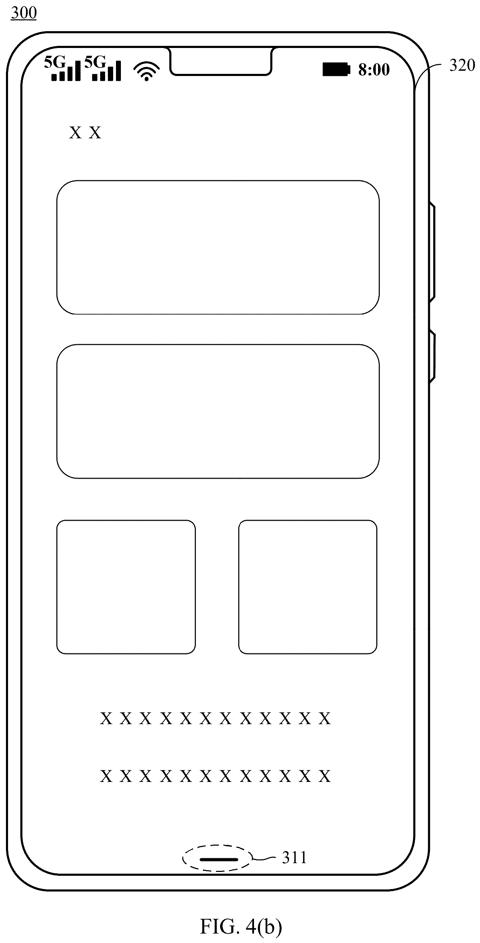

After detecting an operation of tapping an icon of an app 1 by the user, an electronic device 300 may display a GUI shown in FIG. 4(b).

Refer to FIG. 4(b). The GUI may be a display interface 320 of the app 1 in the electronic device. For example, the display interface 320 may include a picture, text, and the like. A bottom of the display interface 320 may also include an entry indicator 311 of the AI service.

For the entry indicator 311, refer to the foregoing related descriptions.

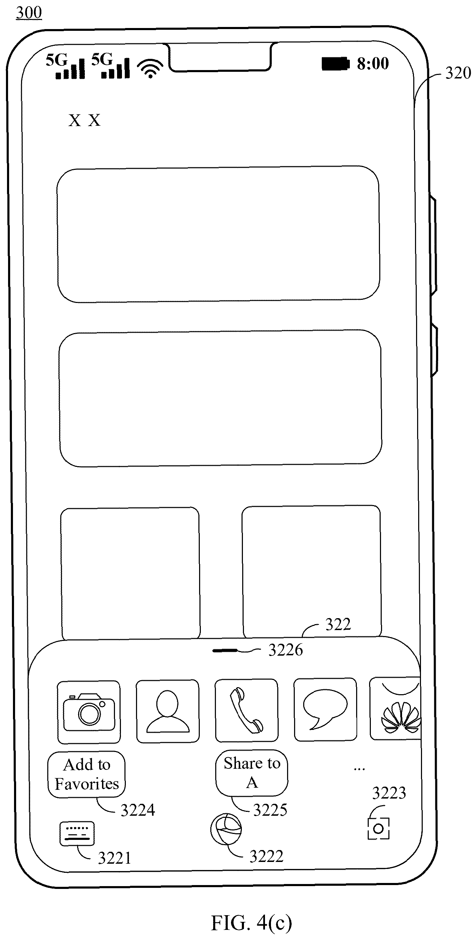

After detecting a first operation of the user on the entry indicator 311, the electronic device 300 may display a GUI shown in FIG. 4(c). For the first operation, refer to the foregoing descriptions.

Refer to FIG. 4(c). The electronic device 300 may display a display interface 322 of the AI service. The display interface 322 may be stacked over the display interface 320. The display interface 322 may include icons of a plurality of applications, a plurality of display boxes 3224, 3225, or the like of recommended content, a collapse button 3226, a text input icon 3221, a voice input icon 3222, and a visual input icon 3223.

For corresponding functions of various function buttons and icons included in the display interface 322, refer to the foregoing related descriptions.

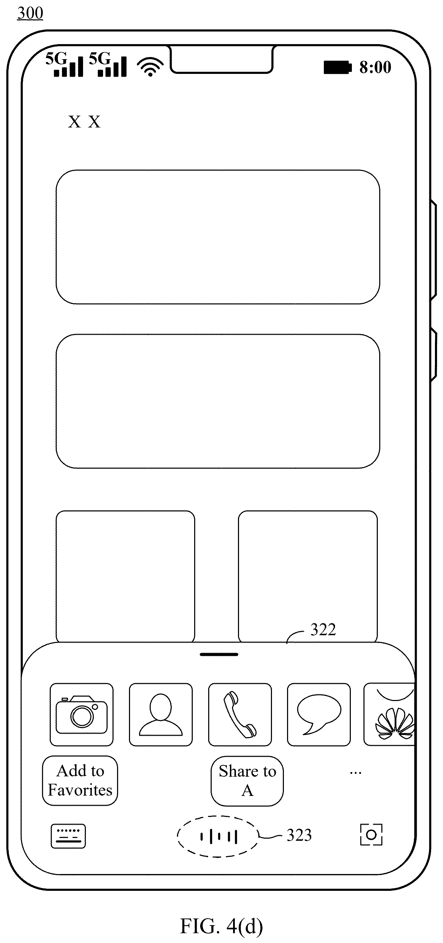

After detecting an operation of tapping the voice input icon 3222 by the user, the electronic device 300 may display a GUI shown in FIG. 4(d).

Alternatively, after detecting an operation of touching and holding the entry indicator 311 in FIG. 4(b) by the user, the electronic device may also display the GUI shown in FIG. 3(d). In this way, efficiency of inputting a voice instruction by the user can be improved.

Refer to FIG. 4(d). The voice input icon 3222 in the display interface 322 changes to a voice recognition state icon 323. In this case, the user may directly input a voice instruction. For example, the user inputs some questions through a voice.

Based on this embodiment of this application, the entry indicator of the AI service may be directly displayed in the display interface of the electronic device. When the electronic device displays a display interface of an application, the entry indicator is still displayed in the display interface of the application. The user only needs to tap or touch and hold the entry indicator to invoke the AI service for interaction. According to the technical solution, the user can use the AI service more conveniently.

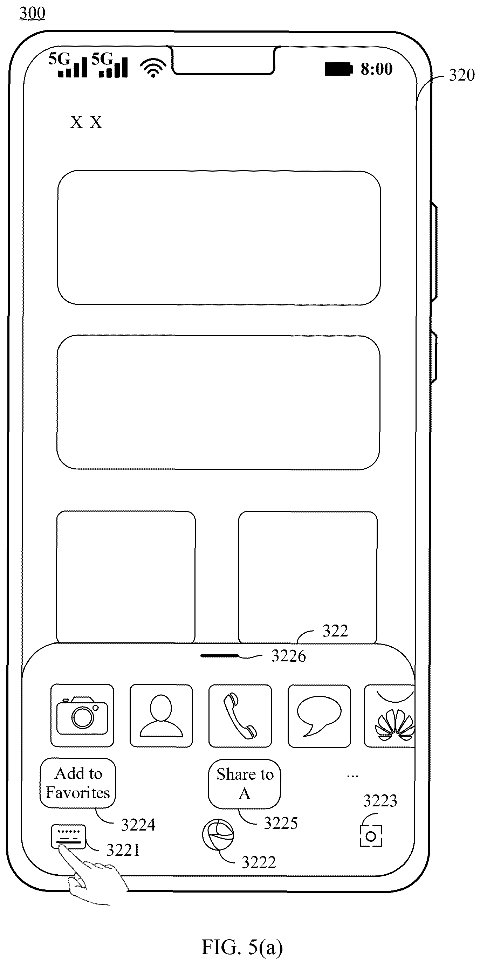

The following describes a process in which a user inputs an instruction by using a function button in an interface of an AI service with reference to FIG. 5(a) to FIG. 7(d).

FIG. 5(a) to FIG. 5(c) are diagrams of another group of GUIs according to an embodiment of this application. FIG. 5(a) to FIG. 5(c) show a process in which a user inputs text on an electronic device 300.

It should be understood that for FIG. 5(a), refer to the related descriptions of FIG. 4(c). For brevity, details are not described herein again.

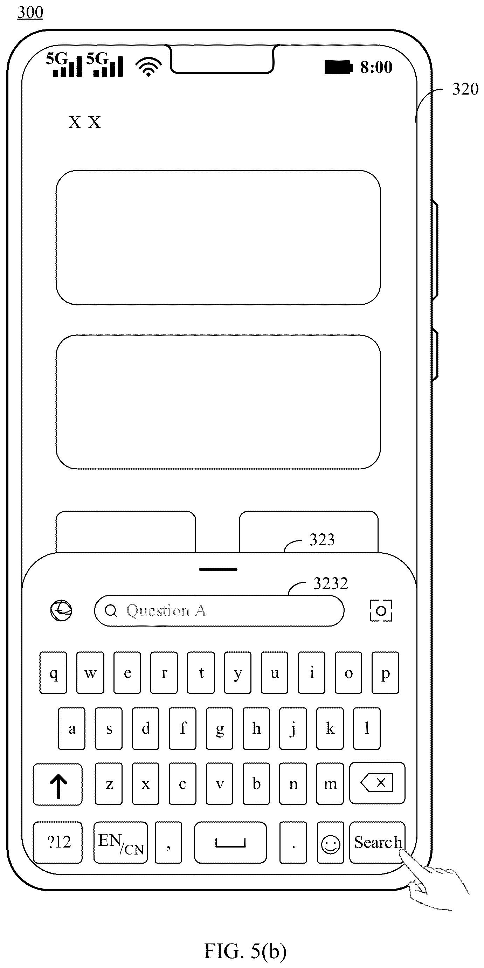

After detecting an operation of tapping a text input icon 3221 by the user, the electronic device 300 may display a GUI shown in FIG. 5(b).

Refer to FIG. 5(b). A text input display interface 323 may be displayed in a display interface 320. The display interface 323 may be stacked over the display interface 320. The display interface 323 may include an input method display area, a text input box 3232, a voice input icon, and a visual input icon.

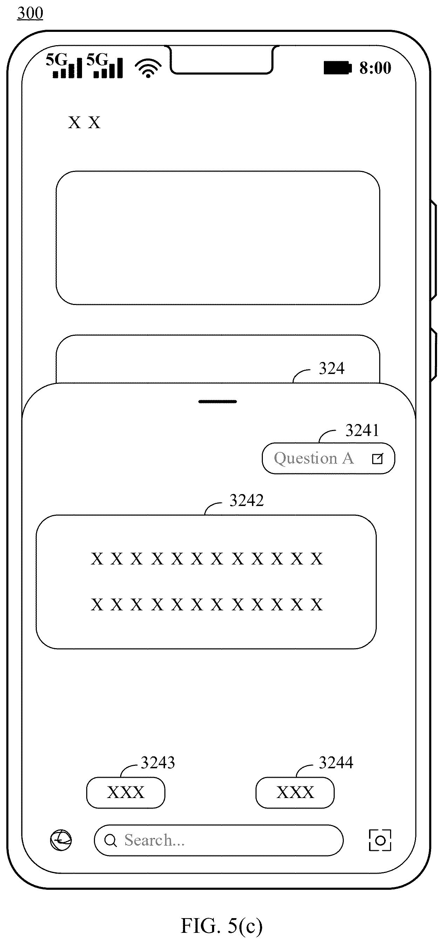

The user may input, by using an input method, content that needs to be queried. For example, the user inputs "Question A" and taps a search button, and the electronic device may display FIG. 5(c).

It should be understood that the text input box may further include the search button.

Refer to FIG. 5(c). The electronic device 300 may display an interaction display interface 324. The display interface 324 may be stacked over the display interface 320. The display interface 324 may include a display box 3241 of the question A, a display box 3242 of a reply of the AI service to the question A, and display boxes 3243 and 3244 of other recommended content. The display interface 324 may further include the text input box, the voice input icon, and the visual input icon. The user may further interact with the AI in a voice or visual form in the interaction display widget.

The display box 3241 of the question A may further include an editing icon. The user may further edit the question A by using the editing icon. It should be understood that the display box 3241 may also be a dialog box, a dialog display box, or the like.

Based on this embodiment of this application, the user may input an instruction in a text form, to conveniently interact with the AI service.

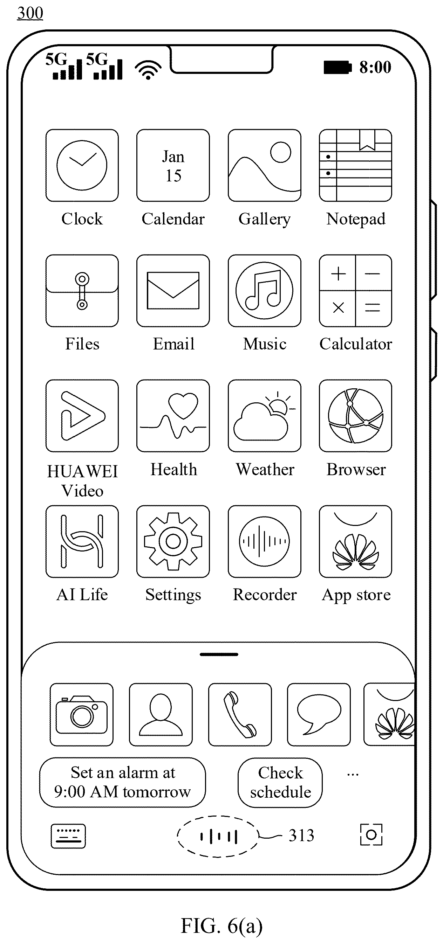

FIG. 6(a) to FIG. 6(c) are diagrams of another group of GUIs according to an embodiment of this application. FIG. 6(a) to FIG. 6(c) show a process in which a user inputs a voice on an electronic device 300.

Refer to FIG. 6(a). The electronic device 300 may display a display interface 322 that is used to trigger recognition of a state of a voice input of the user. The display interface 322 may be stacked over a display interface 310.

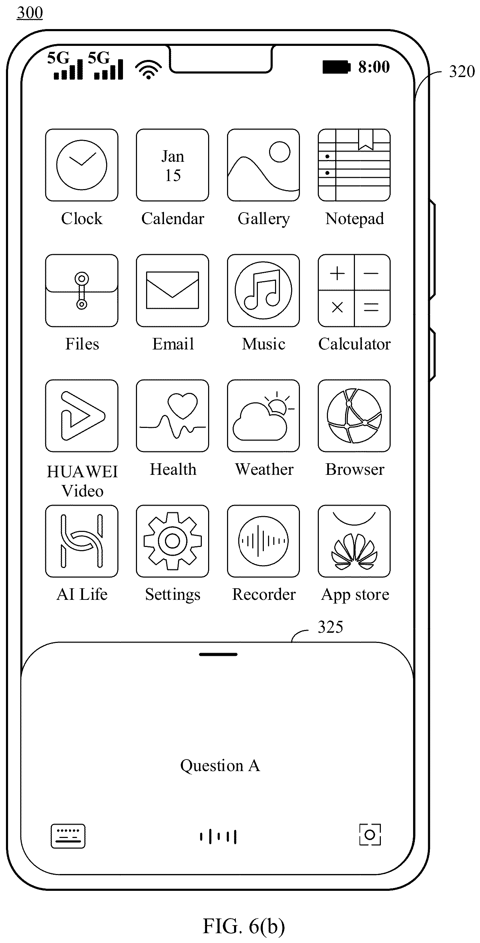

After detecting an operation of inputting "Question A" by the user through a voice, the electronic device may display a GUI shown in FIG. 6(b).

Refer to FIG. 6(b). The electronic device 300 may display a voice input display interface 325. The display widget may display a recognized voice input "Question A" of the user. The display interface 325 may be stacked over the display interface 310.

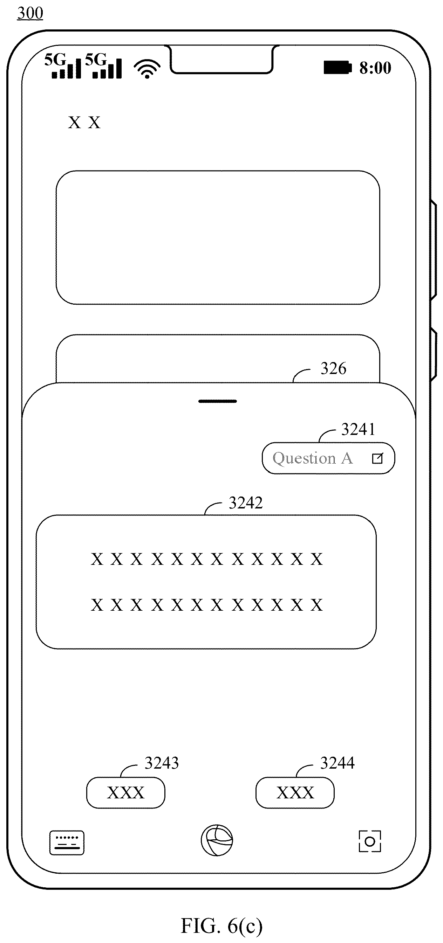

After detecting that the voice input of the user is completed, the electronic device may display a GUI shown in FIG. 6(c).

Refer to FIG. 6(c). The electronic device may display an interaction display interface 326. The display interface 326 may include a display box 3241 of the question A, a display box 3242 of a reply of an AI service to the question A, and display boxes 3243 and 3244 of other recommended content. The display interface 324 may further include a text input icon, a voice input icon, and a visual input icon. The user may further interact with the AI service in a text or visual form in the interaction display widget.

Based on this embodiment of this application, the user may input an instruction in a voice form, to conveniently interact with the AI service.

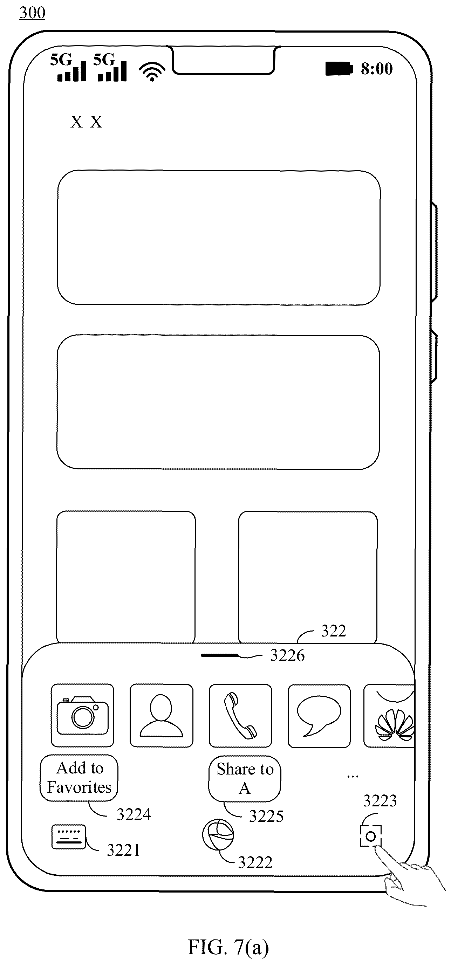

FIG. 7(a) to FIG. 7(d) are diagrams of another group of GUIs according to an embodiment of this application. FIG. 7(a) to FIG. 7(d) show a process in which a user performs a visual input on an electronic device 300.

It should be understood that for FIG. 7(a), refer to the related descriptions of FIG. 4(c). For brevity, details are not described herein again.

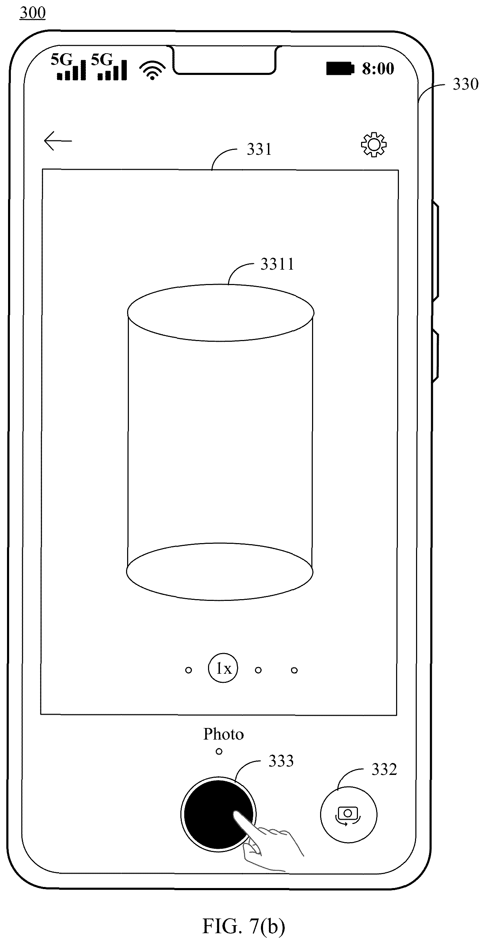

After detecting an operation of tapping a visual input icon 3223 by the user, the electronic device 300 may display related descriptions of FIG. 7(b).

Refer to FIG. 7(b). The electronic device 300 may display a viewfinder display interface 330 of a camera. The display interface 330 may include a viewfinder frame 331, a switching button 332 for switching a camera, an image shooting control 333, and the like. The viewfinder frame 331 may include an object 3311.

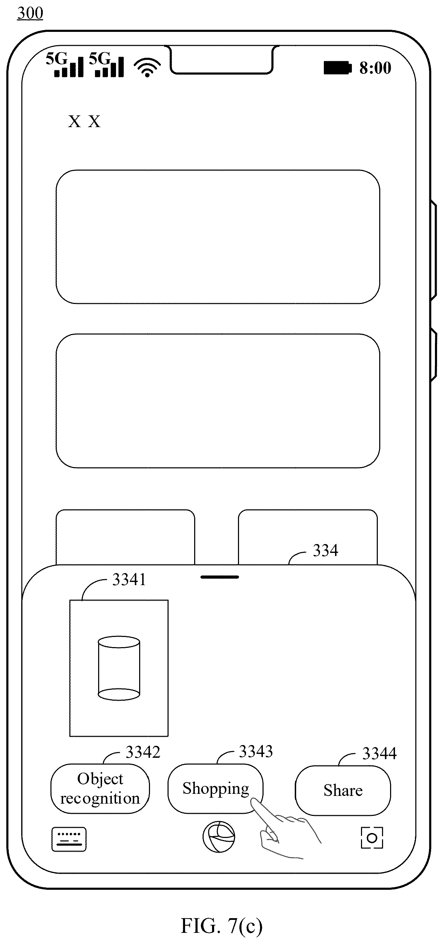

After detecting an operation of tapping image shooting space 33 by the user, the electronic device may display a GUI shown in FIG. 7(c).

Refer to FIG. 7(c). The electronic device 300 may display a visual input display interface 334. The display interface 334 may include a picture 3341 taken by the camera, an object recognition function display box 3342, a shopping function display box 3343, a sharing function display box 3344, a text input icon, a voice input icon, and a visual input icon.

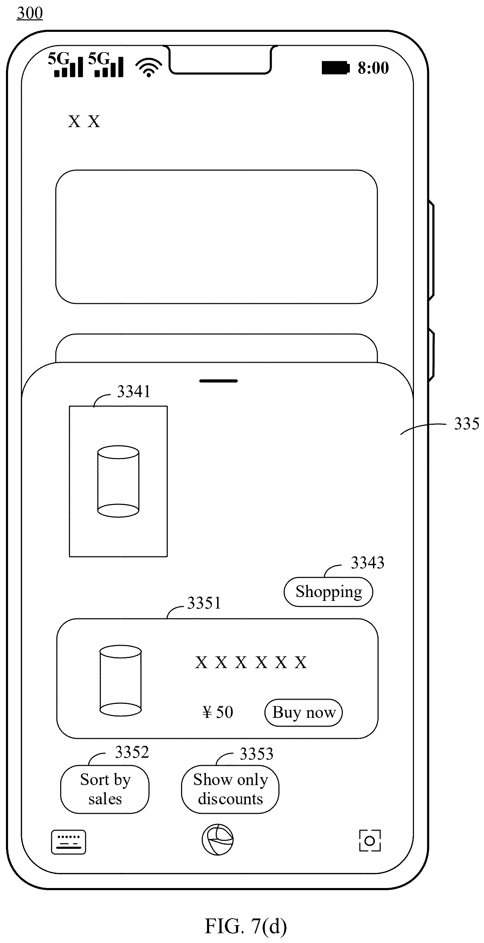

For example, after detecting an operation of tapping the shopping function display box 3343 by the user, the electronic device may display a GUI shown in FIG. 7(d).

Refer to FIG. 7(d). The electronic device may display an interaction display interface 335. In addition to the picture 3341 and the shopping function display box 3343, the display interface 335 may further include a purchase widget 3351 of the object 3311, a display box 3352 of a sales-based sorting function, a display box 3353 of a discounts-only showing function, and the like.

The user may tap a buy now button in the purchase widget 3351, to jump to an object purchase display interface or directly purchase the object. In this way, the user can conveniently purchase the object.

It should be understood that the display box 3352 of the sales-based sorting function and the display box 3353 of the discounts-only showing function are merely examples.

Based on this embodiment of this application, the user may input a taken object in a visual form, to conveniently interact with the AI service.

In some cases, when determining that a confidence level of a service or an operation recommended to the user is high, the electronic device may display the entry indicator of the AI service as a special effect. For example, the entry indicator changes from single-color display to color display, or the entry indicator is displayed in a flowing light effect, or a size of the entry indicator changes. According to the technical solution, the user can be clearly reminded that there is a recommended service or operation currently, so that the user can conveniently view the recommended service or operation.

In some other cases, when determining that a confidence level of a service recommended to the user is high, the electronic device may directly display a display widget or a display box of a recommended service in a current display interface. If the user does not tap the display widget or the display box of the service within preset duration, the display widget or the display box may automatically disappear. According to the technical solution, a related service may be directly recommended to the user, and when the user does not tap a display widget or a display box of the service within preset duration, the display widget or the display box automatically disappears, thereby avoiding causing unnecessary inconvenience to the user.

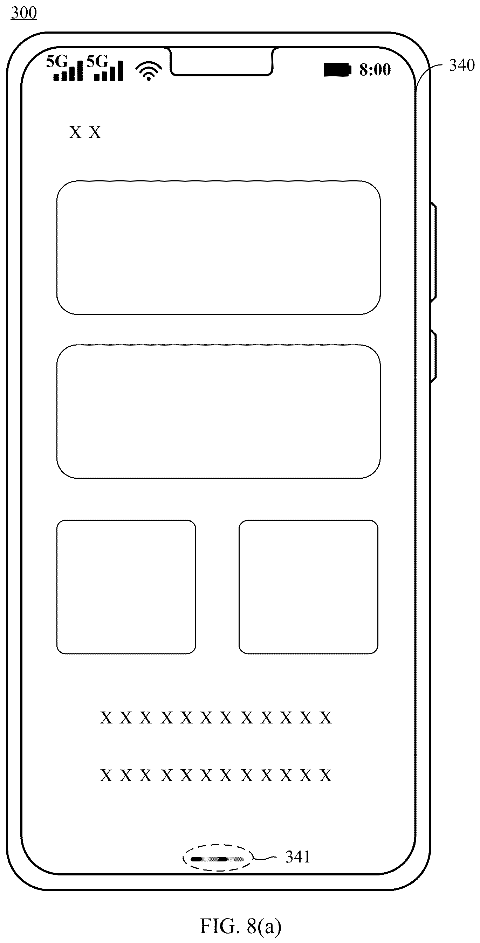

The following describes the technical solution with reference to FIG. 8(a) to FIG. 9(c).

FIG. 8(a) to FIG. 8(c) are diagrams of another group of GUIs according to an embodiment of this application. FIG. 8(a) to FIG. 8(c) show a process in which an entry indicator of an AI service of an electronic device changes and a service is conveniently recommended to a user.

Refer to FIG. 8(a). When the electronic device determines that a confidence level of a recommended service in a display interface 340 is high, for example, there is a purchase password of a commodity in the display interface 340, the electronic device may determine a confidence level of a service for recommending the user to purchase the commodity. When the confidence level is greater than a preset value, the entry indicator of the AI service in the display interface 340 of the electronic device may be changed from a single color in a display interface 320 to color display, and may display a flowing light effect.

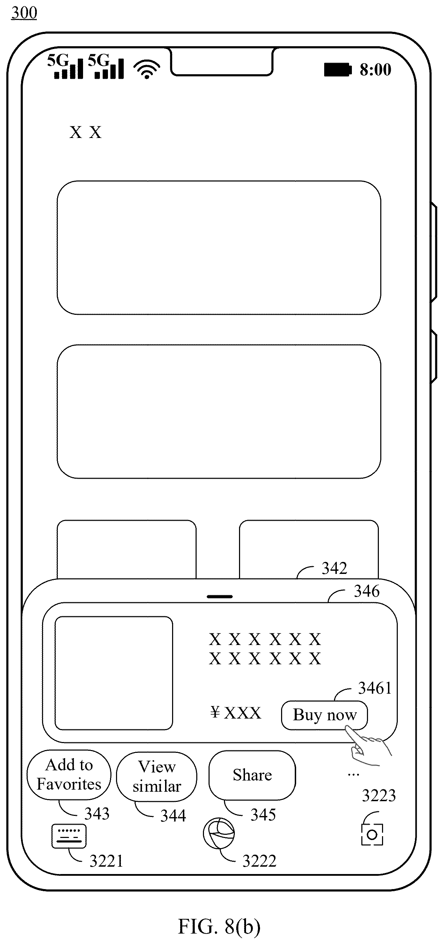

After detecting an operation of tapping an entry indicator 341 by the user, the electronic device may display a GUI shown in FIG. 8(b).

Refer to FIG. 8(b). The electronic device may display a display interface 342 of the AI service. The display interface 342 may include a commodity purchase widget 346, a favorites function display box 343, a view similar function display box 344, a sharing function display box 345, a text input icon 3221, a voice input icon 3222, and a visual input icon 3223. The purchase widget 346 may include a picture, a name, a price, and a buy now function button 3461 of the commodity.

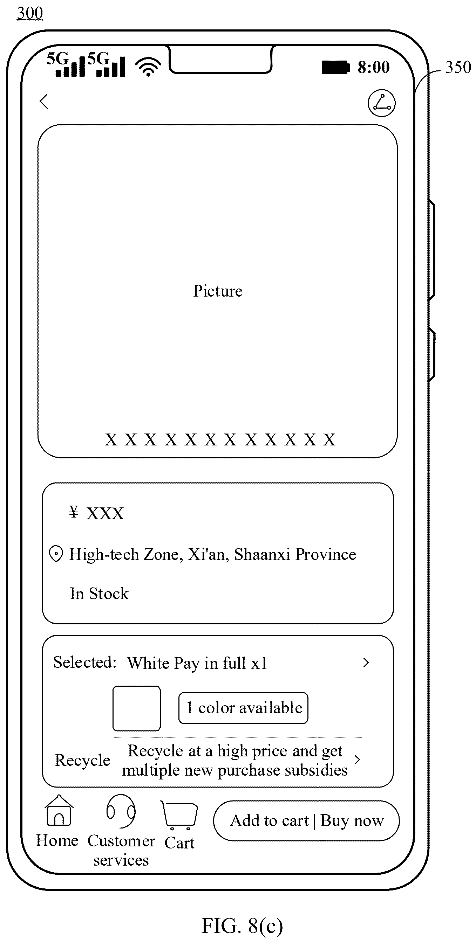

After detecting an operation of tapping the buy now function button 3461 by the user, the electronic device may display a GUI shown in FIG. 8(c).

Refer to FIG. 8(c). The GUI is a purchase display interface 350 of the commodity. The user may purchase the commodity in the display interface 350.

Based on this embodiment of this application, when the electronic device determines that the confidence level of the service or the operation recommended to the user is greater than the preset value, the entry indicator of the AI service may change correspondingly, for example, a color or a size, to better remind the user.

It may be understood that the confidence level of the service or the operation recommended to the user may be automatically determined by a system. For example, when a confidence level of a service or an operation is greater than the preset value, it may be determined that the confidence level of the service or the operation is high, and the service or the operation needs to be directly recommended to the user.

In some other examples, when the electronic device determines that a confidence level of a service is low, the entry indicator may be displayed in a single color. When the user taps the entry indicator, the service may be displayed in a form of a recommendation function display box (which may also be referred to as a recommendation capsule) in the display interface of the AI service, instead of being displayed in a form of the display widget shown in FIG. 8(b).

For example, the electronic device may provide recommended content for the user based on time and an upcoming event. For example, before a conference starts, the electronic device may recommend a conference agenda, a material that needs to be carried, and the like to the user.

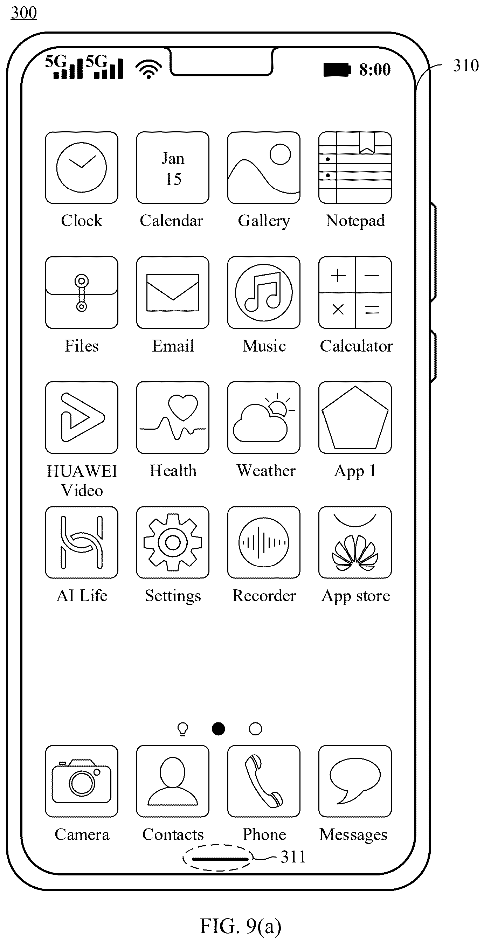

FIG. 9(a) to FIG. 9(c) are diagrams of another group of GUIs according to an embodiment of this application. FIG. 9(a) to FIG. 9(c) show a process in which an electronic device recommends a service or an operation to a user.

Refer to FIG. 9(a). A GUI may be a display interface 310 of an electronic device 300. As described above, when determining that a confidence level of a recommended service or operation is high, the electronic device 300 may change an entry indicator 311 to color flow light display or the like.

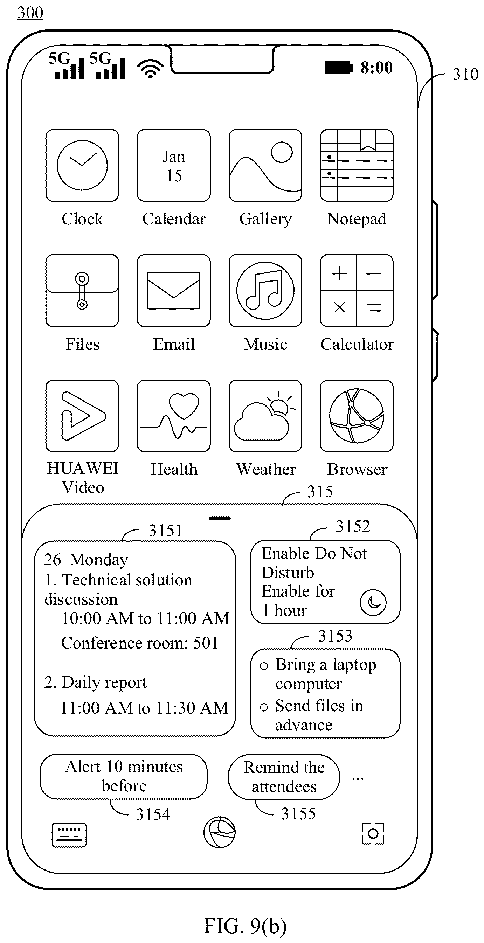

After detecting an operation of tapping the entry indicator 311 by the user, the electronic device 300 may display a GUI shown in FIG. 9(b).

For example, the electronic device may obtain a schedule, a conference arrangement, and the like of the user by using an application such as a calendar or a conference. Refer to FIG. 9(b). The electronic device 300 may display a display interface 315 of an AI service. The display interface 315 may include a display widget 3151 of a conference reminder recommended to the user, a display widget 3152 of a recommended operation of enabling a do-not-disturb mode, a display widget 3153 of a conference material reminder, a function display box 3154 of an advance reminder, and a function display box 3155 of reminding another attendee. The display interface 315 may further include a text input icon, a voice input icon, a visual input icon, and the like.

The display widget 3151 may specifically display information such as a theme, time, and a place of the conference. In this way, the user can obtain comprehensive conference information.

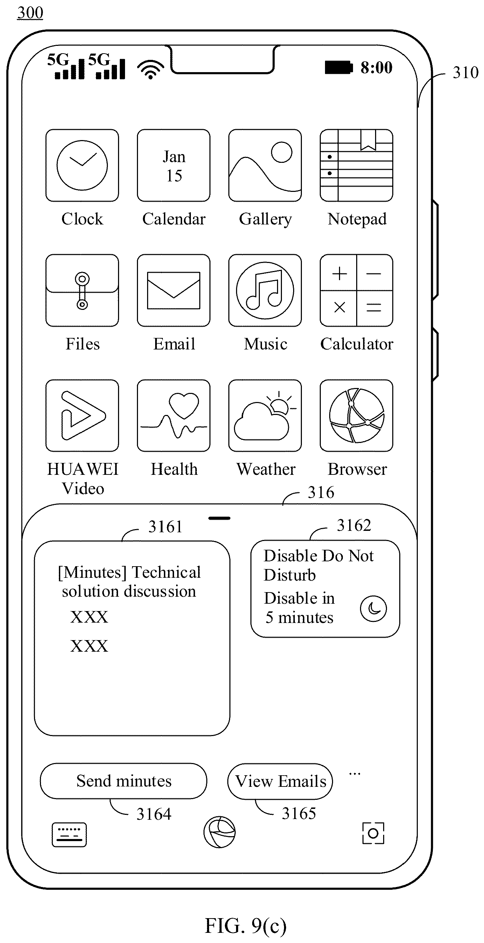

After the conference ends, the electronic device 300 may automatically generate conference minutes. After detecting an operation of tapping the entry indicator by the user again, the electronic device 300 may display a GUI shown in FIG. 9(c).

It should be understood that a specific technical solution of how the electronic device 300 generates the conference minutes is not limited in embodiments of this application.

Refer to FIG. 9(c). The electronic device 300 may display a display interface 316 of the AI service. The display interface 316 may display a display widget 3161 of conference minutes, a display widget 3162 of a recommended operation of disabling the do-not-disturb mode, a function display box 3164 of sending the conference minutes, and a function display box 3165 of viewing emails. The display interface 316 may further include a text input icon, a voice input icon, a visual input icon, and the like.

The user may further tap a button for disabling the do-not-disturb mode in the display widget 3162 to disable the do-not-disturb mode.

Based on this embodiment of this application, the electronic device may recommend related content to the user based on time and an upcoming event. For example, a display widget of a recommended service or operation may be directly displayed in the display interface of the AI service, to help the user view related content and perform a corresponding operation.

In some other examples, the electronic device may further recommend related content to the user based on time and a use habit of the user for the electronic device. For example, if the user often listens to music from 9:00 AM to 10:00 AM, the electronic device may recommend music-related content to the user in this time period. For example, after the user taps the entry indicator of the AI service, a display widget, a display box, or the like of recommended music may appear in the display interface of the AI service. For another example, if the user often exercises from 9:00 PM to 10:00 PM, the electronic device may recommend exercise-related content to the user in this time period. For example, after the user taps the entry indicator of the AI service, a display widget, a display box, or the like related to exercise content may appear in the display interface of the AI service.

In some other cases, when the electronic device is a large-screen electronic device like a tablet computer or a foldable mobile phone, the electronic device may further display in split-screen mode when the user taps the display widget of the recommended service.

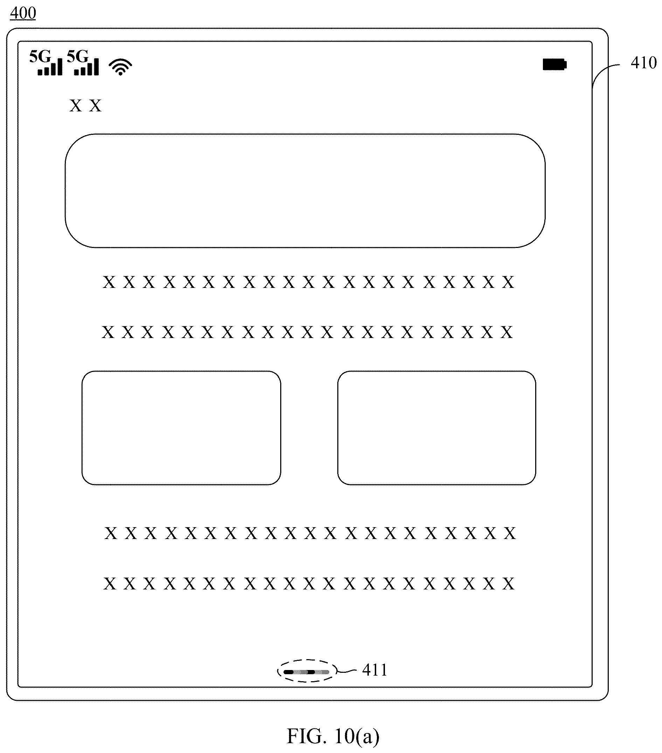

For example, FIG. 10(a) to FIG. 10(c) are diagrams of another group of GUIs according to an embodiment of this application.

Refer to FIG. 10(a). A GUI is a display interface 410 of an electronic device 400. For the display interface 410, refer to the foregoing related descriptions of the display interface 340.

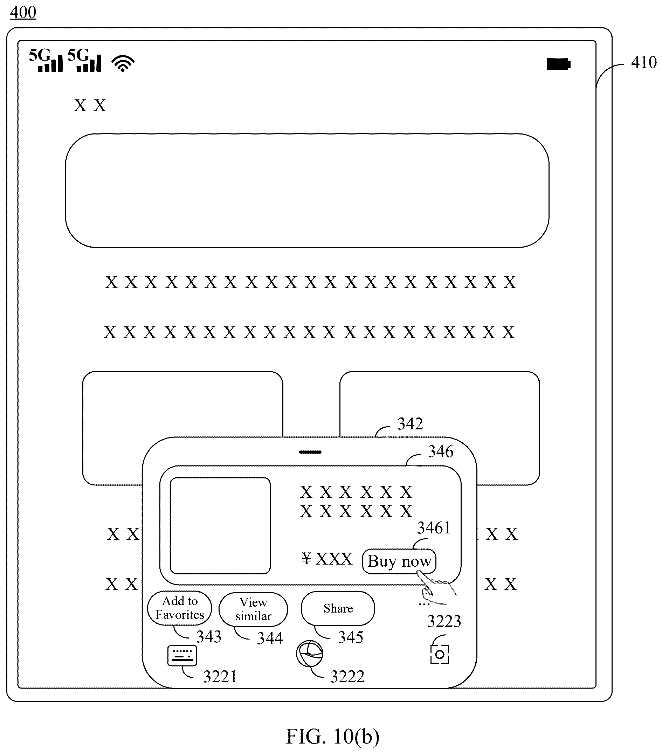

After detecting an operation of tapping an entry indicator 411 by a user, the electronic device 400 may display a GUI shown in FIG. 10(b).

Refer to FIG. 10(b). The electronic device may display a display interface 342 of an AI service.

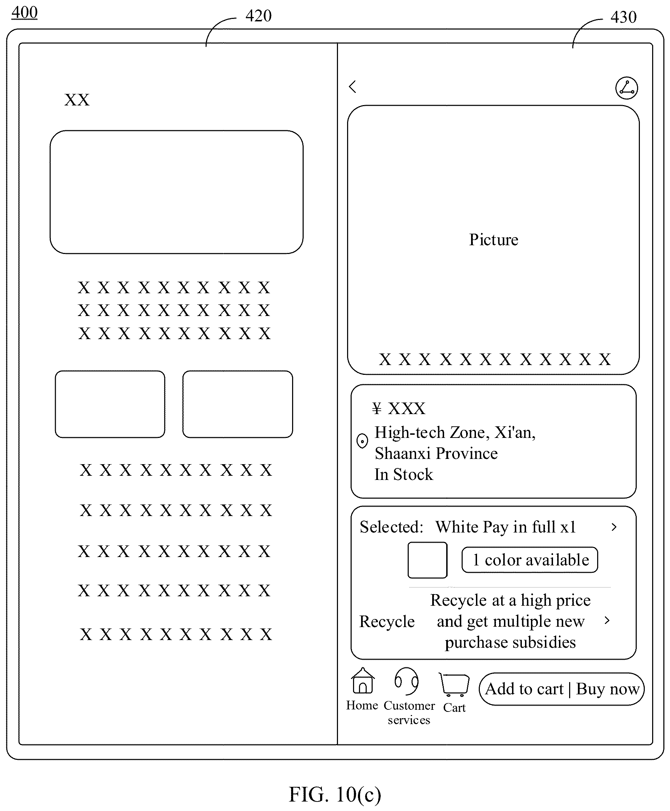

After detecting an operation of tapping a buy now function button 3461 by the user, the electronic device may display a GUI shown in FIG. 10(c).

Refer to FIG. 10(c). The electronic device may display a display interface 420 and a display interface 430 in split-screen mode or via temporary dual-window display. Display content in the display interface 420 may be display content in the display interface 410, and the display interface 430 is a purchase display interface of a commodity, so that the user can conveniently purchase the commodity when needed.

Based on this embodiment of this application, when the user taps a display widget of a recommended service, the electronic device may further display the service in split screen mode, ensuring that original content browsed by the user remains unaffected while offering the user a fresh experience.

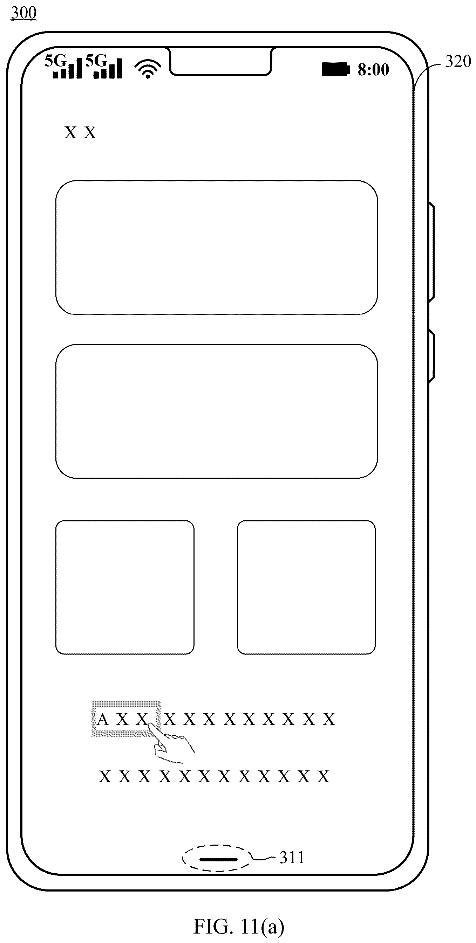

In some cases, the user may conveniently drag content such as text and a picture to the entry indicator of the AI service in the display interface of the electronic device, the content as an input is displayed in an input box of the entry indicator, and a query service may be performed. The following describes the technical solution with reference to FIG. 11(a) to FIG. 11(e).

FIG. 11(a) to FIG. 11(e) are diagrams of another group of GUIs according to an embodiment of this application. FIG. 11(a) to FIG. 11(e) show a process in which a user drags text content to an entry indicator in an electronic device 300 and uses the text content as query content.

It should be understood that for FIG. 11(a), refer to the related descriptions of FIG. 4(b). For brevity, details are not described herein again.

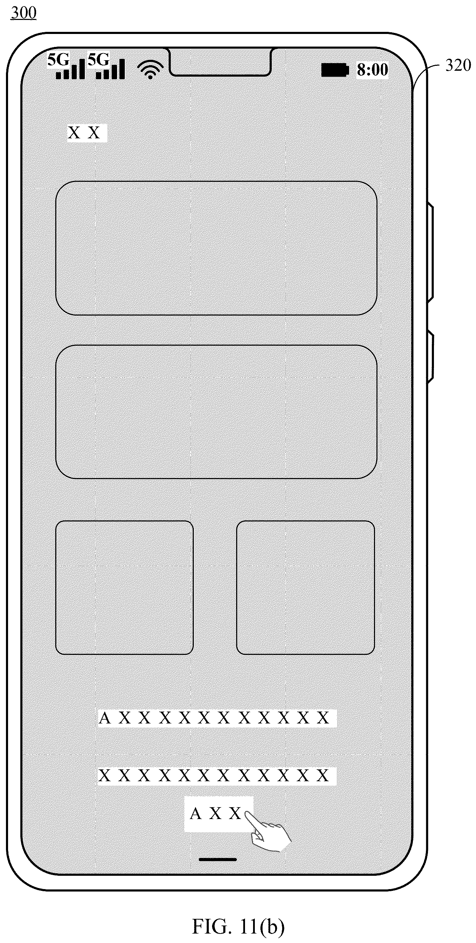

When detecting that the user touches and holds and selects a part of text, for example, the user touches and holds and selects text content "AXX", the electronic device 300 may display the text content "AXX" in a selected state. For example, the text content is in a highlighted or dimmed state. When the electronic device 300 detects that the user drags the selected text content "AXX", the text content "AXX" may be dragged along with dragging of the user, and the electronic device 300 may display a GUI shown in FIG. 11(b).

Refer to FIG. 11(b). A display interface 320 of the electronic device 300 may display a gray mask, and the text content "AXX" dragged by the user is dragged along with the dragging of the user.

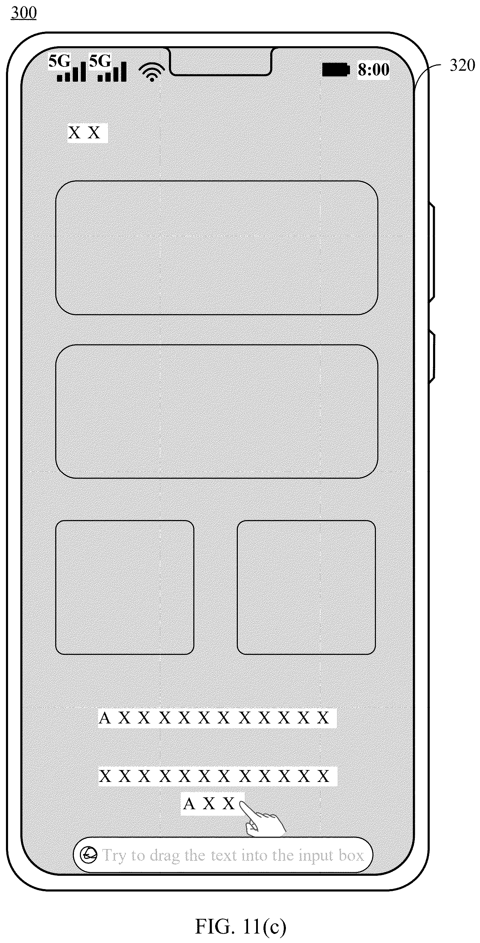

When the electronic device 300 detects an operation of dragging the text content, an entry indicator 311 may change to an input box 321, as shown in a GUI that is shown in FIG. 11(c) and that is displayed by the electronic device. Alternatively, when the electronic device 300 detects that a distance between the dragged text content and the entry indicator 311 is less than or equal to a preset distance, the entry indicator 311 may change to the input box 321, as shown in a GUI that is shown in FIG. 11(c) and that is displayed by the electronic device.

Refer to FIG. 11(c). The entry indicator 311 of the electronic device changes from a horizontal bar to the input box 321. The input box 321 may further display text content "Try to drag the text into the input box" to remind the user to directly drag the text into the input box.

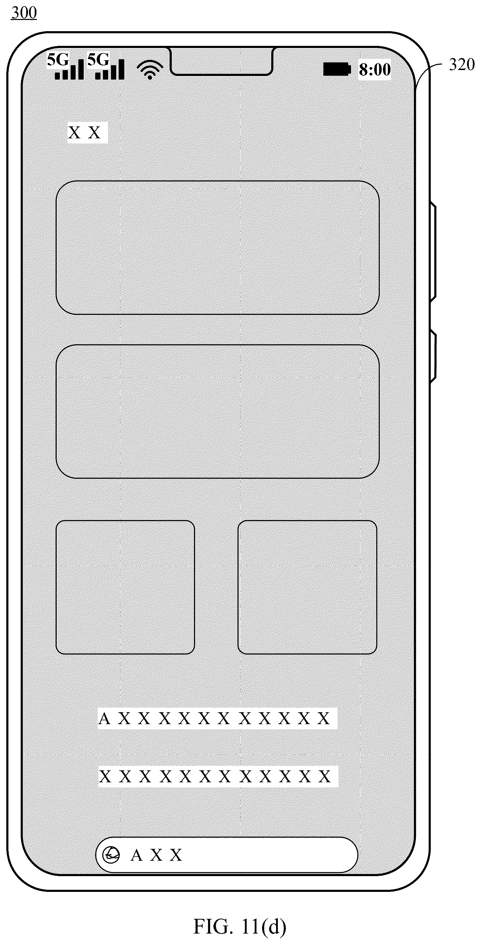

After detecting that the user drags the text content into the input box 321, the electronic device 300 may display a GUI shown in FIG. 11(d).

Refer to FIG. 11(d). The input box 321 may display the text content "AXX" dragged by the user.

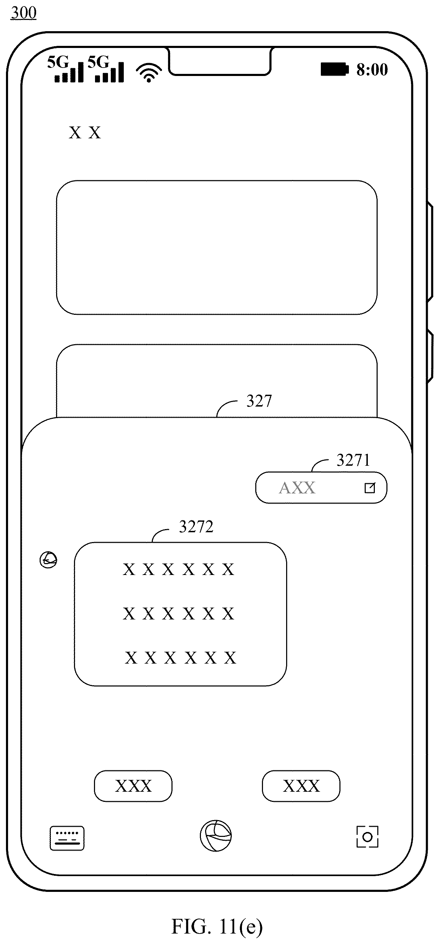

When detecting that the dragging operation of the user is completed, the electronic device 300 may display a GUI shown in FIG. 11(e).

In some other examples, the input box 321 may further include a query button. When detecting that the user taps the query button, the electronic device 300 may display a GUI shown in FIG. 11(e).

Refer to FIG. 11(e). The electronic device 300 may display a display interface 327 for interacting with the AI service. The display interface 327 may include a display box 3271 for query, a display box 3272 for a query result of the text content "AXX", a part of recommended display boxes, a text input icon, a voice input icon, a visual input icon, and the like.

It may be understood that the user may further perform an operation, same as that performed on the foregoing text, on content such as a picture, a list item, a card, and an animation that the user expects to query. This is not limited in embodiments of this application.

Based on this embodiment of this application, the user may drag, to an input box formed at the entry indicator, content such as text or a picture that the user expects to query in a display interface. The electronic device may perform a query operation, and display a query result.

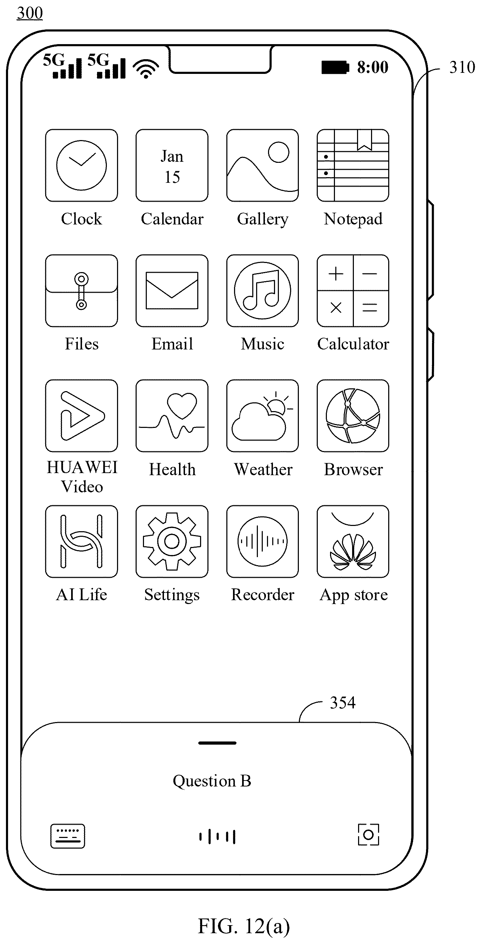

In some cases, when an AI task that needs to be executed by the electronic device 300 takes a long time, the AI task may be displayed in a collapsed manner or displayed above an interaction display interface, to remind the user that there is an ongoing AI task currently. The following describes the technical solution with reference to FIG. 12(a) to FIG. 13(g).

For example, FIG. 12(a) to FIG. 12(e) are diagrams of another group of GUIs according to an embodiment of this application. FIG. 12(a) to FIG. 12(e) show a process in which an electronic device collapses an AI task.

Refer to FIG. 12(a). An electronic device 300 may display a voice input display interface 354. The display interface 354 may display "Question B" that is recognized from a voice input of a user. The display interface 354 may be stacked over a display interface 310.

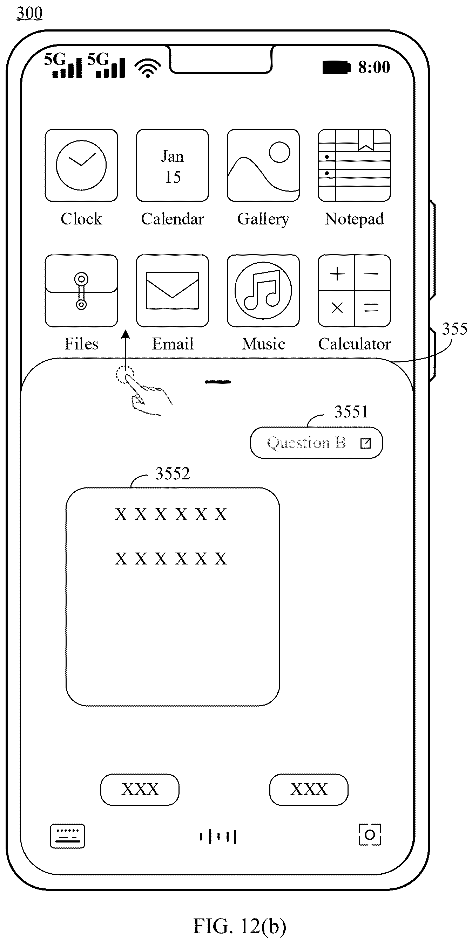

After detecting that the voice input of the user is completed, the electronic device 300 may display a GUI shown in FIG. 12(b).

Refer to FIG. 12(b). The electronic device 300 may display an interaction display interface 355. The display interface 355 may include a display box 3551 of the question B and a display box 3552 for answering the question B. In some cases, answering the question B may require a long time. In this case, the electronic device may collapse an AI task for answering the question B.

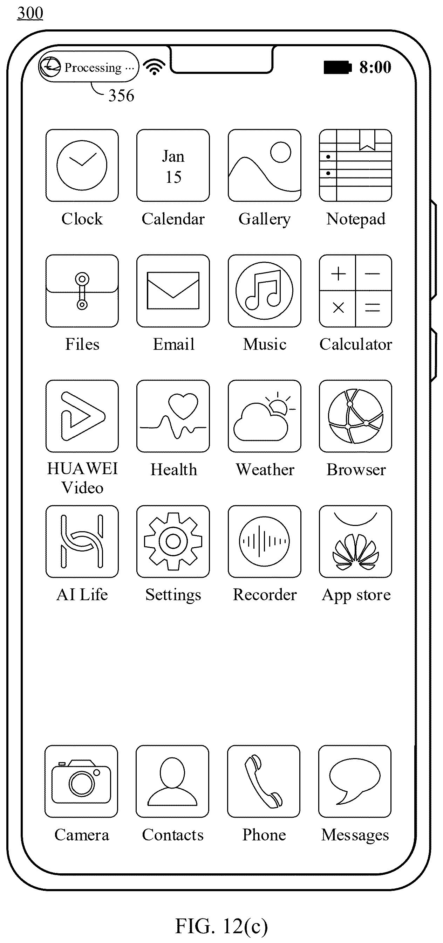

For example, after detecting an operation of sliding upward or downward on the display interface 355 by the user, the electronic device may display a GUI shown in FIG. 12(c).

Refer to FIG. 12(c). An indicator 356 of the AI task that is being processed may be displayed in a status bar of the electronic device 300. For example, the indicator 356 may be displayed in a form of a display box, and the display box may further include an AI service icon and text content "Processing...". In this way, the user may be reminded that there is an incomplete AI task currently.

In some other examples, the indicator 356 may be further displayed at another location in the status bar. Alternatively, the indicator 356 may be further displayed at the bottom or the side of the electronic device 300. This is not limited in embodiments of this application.

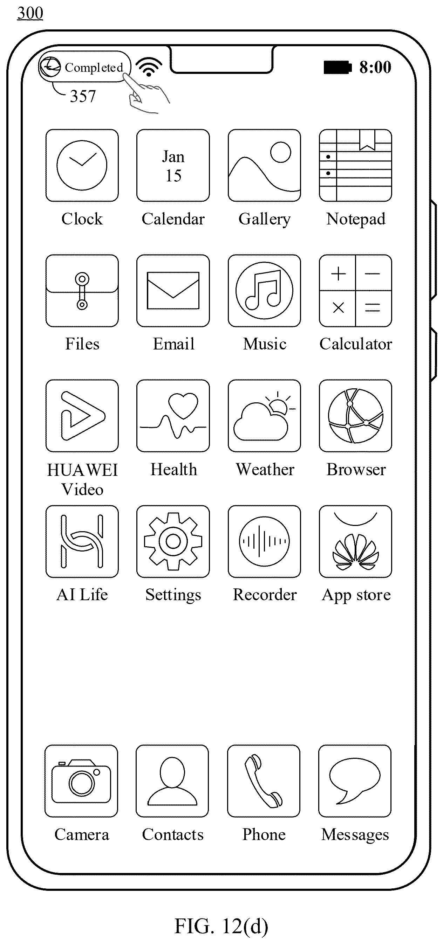

After a period of time, when detecting that the AI task is completed, the electronic device 300 may display a GUI shown in FIG. 12(d).

Refer to FIG. 12(d). The electronic device 300 may display an indicator 357 indicating that the AI task is completed. In this way, the user may be reminded that the current AI task is completed. For example, the text content "Processing..." in the indicator 356 changes to "Completed" to form the indicator 357.

It should be understood that the text content in the indicator 356 and the indicator 357 is merely an example. In some other examples, the text content may be other content. For example, "Processing" may be displayed in the indicator 356, and "Complete" may be displayed in the indicator 357.

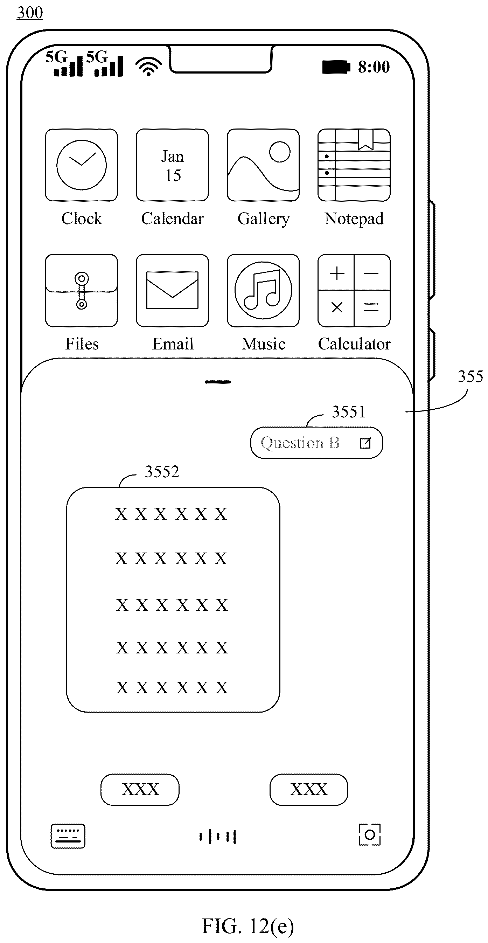

After detecting an operation of tapping the indicator 357 by the user, the electronic device 300 may display a GUI shown in FIG. 12(e).

Refer to FIG. 12(e). The electronic device 300 may display an interaction display interface 355. The display box 3552 for answering the question B in the display interface 355 may include content found by the electronic device based on the question B.

In some other examples, the question B may be a task that needs to be executed by the electronic device 300. For example, the electronic device 300 needs to help buy a train ticket, an air ticket, or a scenic spot ticket.

Based on this embodiment of this application, for some AI tasks that can be completed only after specific duration, the user may actively collapse the current AI task, so that the user can be reminded that there is an ongoing AI task currently without affecting use of the electronic device by the user.

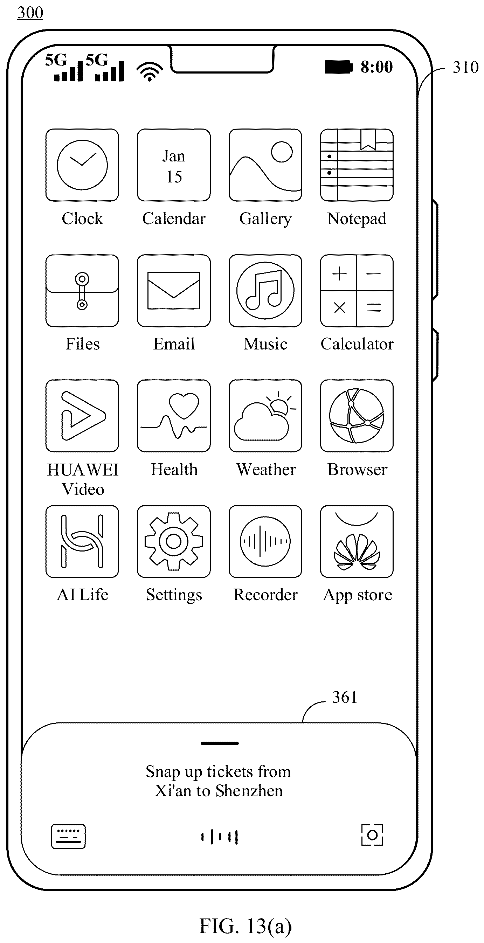

FIG. 13(a) to FIG. 13(g) are diagrams of another group of GUIs according to an embodiment of this application.

Refer to FIG. 13(a). An electronic device 300 may display a voice input display interface 361. For example, the display interface 361 may display a task for snapping up tickets of "Snap up tickets from Xi'an to Shenzhen" that is recognized from a voice input of a user. The display interface 361 may be stacked over a display interface 310.

It should be understood that content of the voice input of the user may be understood as an AI task that needs to be executed by the electronic device.

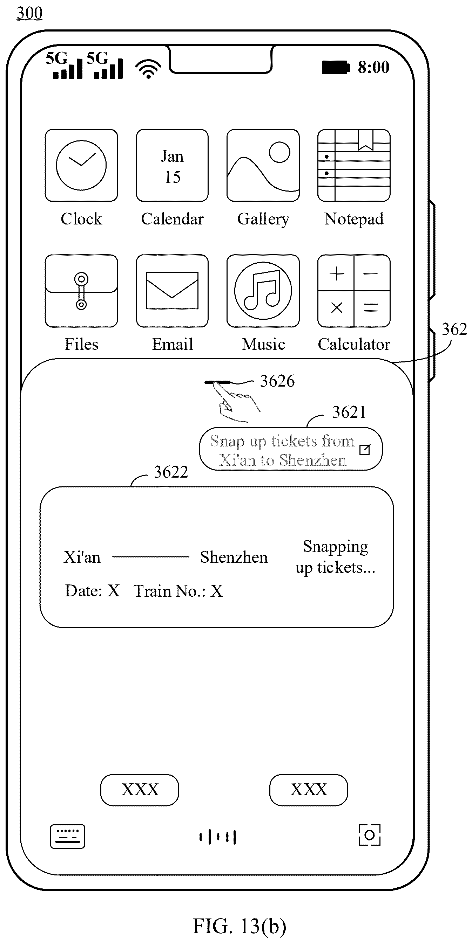

After detecting that the voice input of the user is completed, the electronic device 300 may display a GUI shown in FIG. 13(b).

Refer to FIG. 13(b). The electronic device 300 may display an interaction display interface 362. The display interface 362 may include a display box 3621, a display box 3622 for executing a task A, a minimizing function button 3626, and the like. The display box 3621 may include the text content "Snap up tickets from Xi'an to Shenzhen".

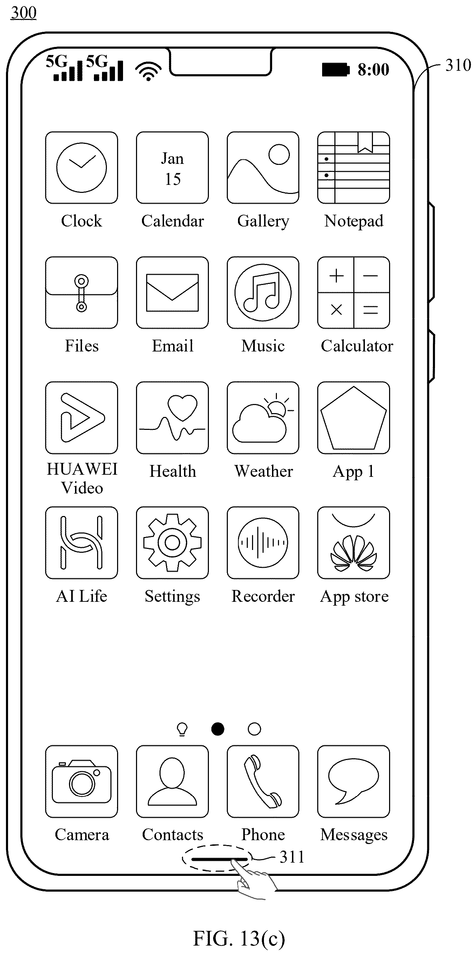

After detecting an operation of tapping the minimizing function button 3626 by the user, the electronic device 300 may display a GUI shown in FIG. 13(c).

Refer to FIG. 13(c). The GUI may be the display interface 310 of the electronic device 300.

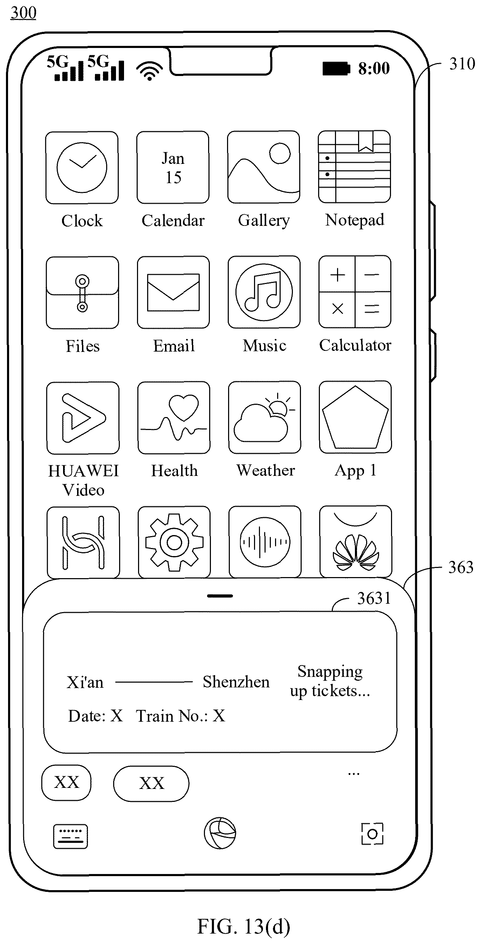

After detecting an operation of tapping an entry indicator 311 again by the user, the electronic device 300 may display a GUI shown in FIG. 13(d).

Refer to FIG. 13(d). The electronic device 300 may display an interaction display interface 363. The display interface 363 may include a display widget 3631 of a task that is being executed and a plurality of display boxes of recommended content. The display interface 363 may further include the text input icon, the voice input icon, the visual input icon, and the like. The display widget 3631 may include content of the task, an execution degree, and the like.

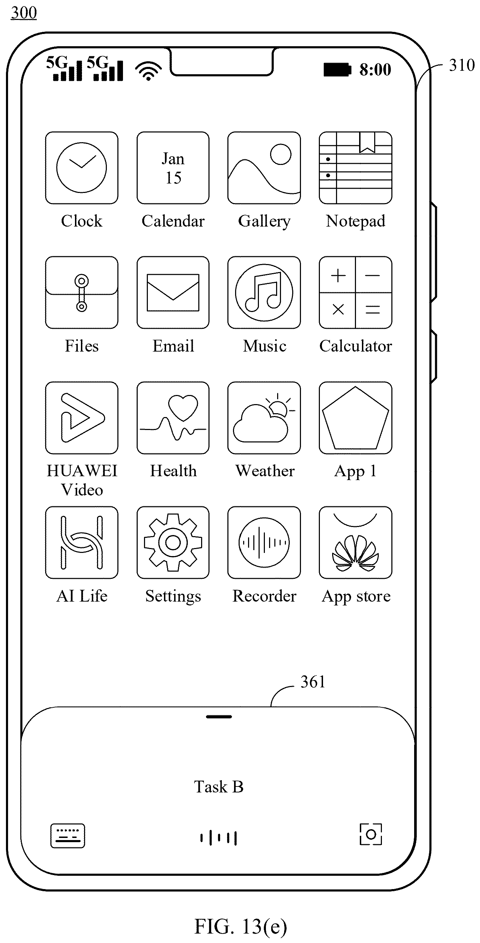

In a process in which the electronic device 300 executes the task for snapping up tickets, the user may minimize the display interface 363 at any time. After the display interface 363 is minimized, the electronic device 300 may display a GUI shown in FIG. 13(c). When the electronic device 300 detects a task B input by the user again, for example, when the user inputs the task B through a voice, the electronic device 300 may display a GUI shown in FIG. 13(e).

It should be understood that the user may further input the task B in a text form or a visual form. This is not limited in embodiments of this application.

Refer to FIG. 13(e). The electronic device 300 may display a voice input display interface 361. The display interface 361 may include content "Task B" recognized by the electronic device 300.

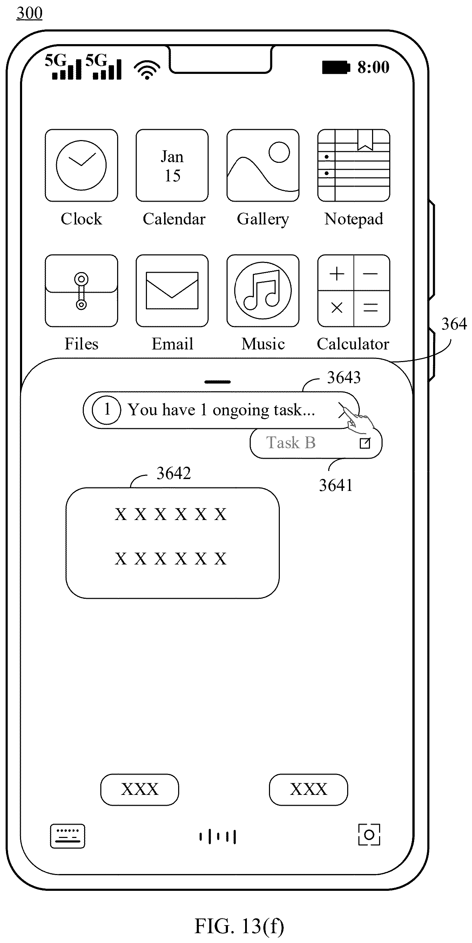

After detecting that the voice input of the user is completed, the electronic device 300 may display a GUI shown in FIG. 13(f).

Refer to FIG. 13(f). The electronic device 300 may display an interaction display interface 364. The display interface 364 may include a display box 3641 of the task B and a display box 3642 of an execution result of the task B. In addition, because the electronic device has not completed execution of the previous task for snapping up tickets, the display interface 364 may further include a display box 3643 of an ongoing task. The display box 3643 may include a task quantity indicator, a view details indicator, and text content "You have 1 ongoing task...".

In this way, even if the user starts a new round of AI tasks, the user can still obtain an AI task that is being executed in a current interaction display widget.

It should be understood that content included in the display box 3643 is merely an example. In another implementation, the display box 3643 may further include other content, or one or more pieces of the foregoing content may be replaced with other content.

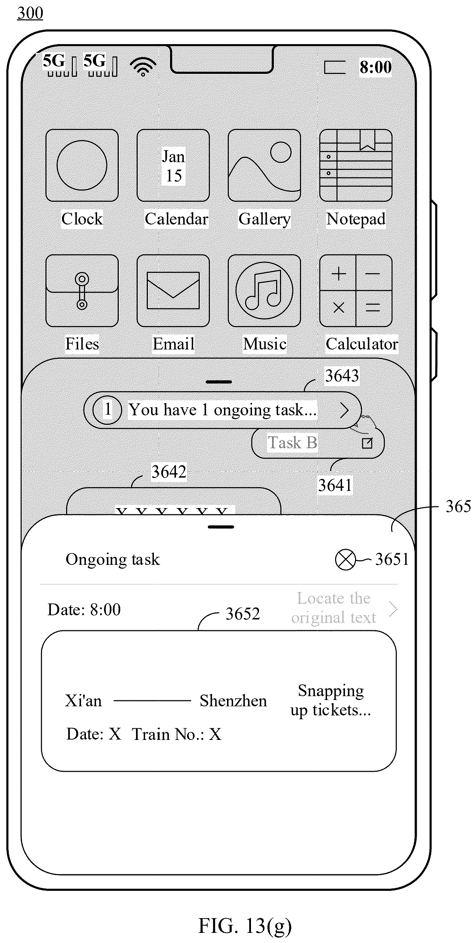

After detecting that the user taps the view details indicator in the display box 3643, the electronic device 300 may display a GUI shown in FIG. 13(g).

In some other examples, the display box 3643 may not include the view details indicator. In this case, after detecting that the user taps the display box 3643, the electronic device 300 may display a GUI shown in FIG. 13(g).

Refer to FIG. 13(g). The electronic device 300 may display a display widget 365 of the ongoing task over the display interface in FIG. 13(f). The display widget 365 may include a display widget 3652 of the ongoing task, creation time of the task, and a function button 3651 for closing the ongoing task. In some examples, the display widget 365 may further include a function indicator for locating original text. After the user taps the function indicator for locating the original text, the electronic device 300 may display a display interface interacting with the AI service, and locate the task for snapping up tickets.

In some other examples, the display widget 365 may not include the function button 3651. In this case, a bottom of the display widget 365 may include a closing function display box, so that the user may close the ongoing task by using the closing function display box.

Based on this embodiment of this application, when time required for the electronic device to execute a task A is long, the user may close the display interface for interacting with the AI service at any time. When the electronic device taps the entry indicator of the AI service again, the interaction display interface may display the task A that is being executed currently. When the electronic device detects a new task B that needs to be executed, the interaction display interface still indicates that there is an ongoing task, to remind the user that there is still an ongoing task currently. The user may further tap the view details indicator to view detailed information about the ongoing task A.

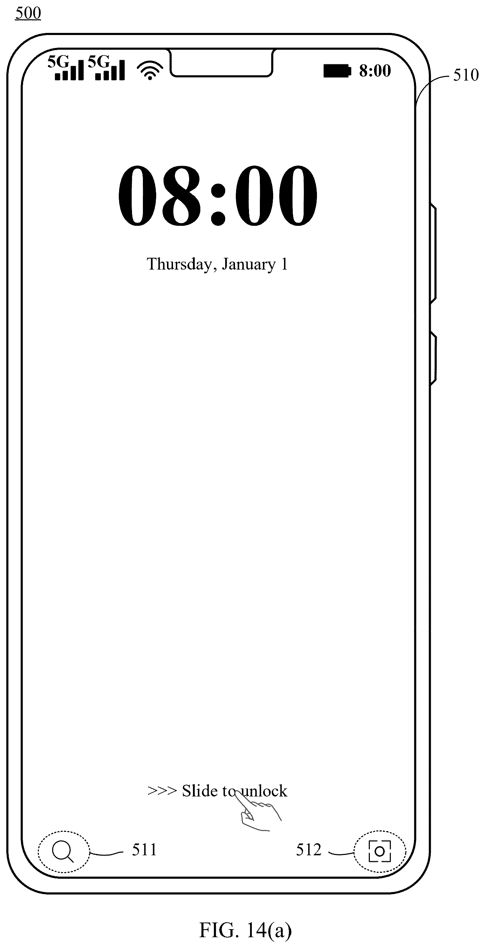

The foregoing describes, with reference to FIG. 3(a) to FIG. 13(g), the technical solution in which the entry indicator of the AI service is located at the bottom of the display interface of the electronic device in a horizontal bar manner. In some other implementations, the entry indicator of the AI service may alternatively be located at the bottom of the display interface of the electronic device in a form of an AI status bar. The following describes the technical solution with reference to FIG. 14(a) to FIG. 15(d).

FIG. 14(a) to FIG. 14(e) are diagrams of another group of GUIs according to an embodiment of this application. FIG. 14(a) to FIG. 14(e) show a process in which an entry indicator of an AI service is displayed on an electronic device 500.

Refer to FIG. 14(a). A GUI may be a display interface 510 of a lock screen of the electronic device 500. A bottom of the display interface 510 may include an AI status bar. For example, the AI status bar may include a search icon 511 and a visual input icon 512.

In some other examples, the AI status bar may further include a voice input icon or a text input icon. This is not limited in embodiments of this application.

It may be understood that after detecting an operation of tapping the search icon 511 by the user, the electronic device 500 may display a search display interface of an AI service, to provide a search function for the user. After detecting an operation of tapping the visual input icon 512 by the user, the electronic device 500 may display a visual input display interface of the AI service. In other words, the electronic device 500 displays an interface for invoking a camera to shoot or recognize an object.

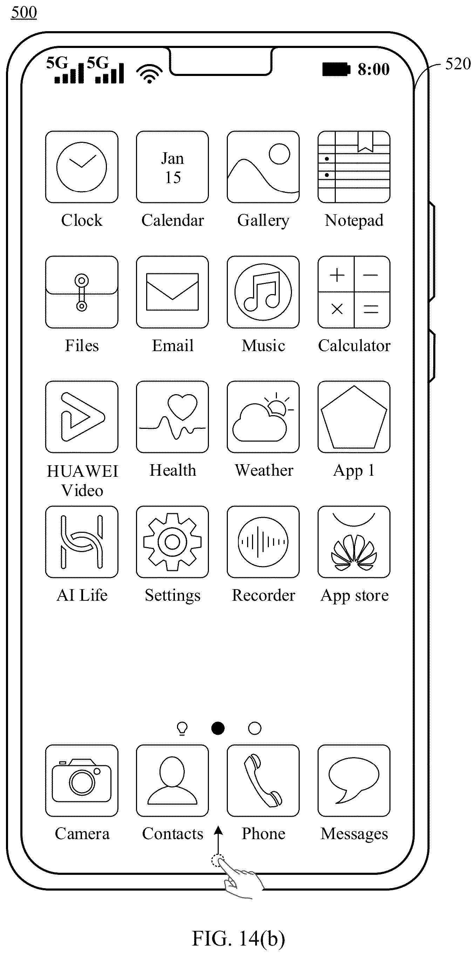

After detecting an unlocking operation, the electronic device 500 may display a GUI shown in FIG. 14(b).

Refer to FIG. 14(b). A GUI may be a display interface 520 of a home screen of the electronic device 500.

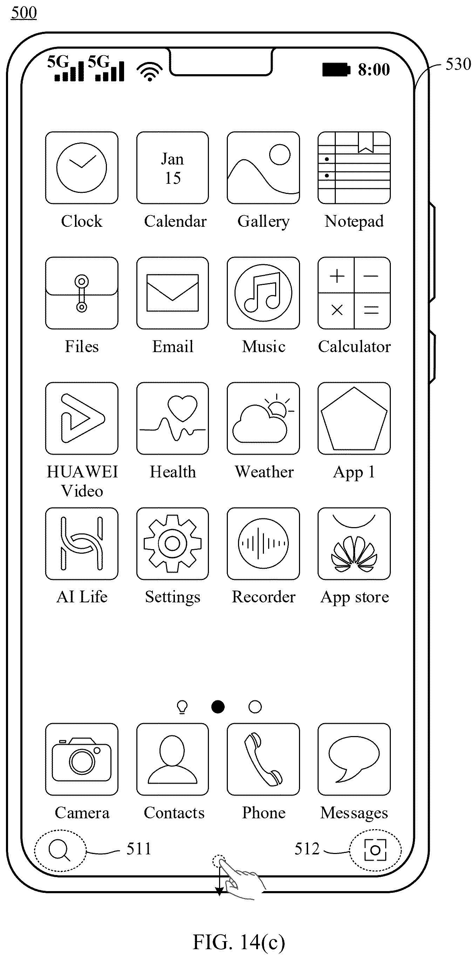

After the electronic device 500 detects an operation of sliding upward from a bottom of the display interface 520 by the user, the electronic device 500 may invoke the AI status bar, and may display a GUI shown in FIG. 14(c).

Refer to FIG. 14(c). The GUI may be a display interface 530 of the home screen of the electronic device 500. The AI status bar may be displayed at a bottom of the display interface 530, and the AI status bar may include the search icon 511 and the visual input icon 512.

In some other examples, the AI status bar may further include a voice input icon or a text input icon. This is not limited in embodiments of this application.

In some other examples, after detecting an unlocking operation, the electronic device 500 may display a GUI shown in FIG. 14(c).

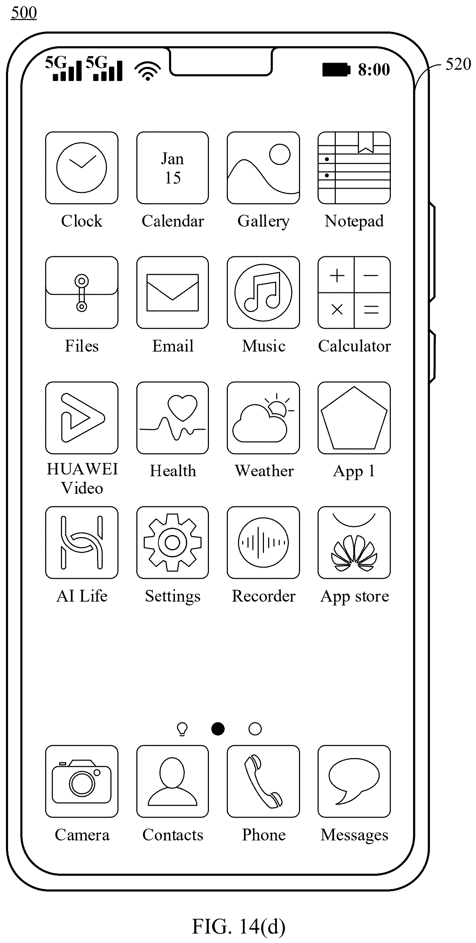

After the electronic device 500 detects an operation of sliding downward at the bottom of the display interface 530 by the user, the electronic device 500 may hide the AI status bar, and may display a GUI shown in FIG. 14(d).

Refer to FIG. 14(d). The GUI may be the display interface 520 of the home screen of the electronic device 500. The display interface 520 does not include the AI status bar.

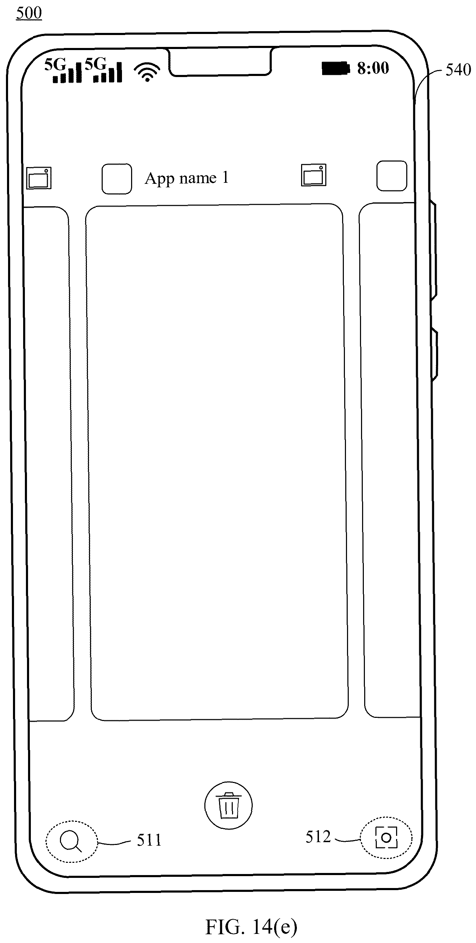

After detecting an operation of starting a task center, the electronic device 500 may display a GUI shown in FIG. 14(e).

Refer to FIG. 14(e). The GUI may be a display interface 540 of the task center of the electronic device 500. The display interface 540 may include a plurality of applications running on the electronic device 500, and may further include the AI status bar at the bottom of the interface. The AI status bar may include the search icon 511 and the visual input icon 512. In this way, the technical solution can help the user conveniently enter the display interface for interacting with the AI service.

Based on this embodiment of this application, the AI status bar may be resident in the display interface of the lock screen of the electronic device, so that the user can conveniently invoke the AI service. In addition, in a display interface obtained after unlocking, the user may invoke or hide the AI status bar by performing a simple operation. In addition, when the electronic device enters the task center, the AI status bar may still be displayed at the bottom of the task center. In this way, the user can conveniently invoke the AI service in a plurality of manners.

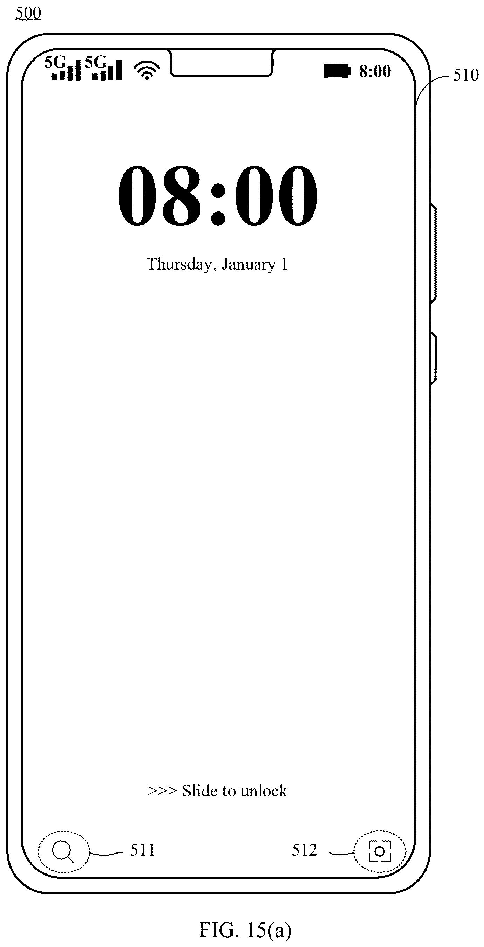

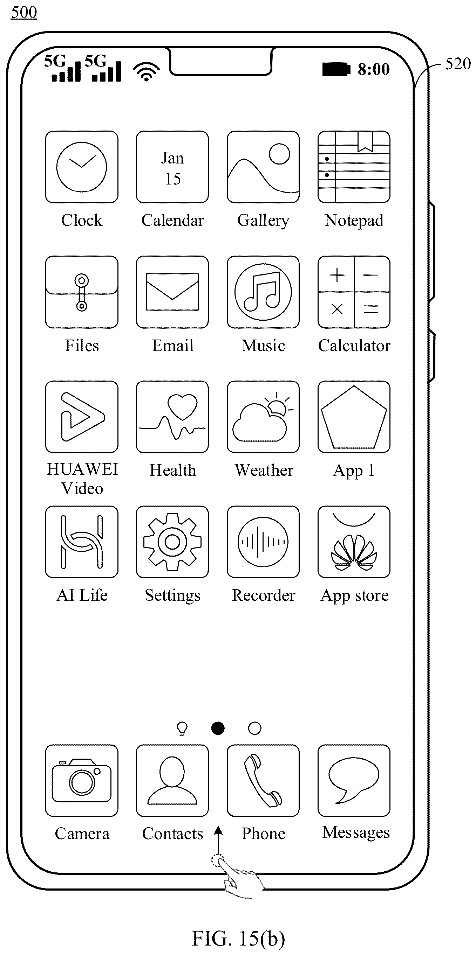

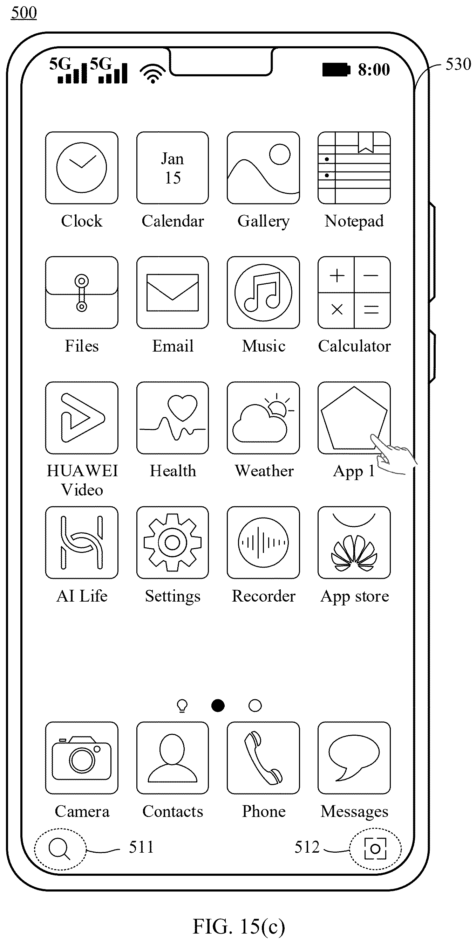

FIG. 15(a) to FIG. 15(d) are diagrams of another group of GUIs according to an embodiment of this application.

It should be understood that for FIG. 15(a) to FIG. 15(c), refer to the related descriptions of FIG. 14(a) to FIG. 14(c). For brevity, details are not described herein again.

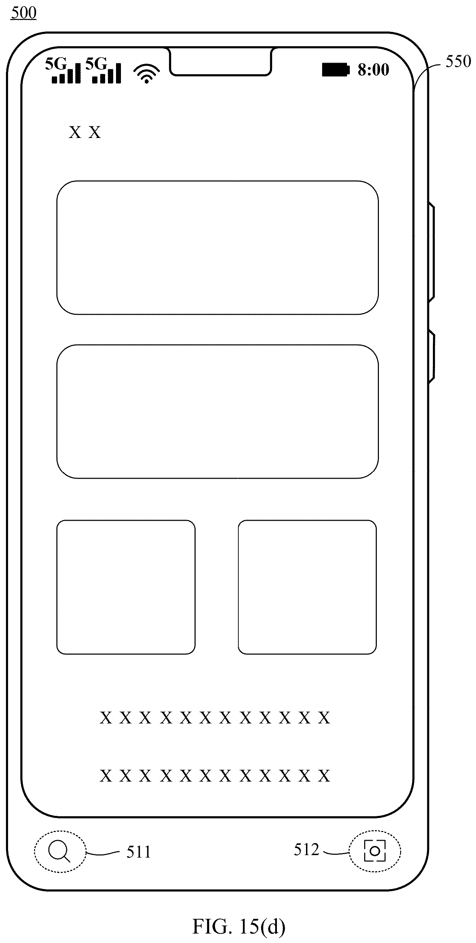

After detecting an operation of tapping an icon of an app 1 by a user, an electronic device 500 may display a GUI shown in FIG. 15(d).

Refer to FIG. 15(d). The GUI may be a display interface 550 of the app 1 in the electronic device 500. In addition to content of the app 1, the display interface 550 may further include the AI status bar at a bottom. The AI status bar may include a search icon 511 and a visual input icon 512.

Based on this embodiment of this application, when the electronic device displays a display interface of an application, the AI status bar may also be displayed at a bottom of the display interface. This helps the user conveniently invoke the AI service.

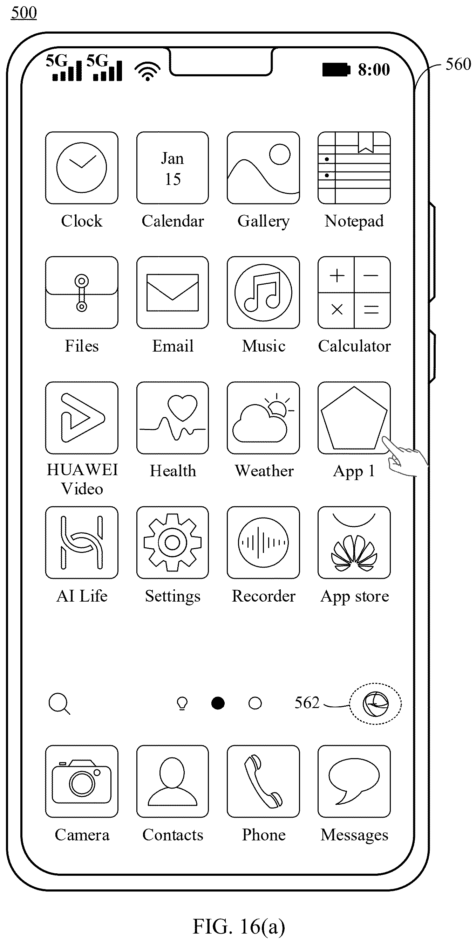

In some other implementations, the entry indicator of the AI service may alternatively be located on a side of a display interface of the electronic device in a form of an AI icon. The following describes the technical solution with reference to FIG. 16(a) to FIG. 21(b).

FIG. 16(a) to FIG. 16(c) are diagrams of another group of GUIs according to an embodiment of this application. FIG. 16(a) to FIG. 16(c) show a process in which an electronic device 500 displays an entry indicator of an AI service on a side of a display interface.

Refer to FIG. 16(a). A GUI may be a display interface 560 of a home screen of the electronic device 500. The display interface 560 may include a plurality of applications and a home screen switching icon, and an AI icon 562 may be included on a right side of the home screen switching icon.

In some other implementations, the AI icon 562 may be further located on a left side of the home screen switching icon.

It should be understood that, after detecting an operation of tapping the AI icon 562 by a user, the electronic device 500 may directly invoke the AI service. For example, the electronic device may display a display interface of the AI service, or the electronic device may display a visual input display interface.

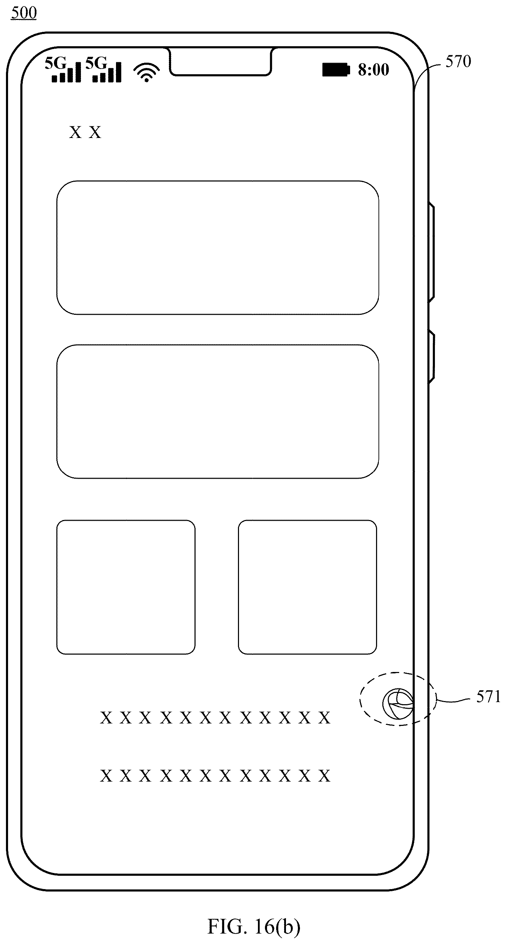

After detecting an operation of tapping an icon of an app 1 by the user, the electronic device 500 may display a GUI shown in FIG. 16(b).

Refer to FIG. 16(b). The GUI may be a display interface 570 of the app 1 in the electronic device 500. In addition to content of the app 1, the display interface 570 may further include an AI icon 571 on a side.

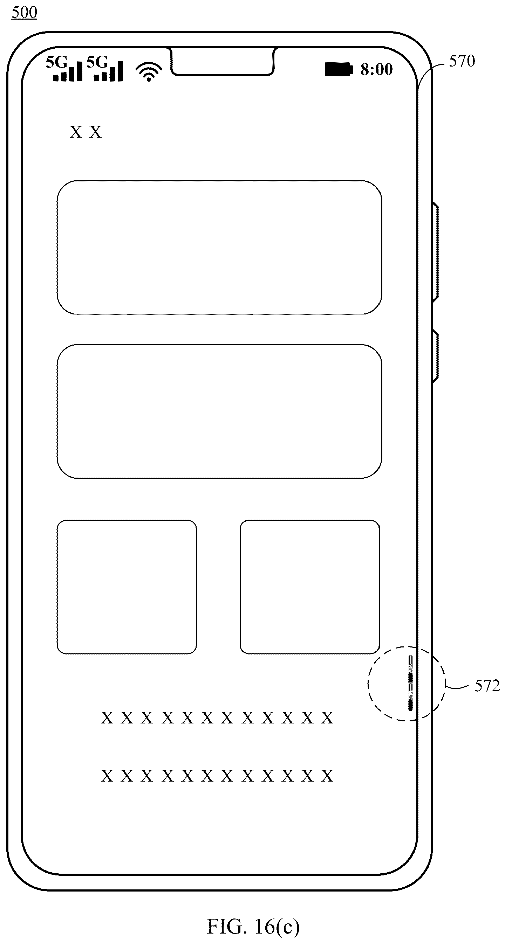

When the electronic device 500 does not detect, within preset duration, an operation of tapping the AI icon 571 by the user, the electronic device 500 may display a GUI shown in FIG. 16(c).

For example, the preset duration may be 3 seconds (second, s), 5 seconds, or the like. A specific value of the preset duration is not limited in embodiments of this application.

Refer to FIG. 16(c). The AI icon 571 becomes an entry indicator 572 in another form and is displayed on the side of the display interface 570.

It may be understood that the entry indicator 572 may be a gray or colored bar-shaped indicator.

Based on this embodiment of this application, the AI icon may alternatively be located on the side of the display interface of the electronic device.

In some cases, when a confidence level of a recommended service in the display interface of the electronic device is greater than a preset value, the entry indicator of the AI service may change. For example, the entry indicator 572 may display a colored flowing light effect, or may directly display a display box of recommended content. When the confidence level is low, the entry indicator may alternatively be hidden.

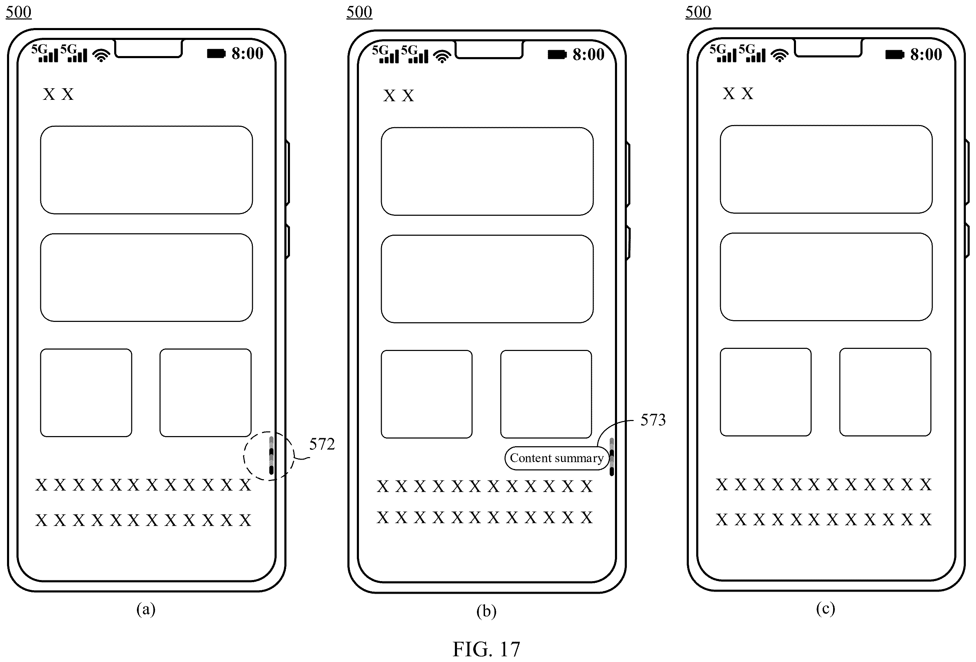

FIG. 17 is a diagram of another group of GUIs according to an embodiment of this application. Different entry indicators of an AI service at different confidence levels are shown.

When determining that a confidence level of a recommended service in a current display interface is greater than a preset value A and less than a preset value B, an electronic device may display a GUI shown in (a) in FIG. 17. Refer to (a) in FIG. 17. An entry indicator 572 may be displayed in a color or a colored flowing light effect, to provide a user with a reminding function to some extent.

When determining that the confidence level of the recommended service in the current display interface is greater than or equal to the preset value B, the electronic device may display a GUI shown in (b) in FIG. 17. Refer to (b) in FIG. 17. The electronic device may directly display a display box 573 of a recommended "content summary" near the entry indicator, so that the user may directly obtain the recommended content summary by tapping the display box 573.

When determining that the confidence level of the recommended service in the current display interface is low, the electronic device may display a GUI shown in (c) in FIG. 17. Refer to (c) in FIG. 17. The electronic device 500 may hide the entry indicator of the AI service.

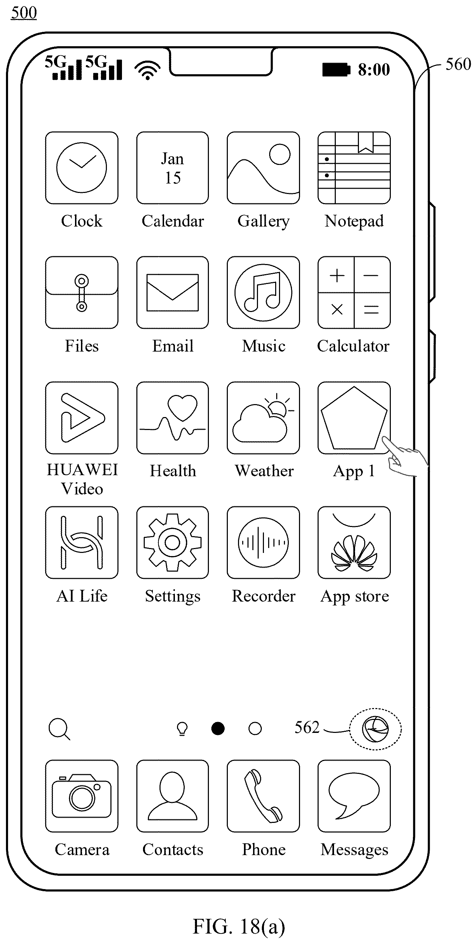

In some cases, the user may move the entry indicator of the AI service on the side by performing a dragging operation. The following describes the technical solution with reference to FIG. 18(a) to FIG. 19(d).

FIG. 18(a) to FIG. 18(d) are diagrams of another group of GUIs according to an embodiment of this application. FIG. 18(a) to FIG. 18(d) show a process in which a user adjusts an entry indicator of an AI service upward and downward.

It should be understood that for FIG. 18(a), refer to the related descriptions of FIG. 16(a).

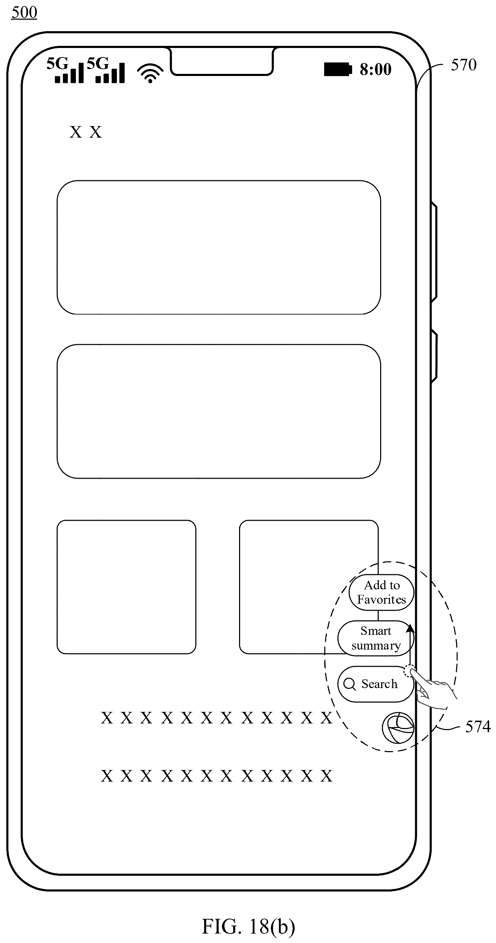

After detecting an operation of tapping an icon of an app 1 by the user, an electronic device 500 may display a GUI shown in FIG. 18(b).

Refer to FIG. 18(b). The GUI may be a display interface 570 of the electronic device. The display interface 570 may include an entry indicator 574. The entry indicator 574 may include an AI icon and a plurality of display boxes of recommended content.

For example, the entry indicator 574 may include a voice input icon, a favorites display box, a smart summary display box, and a search display box. When the user taps the voice input icon, a display interface (for example, the foregoing display interface 325) of the AI service may be displayed. In this case, the electronic device may recognize a voice instruction input by the user. When the user taps the favorites display box, the electronic device may add content in the display interface to the favorites. When the user taps the smart summary display box, the electronic device may generate a smart summary, display the smart summary in an interaction display widget, and the like.

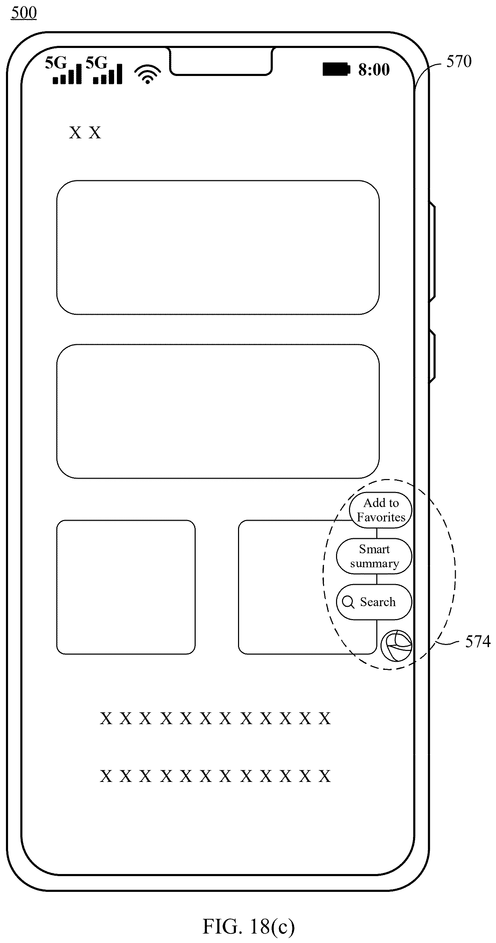

After detecting an operation of touching and holding the entry indicator 574 and dragging upward by the user, the electronic device 500 may display a GUI shown in FIG. 18(c).

In some other examples, after detecting an operation of touching and holding the entry indicator 574 by the user, the electronic device 500 may display a prompt box to remind the user that dragging may be performed.

In other examples, the user may further touch and hold and push downward the entry indicator 574.

The entry indicator 574 moves upward for a distance along with the dragging of the user. Refer to FIG. 18(c). A distance between the entry indicator 574 and the bottom is greater than a distance between the entry indicator 574 and the bottom in FIG. 18(b).

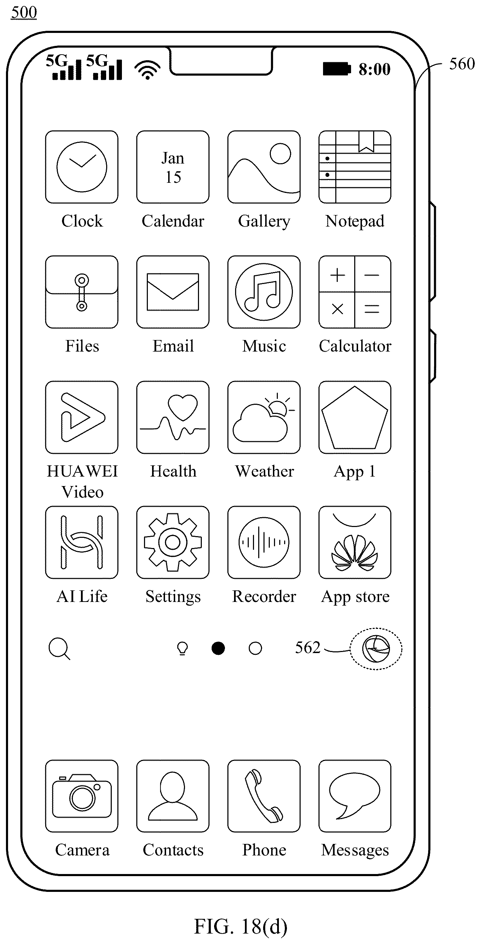

After detecting an operation of returning to the home screen, the electronic device 500 may display a GUI shown in FIG. 18(d).

Refer to FIG. 18(d). The entry indicator 562 and the home screen switching icon in the display interface 560 of the electronic device 500 move upward for a distance, and a height of the entry indicator 562 may be the same as a height of the entry indicator 574.

Based on this embodiment of this application, the user may change a location of the entry indicator through dragging, so that flexibility of a user operation can be improved.

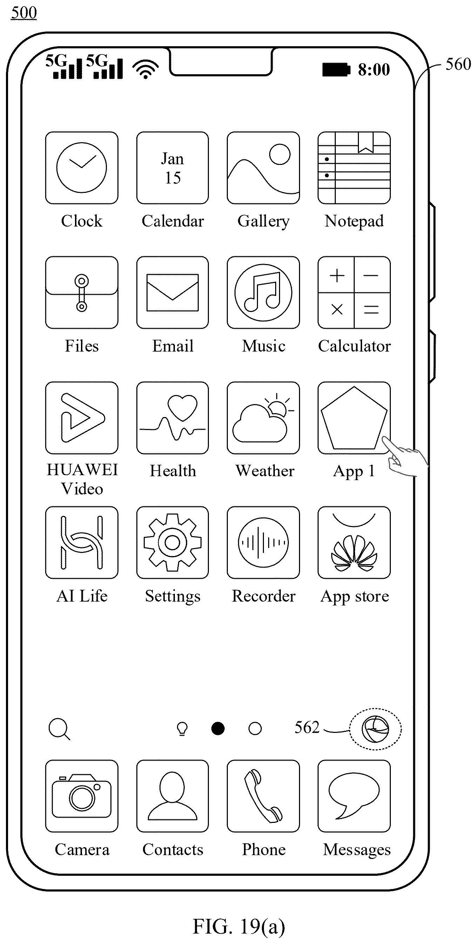

FIG. 19(a) to FIG. 19(d) are diagrams of another group of GUIs according to an embodiment of this application. FIG. 19(a) to FIG. 19(d) show a process in which a user adjusts an entry indicator of an AI service leftward and rightward.

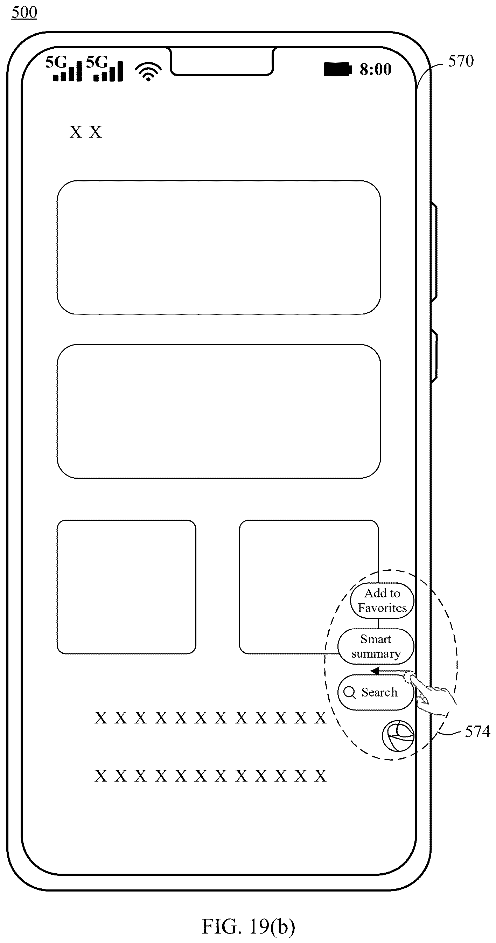

It should be understood that for FIG. 19(a) and FIG. 19(b), refer to the related descriptions of FIG. 18(a) and FIG. 18(b).

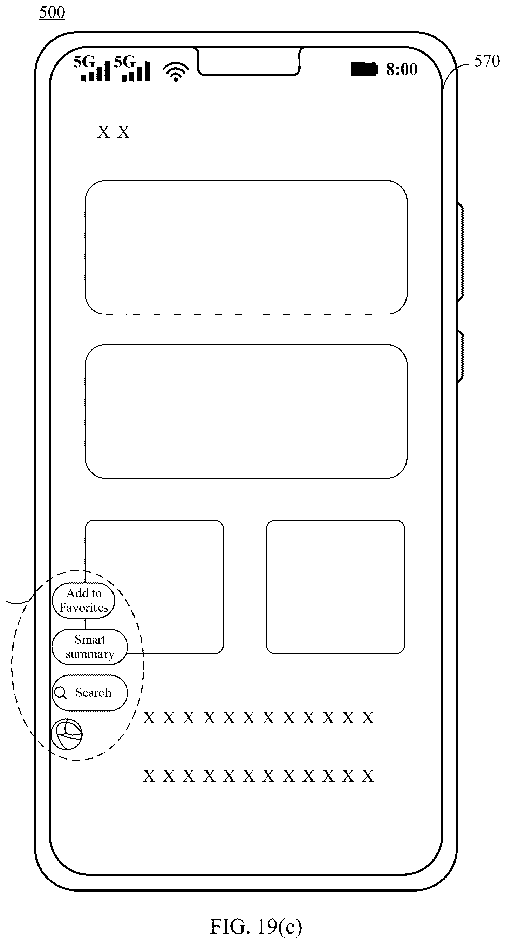

After detecting an operation of touching and holding and dragging an entry indicator 574 to a left side by a user, an electronic device 500 may display a GUI shown in FIG. 19(c).

The entry indicator 574 may move from a right side of a display interface to the left side of the display interface along with the dragging of the user. Refer to FIG. 19(c). The entry indicator 574 is displayed on the left side of the display interface.

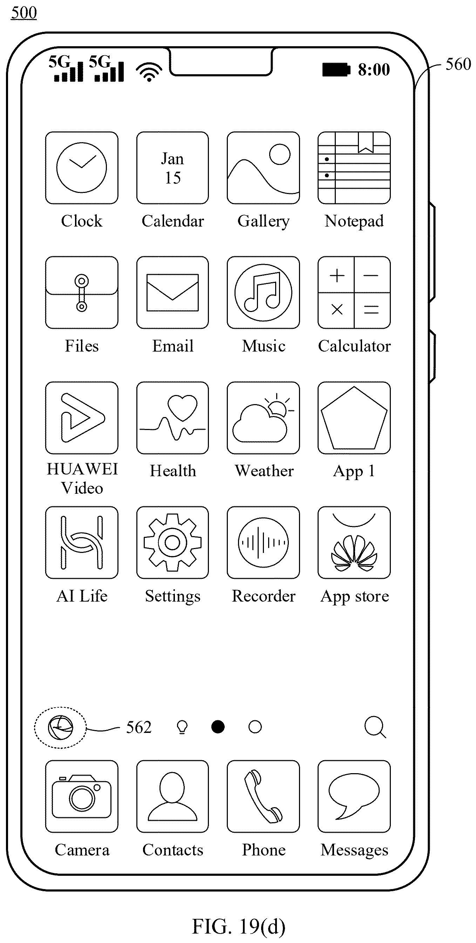

After detecting an operation of returning to a home screen, the electronic device 500 may display a GUI shown in FIG. 19(d).

Refer to FIG. 19(d). The entry indicator 562 in a display interface 560 of the electronic device 500 moves to a left side of a home screen switching icon.

Based on this embodiment of this application, the user may change a location of the entry indicator through dragging, so that flexibility of a user operation can be improved.

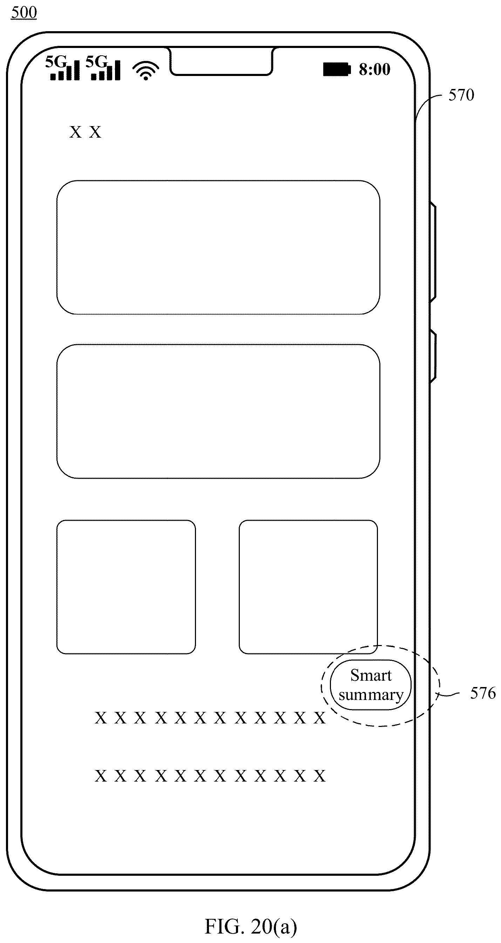

When determining that a confidence level of a recommended AI service in a display interface is greater than a preset value, the electronic device may directly display a display box of the recommended content. When detecting that the user taps the display box, the electronic device may directly display the related content. The following describes the technical solution with reference to FIG. 20(a) to FIG. 21(b).

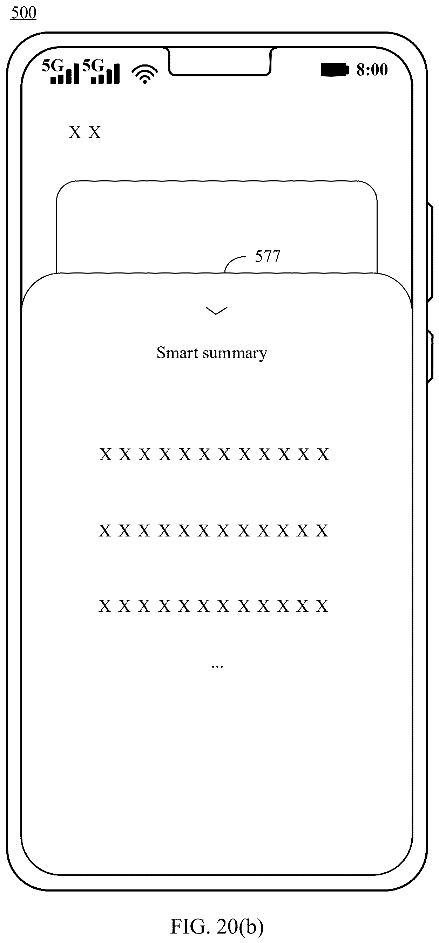

FIG. 20(a) and FIG. 20(b) are diagrams of another group of GUIs according to an embodiment of this application.

Refer to FIG. 20(a). A GUI may be a display interface 570 of an app 1 on an electronic device 500. When determining that a confidence level of a recommended AI service in the display interface 570 is greater than a preset value, the electronic device 500 may directly display a display box 576 of recommended content "Smart summary" in the display interface 570.

For example, the display interface of the app 1 may be an article. In this case, a user may have a requirement for viewing a summary.

After detecting an operation of tapping the display box 576 by the user, the electronic device 500 may display a GUI shown in FIG. 20(b).

Refer to FIG. 20(b). The electronic device 500 may display a display widget 577 of the smart summary. The display widget 577 may include summary content automatically generated by the electronic device 500.

It should be understood that this embodiment of this application is described by using the smart summary as an example. However, this should not limit a scenario to which this application is applicable. For example, this may be further applied to various scenarios such as song listening recognition, commodity purchase, train ticket purchase, and entrance ticket purchase.

Based on this embodiment of this application, the electronic device may directly display the display box of the recommended AI service content in the display interface, so that the user may conveniently view related content by tapping the display box.

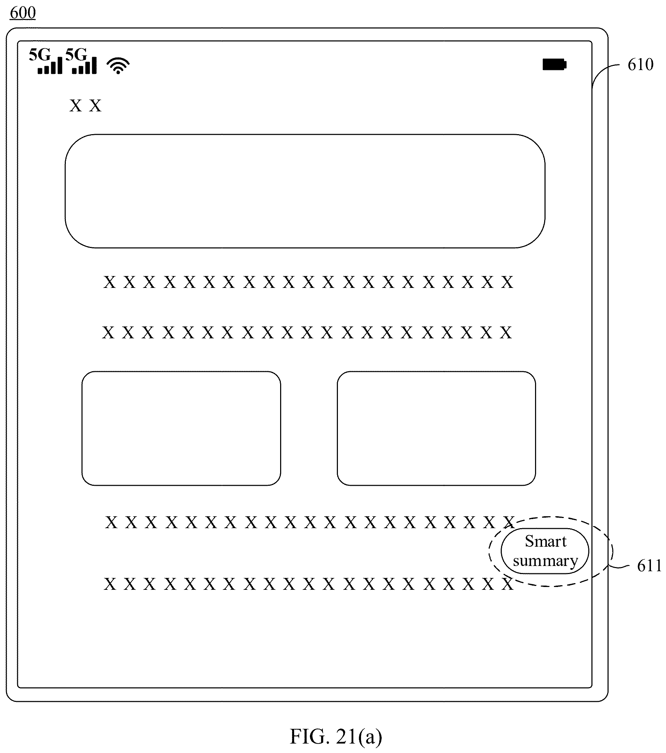

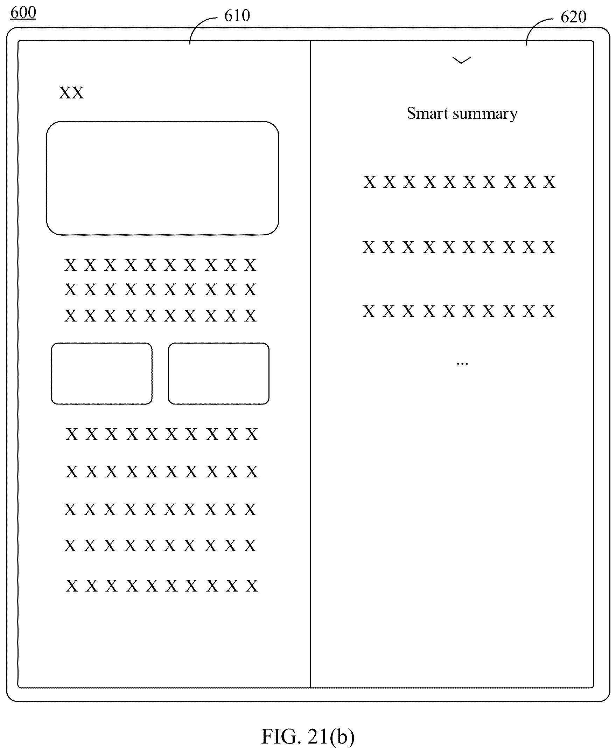

On some electronic devices with large screens, as shown in FIG. 21(a) and FIG. 21(b), FIG. 21(a) and FIG. 21(b) are diagrams of another group of GUIs according to an embodiment of this application. When a user taps a display box of recommended AI service content, an electronic device 600 may perform split screen display or temporary dual-window display.

Refer to FIG. 21(a). A GUI may be a display interface 610 of an app on the electronic device 600. When determining that a confidence level of a recommended AI service in the display interface 610 is greater than a preset value, the electronic device 600 may directly display a display box 611 of recommended content "Smart summary" in the display interface 610.

After detecting an operation of tapping the display box 611 by the user, the electronic device 600 may display a GUI shown in FIG. 21(b).

Refer to FIG. 21(b). The electronic device 500 may display an original display interface and content of the smart summary in split-screen mode. For example, half of a display of the electronic device displays the display interface 610, and the other half of the display of the electronic device displays a display interface 620. The display interface 620 may include the content of the smart summary automatically generated by the electronic device 600.

In some implementations, when the electronic device 600 detects an operation of sliding upward or downward in the display interface 610 by the user, content in the display interface 620 also changes accordingly.

Based on this embodiment of this application, when the electronic device is an electronic device with a large screen, the electronic device may directly display the display box of the recommended AI service content in the display interface. When the user taps the display box, the electronic device may display the content in split-screen mode. In this way, the user can conveniently view related content recommended by the AI service without affecting browsing of original content by the user.

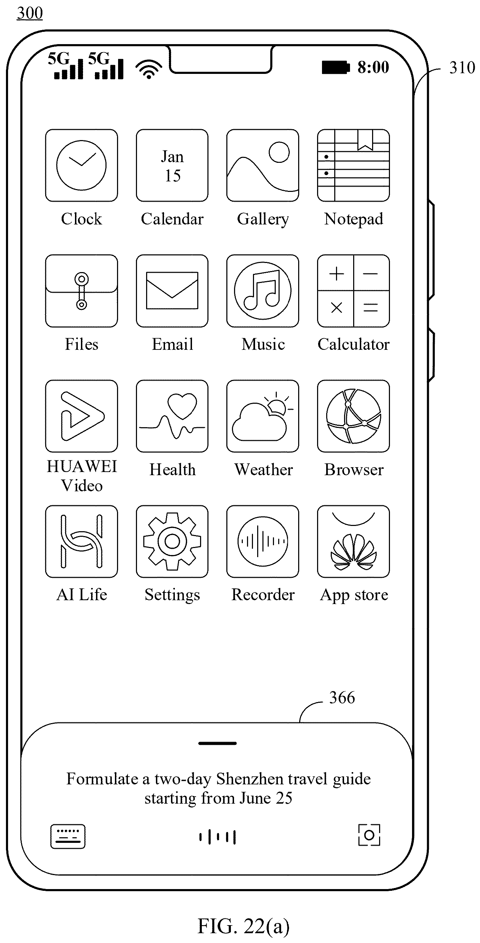

In some cases, the user may further use the AI service to formulate some guides, for example, a travel guide, hotel booking, and scenic spot ticket booking, and automatically generate an AI travel journal after a travel ends. Alternatively, the user may further use the AI service to integrate one or more third-party services, to provide good experience for the user. For example, the user uses the AI service to perform batch beautification, formulate a menu for a group dinner, order takeout, purchase a product, and the like. The following describes the technical solution with reference to FIG. 22(a) to FIG. 27(f).

FIG. 22(a) to FIG. 22(c) are diagrams of another group of GUIs according to an embodiment of this application. FIG. 22(a) to FIG. 22(c) show a process in which a user uses an AI service to formulate a travel guide.

Refer to FIG. 22(a). An electronic device 300 may display a voice input display interface 366. For example, the display interface 366 may display "Formulate a two-day Shenzhen travel guide starting from June 25" that is recognized from a voice input of the user. The display interface 366 may be stacked over a display interface 310.

It should be understood that content of the voice input of the user may be understood as an AI task that needs to be executed by the electronic device. In some other examples, the user may further input an instruction by using text.

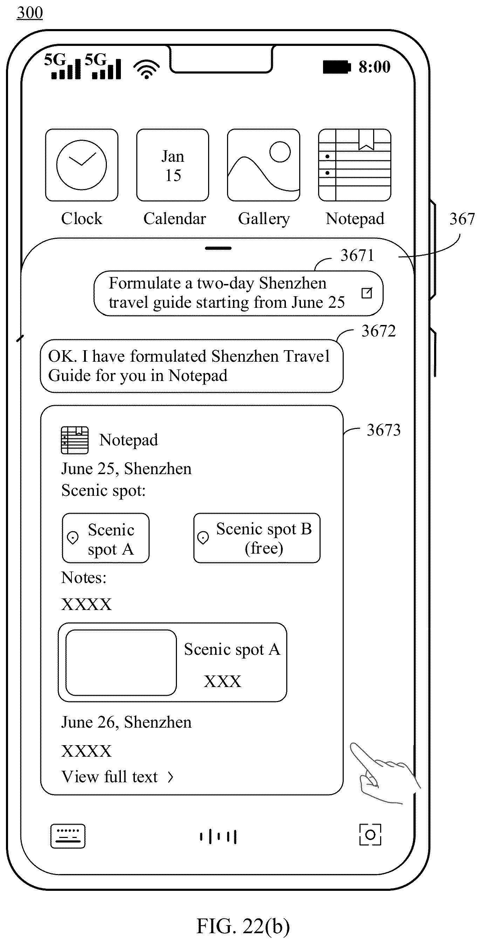

After detecting that the voice input of the user is completed, the electronic device 300 may display a GUI shown in FIG. 22(b).

Refer to FIG. 22(b). The electronic device 300 may display an interaction display interface 367. The display interface 367 may include a display box 3671 in which the user inputs a voice instruction, a display box 3672 of an execution result of the AI service, and a display box 3673 of specific execution content.

The display box 3671 may include the text content "Formulate a two-day Shenzhen travel guide starting from June 25". The display box 3672 may include text content "OK. I have formulated *Shenzhen Travel Guide* for you in Notepad". The display box 3673 may include specific content of the travel guide, for example, a date, a place, included scenic spots, and notes.

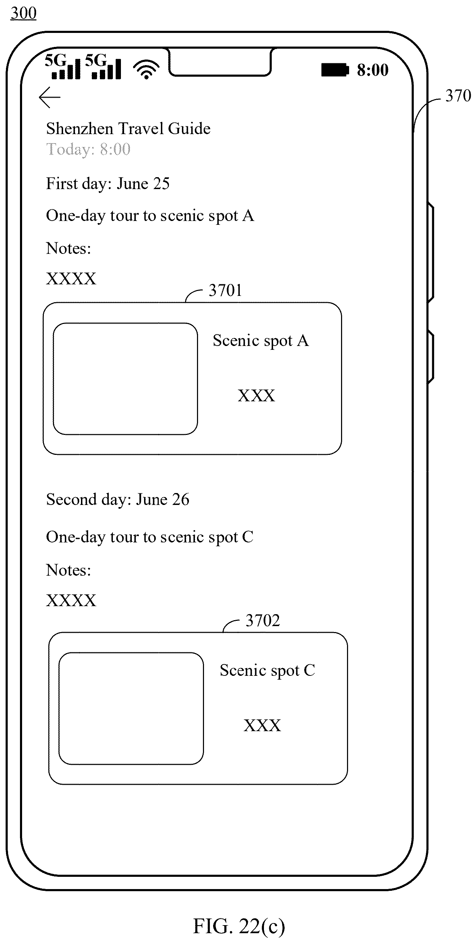

The display box 3673 may further include "View full text" and an indicator of "View full text". When the electronic device 300 detects that the user taps the indicator of "View full text", a GUI shown in FIG. 22(c) may be displayed.

It may be understood that storing the travel guide in Notepad is merely an example. In some other examples, the travel guide may alternatively be stored in another application or a cloud server. This is not limited in embodiments of this application.

Refer to FIG. 22(c). The GUI may be a display interface 370 of the Shenzhen travel guide in Notepad of the electronic device 300. The display interface 370 may include specific content of the Shenzhen travel guide, for example, the date, the location, and the notes, and may further include a display widget 3701 of a scenic spot A having a link and a display widget 3702 of a scenic spot C.

The user may tap the display widget 3701 and the display widget 3702 to view related content of the scenic spot, for example, an introduction to the scenic spot and entrance ticket purchase.

In some other examples, the display box 3673 of the travel guide may further include a display widget of a recommended hotel, a display widget of catering, and the like, so that the user can conveniently view the related content.

Based on this embodiment of this application, the user may invoke the AI service to formulate a complete travel guide, so that an application scenario of the AI service can be expanded, and user experience can be improved.

In some cases, after the AI service of the electronic device 300 formulates the travel guide for the user, when browsing a travel guide of another person, the user may conveniently add the travel guide of the another person to the travel guide formulated by the AI service.

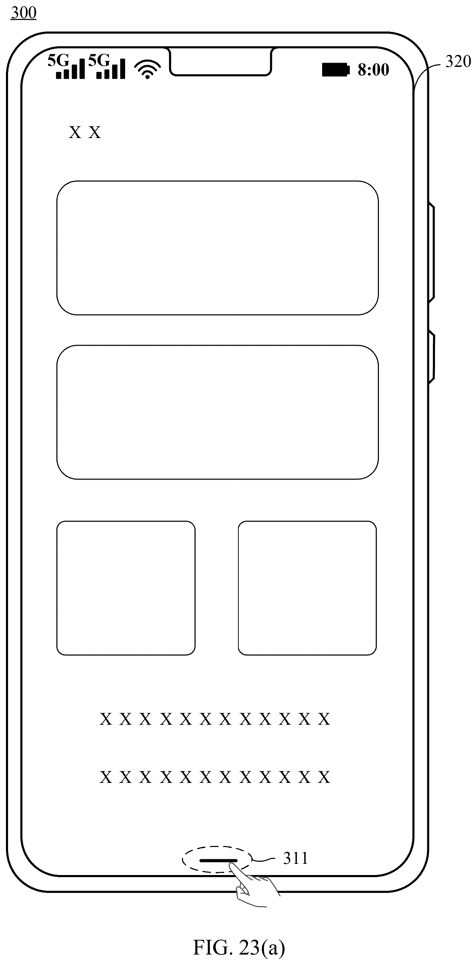

FIG. 23(a) to FIG. 23(f) are diagrams of another group of GUIs according to an embodiment of this application. FIG. 23(a) to FIG. 23(f) show a process in which a user uses an AI service to formulate a travel guide.

It should be understood that for FIG. 23(a), refer to the related descriptions of FIG. 4(a). For brevity, details are not described herein again.

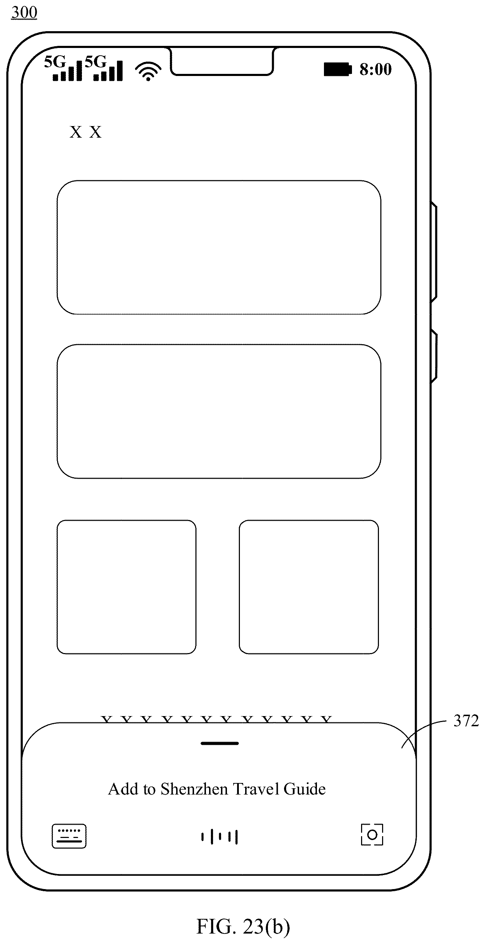

A display interface 320 may be a travel journal. The user may touch and hold an entry indicator 311 and input "Add to Shenzhen Travel Guide" through a voice. After detecting the foregoing operation of the user, the electronic device 300 may display a GUI shown in FIG. 23(b).

Refer to FIG. 23(b). The electronic device 300 may display a voice input display interface 372. The display interface 372 may include a recognized voice instruction "Add to Shenzhen Travel Guide", and the display interface 372 may further include a text input icon, a visual input icon, and a voice input icon.

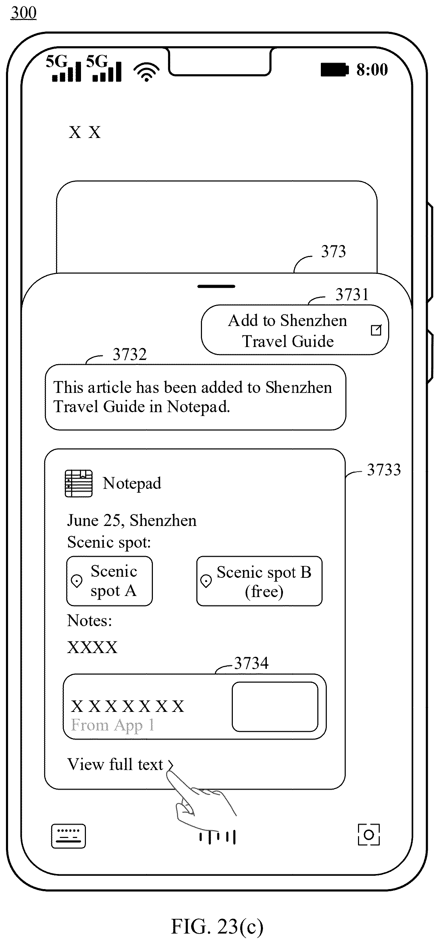

After detecting that the user completes a current voice instruction input, the electronic device 300 may display a GUI shown in FIG. 23(c).

Refer to FIG. 23(c). The electronic device may display a display interface 373 for interacting with the AI service. The display interface 373 may include a display box 3731 in which the user inputs a voice instruction, a display box 3732 of an execution result of the AI service, and a display box 3733 of specific execution content.

The display interface 373 may include text content "Add to Shenzhen Travel Guide". The display box 3732 may include text content "This article has been added to *Shenzhen Travel Guide* in Notepad". The display box 3733 may include specific content of Shenzhen Travel Guide, for example, a date, a place, included scenic spot A and scenic spot B, and notes, and may further include a display widget 3734 of the article with a link. When the user taps the display widget 3734, the display interface of the electronic device may directly jump to a display interface of the article.

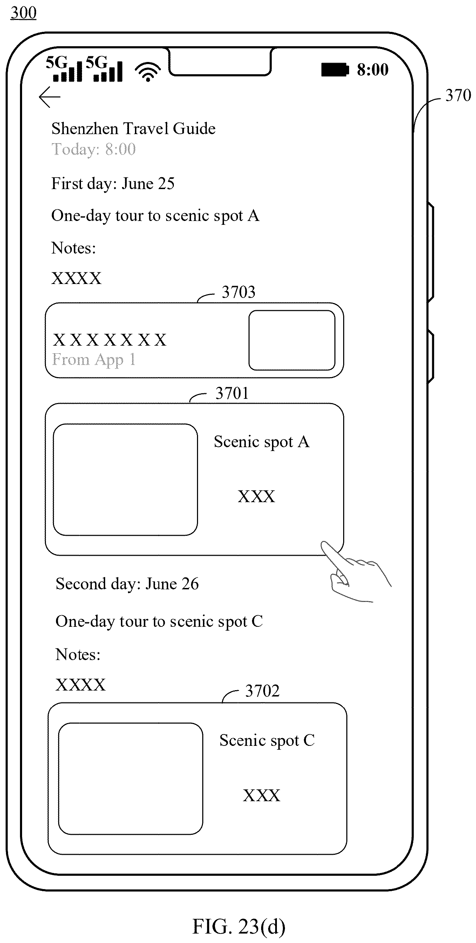

In some implementations, the display interface 373 may further include "View full text" and an indicator of "View full text". After detecting an operation of tapping the indicator of "View full text" by the user, the electronic device 300 may display a GUI shown in FIG. 23(d).

In some other implementations, after detecting an operation of tapping an area other than the display widget 3734 in the display widget 3733 by the user, the electronic device 300 may also display a GUI shown in FIG. 23(d).

Refer to FIG. 23(d). The GUI may be a display interface 370 of Shenzhen Travel Guide in Notepad of the electronic device 300. The display interface 370 may include specific content of Shenzhen Travel Guide, for example, a date, a place, and notes, may further include a display widget 3703 of the article with a link, and may further include a display widget 3701 for buying a ticket of a scenic spot A and a display widget 3702 for buying a ticket of a scenic spot C.

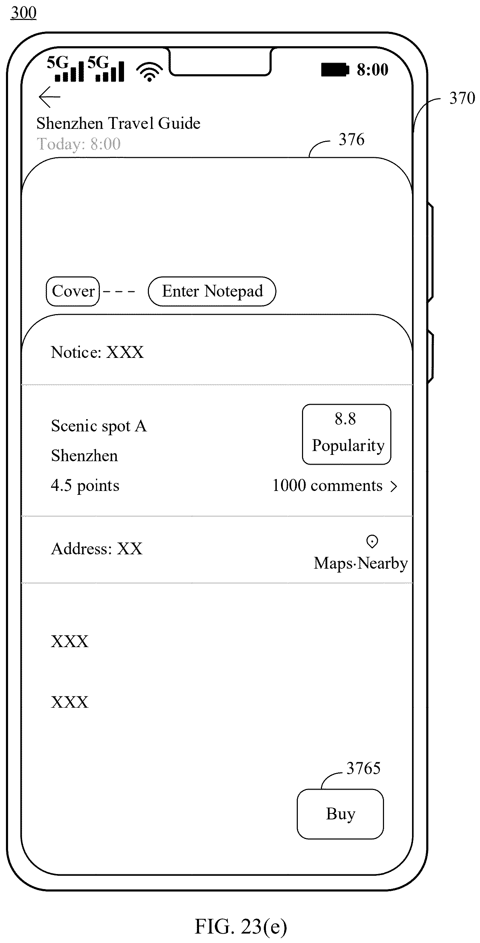

After detecting an operation of tapping the display widget 3701 by the user, the electronic device 300 may display a GUI shown in FIG. 23(e).

Refer to FIG. 23(e). The electronic device 300 may display a display widget 376 for purchasing a ticket. The display widget 376 may include a picture of the scenic spot A, and an introduction, a score, user comments, an address, a ticket price, a purchase button 3765, and the like of the scenic spot A.

The display widget 376 may be displayed above the display interface 370, so that the electronic device 300 does not need to jump the entire display interface to a display interface for purchasing the ticket.

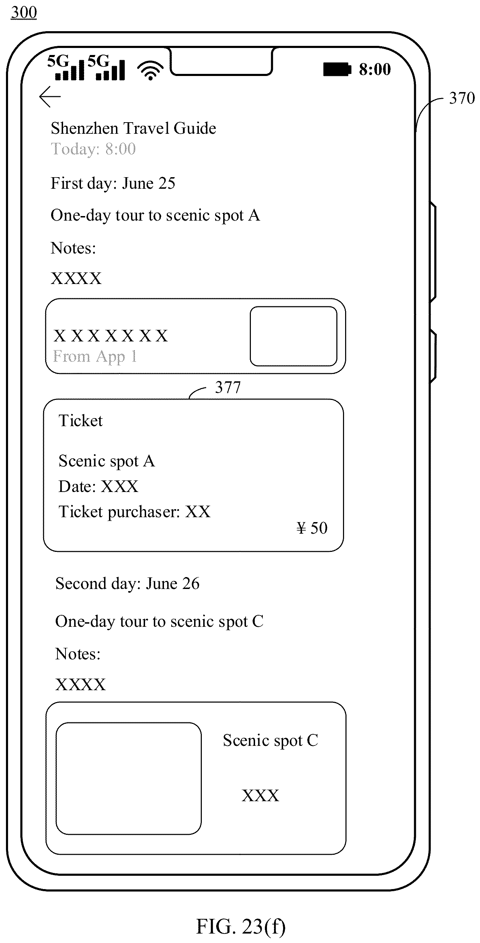

After detecting an operation of tapping the purchase button 3765 by the user and making a payment, the electronic device 300 may display a GUI shown in FIG. 23(f).

Refer to FIG. 23(f). A display widget 377 of a purchased ticket may be displayed in the display interface 370. The display widget 377 may include the scenic spot A, the date, the ticket price, ticket buyer information, and the like.

In this way, after the user purchases the ticket of the scenic spot A, the electronic device 300 may directly return to the display interface 370, and display the display widget 377 of the purchased ticket in the display interface 370. In this way, when the user needs to purchase a ticket, the electronic device does not need to enter another application to purchase the ticket, and then return to Notepad after the purchase is completed. The user only needs to invoke the AI service to conveniently purchase the ticket. This can simplify an operation of the user and bring a good experience to the user.

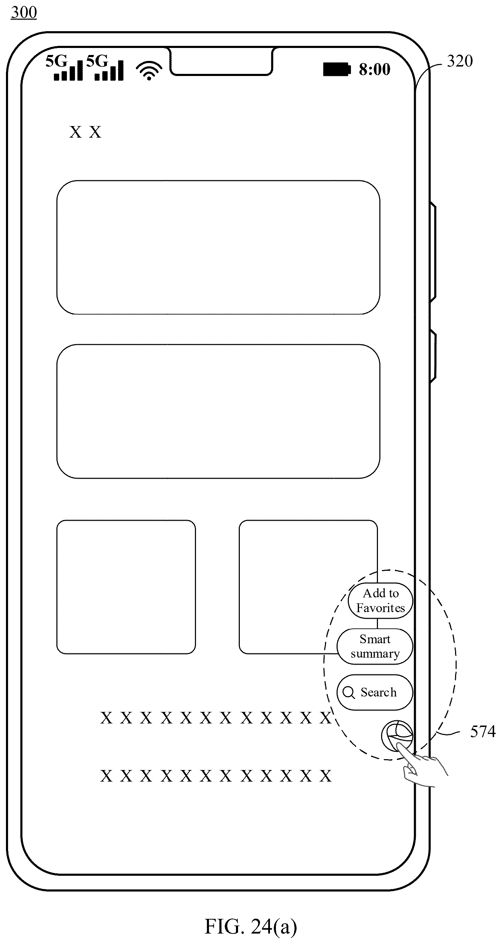

In some other examples, when the entry indicator of the AI service in the display interface 320 of the electronic device 300 is located on a side, a travel guide may also be formulated by using a solution similar to the technical solution in FIG. 23(a) to FIG. 23(f), as shown in FIG. 24(a) to FIG. 24(c).

FIG. 24(a) to FIG. 24(c) are diagrams of another group of GUIs according to an embodiment of this application.

Refer to FIG. 24(a). An entry indicator 574 in a display interface 320 of an electronic device 300 is located on a side of the display interface.

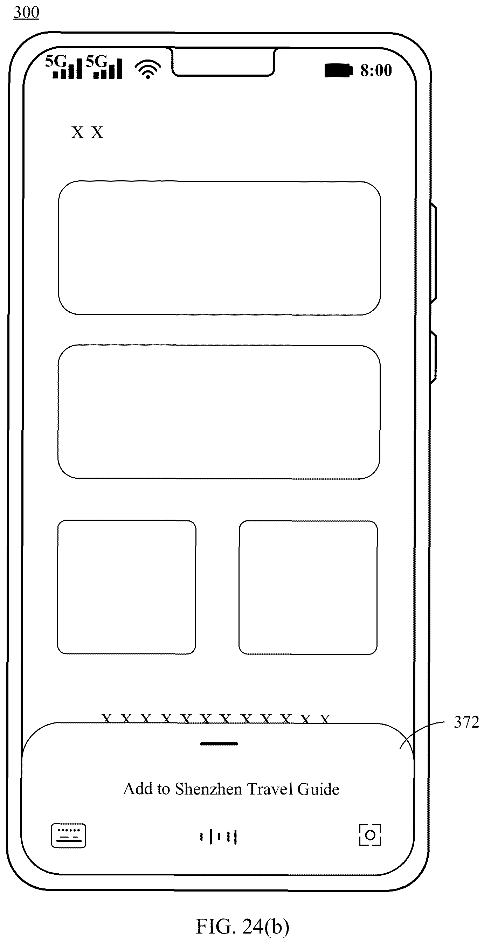

After detecting an operation of tapping a voice input icon in the entry indicator 574 by a user and recognizing content "Add to Shenzhen Travel Guide" input by the user through a voice, the electronic device 300 may display a GUI shown in FIG. 24(b).

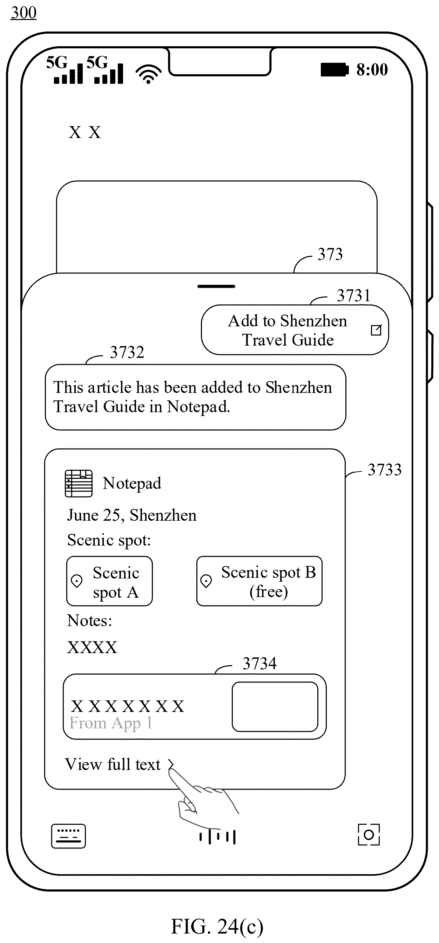

It should be understood that for FIG. 24(b) and FIG. 24(c), refer to the related descriptions of FIG. 23(b) and FIG. 23(c). For brevity, details are not described herein again.

It may be understood that the electronic device 300 may continue to perform the technical solution in FIG. 23(d) and FIG. 23(e). This is not limited in embodiments of this application.

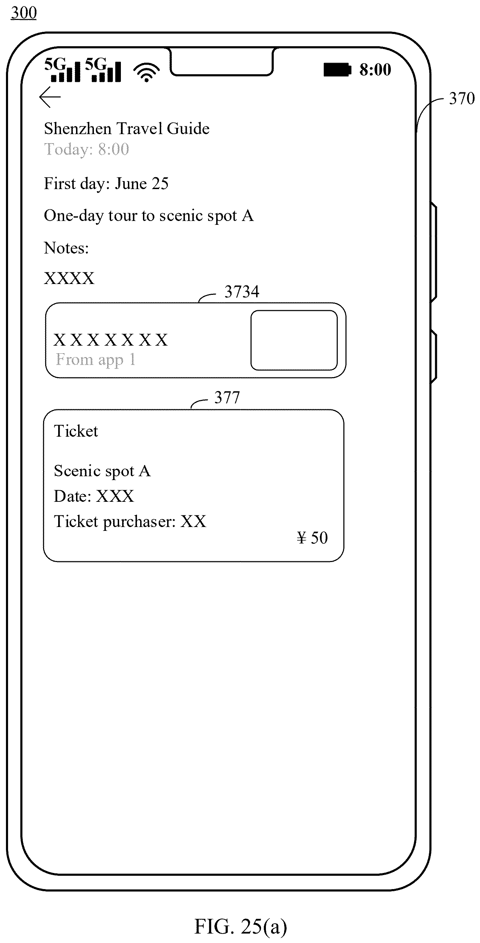

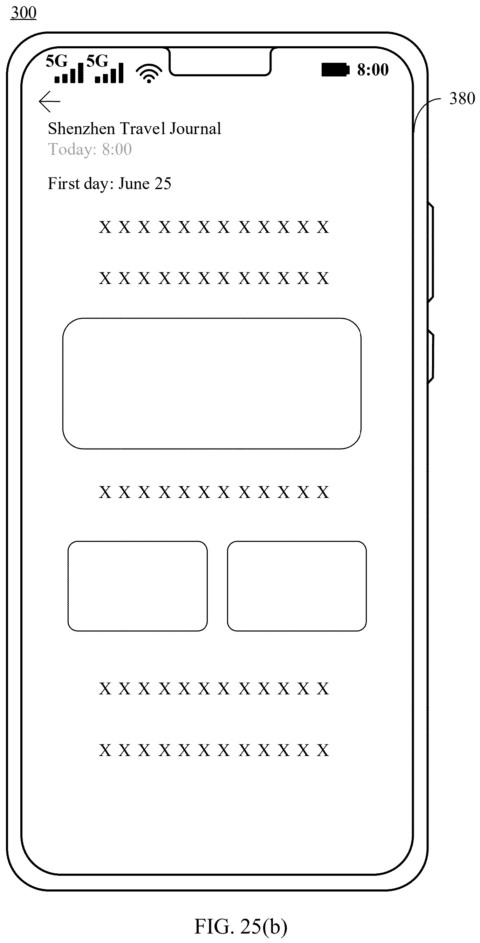

In this embodiment of this application, the electronic device 300 may further automatically generate a travel journal after traveling. The following describes the technical solution with reference to FIG. 25(a) and FIG. 25(b).

FIG. 25(a) and FIG. 25(b) are diagrams of another group of GUIs according to an embodiment of this application. FIG. 25(a) and FIG. 25(b) show a process in which an electronic device 300 automatically generates a travel journal.

It should be understood that for FIG. 25(a), refer to the related descriptions of FIG. 23(f).

After the electronic device 300 detects that a travel is completed, for example, the last time point in the travel guide is 10:00 P.M., the electronic device 300 may automatically generate a travel journal after preset duration (for example, one hour) after the time point. Alternatively, the electronic device may generate a travel journal on a next day. After detecting an operation of viewing the travel journal by the user, the electronic device 300 may display a GUI shown in FIG. 25(b).

Refer to FIG. 25(b). The GUI may be a display interface 380 of the travel journal automatically generated by the electronic device 300.

For example, the display interface 380 may include a travel time, a travel location, weather, stay duration, a video or a picture shot by the user, and the like, to enrich content of the travel journal.

In some other examples, after traveling, the user may further send a journal generation instruction to the AI service, so that the electronic device generates the travel journal based on the instruction of the user. This is not limited in embodiments of this application.

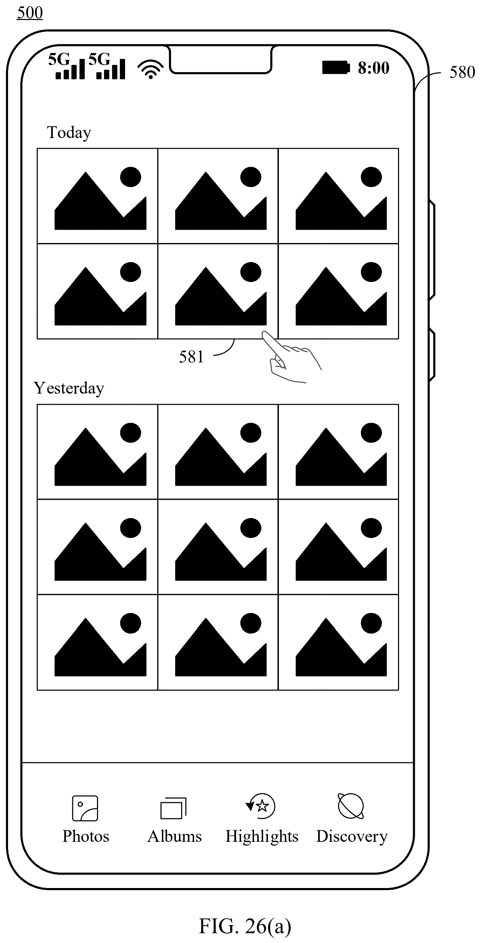

Generally, the user may shoot one or more pictures for a same scene or person in a travel process. When the user views one of the pictures in Albums, the electronic device may recommend a batch beautification function to the user. The following describes the technical solution with reference to FIG. 26(a) to FIG. 26(g).

FIG. 26(a) to FIG. 26(g) are diagrams of another group of GUIs according to an embodiment of this application. FIG. 26(a) to FIG. 26(d) show a process in which an electronic device performs batch beautification.

Refer to FIG. 26(a). A GUI is a display interface 580 of Gallery of an electronic device 500. The display interface 580 may include a plurality of pictures shot by a user by using the electronic device 500.

It may be understood that the display interface 580 may further include a picture obtained by the user by using the electronic device to take a screenshot, a picture saved in some applications, or the like.

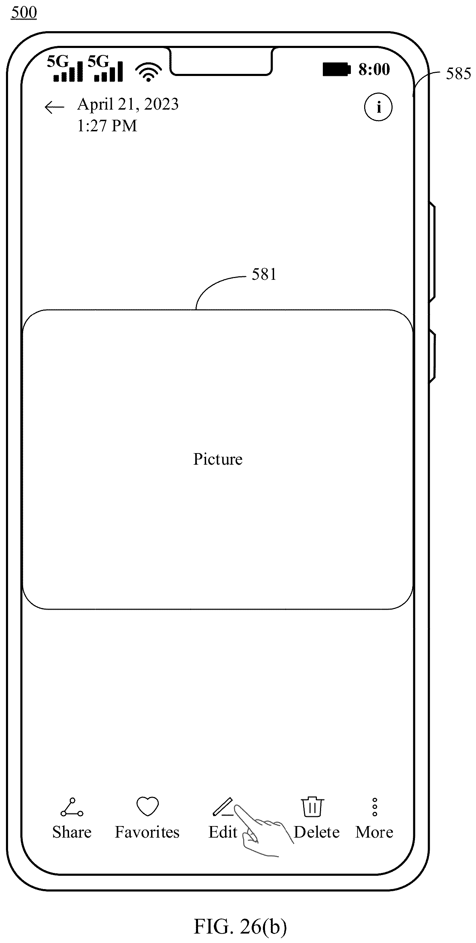

After detecting an operation of tapping a picture 581 by the user, the electronic device 500 may display a GUI shown in FIG. 26(b).

Refer to FIG. 26(b). A display interface 585 of the electronic device 500 includes the picture 581, shooting time of the picture 581, and a plurality of function buttons such as a sharing function button, a favorites function button, an editing function button, a deletion function button, and a more function button.

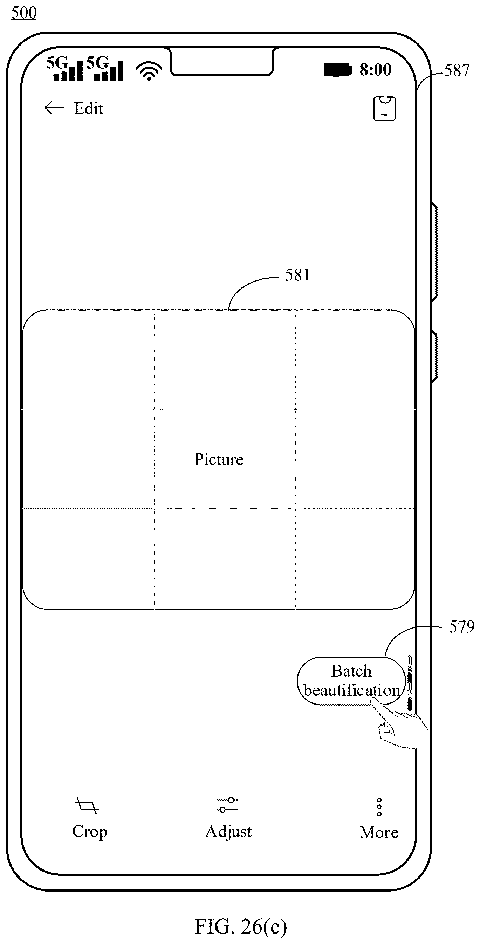

After detecting an operation of tapping the editing function button by the user, the electronic device 500 may display a GUI shown in FIG. 26(c).

Refer to FIG. 26(c). The GUI is a display interface 587 for editing the picture 581 by the electronic device 500. In the display interface 587, the user may use some functions to beautify the picture 581, for example, crop a picture size, add a filter, and adjust a color.

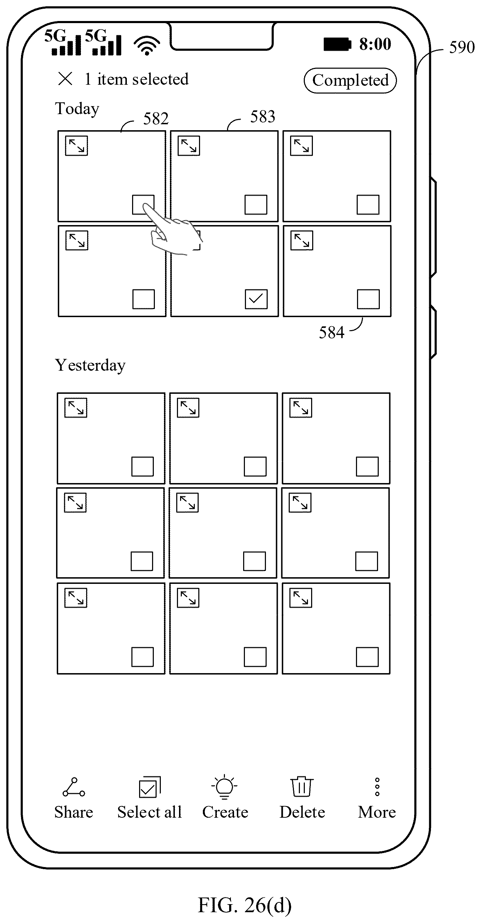

Because the user shoots a plurality of similar pictures, the user may have a requirement for batch beautification. Therefore, the electronic device 500 may further display a display box 579 for batch beautification in the display interface 587. After an operation of tapping the display box 579 for batch beautification, the electronic device 500 may display a GUI shown in FIG. 26(d).

Refer to FIG. 26(d). The GUI is a display interface 590 provided by the electronic device 500 for the user to select a picture. The display interface 590 may display pictures in Gallery, and each picture may display a check box for the user to select a picture.

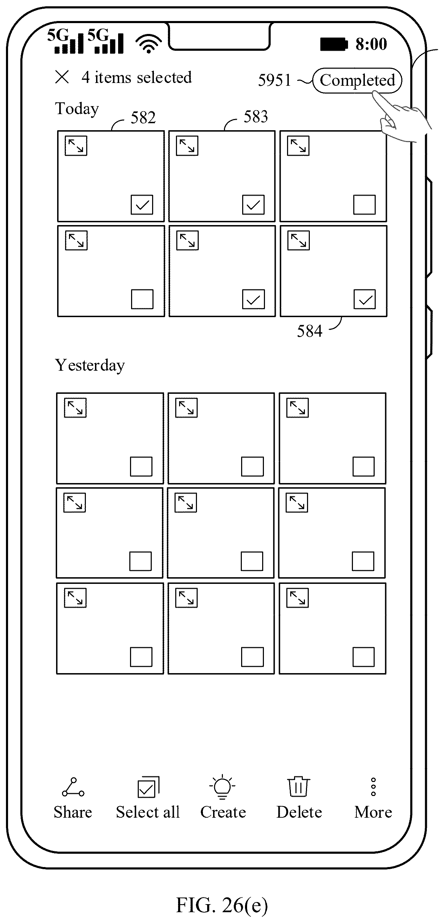

For example, after detecting an operation of tapping a picture 582, a picture 583, and a picture 584 by the user, the electronic device may display a GUI shown in FIG. 26(e).

Refer to FIG. 26(e). Check boxes of the picture 582, the picture 583, and the picture 584 selected by the user in the display interface 590 are in a selected state, so that the user can determine which pictures are selected.

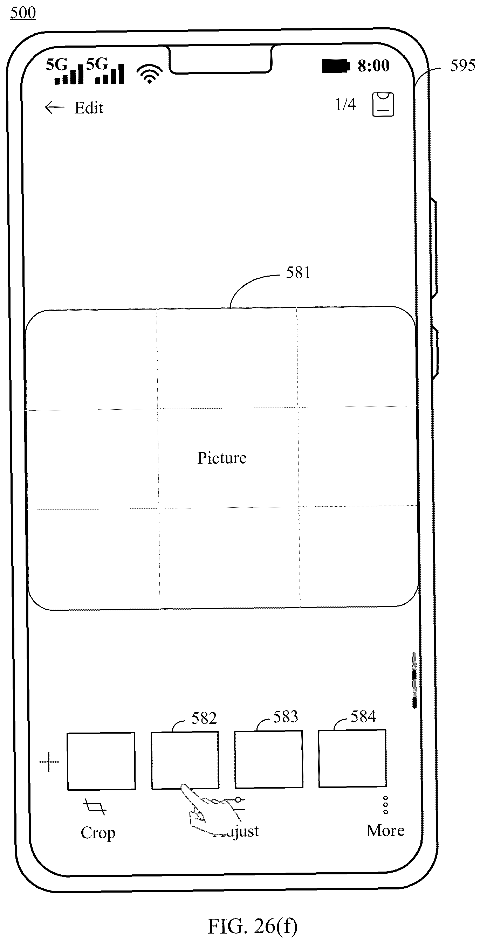

After detecting an operation of tapping a completed button 5951 by the user, the electronic device 500 may display a GUI shown in FIG. 26(f).

Refer to FIG. 26(f). The electronic device 500 may display a display interface 595 for editing the picture 581. The display interface 595 may include the picture 581 in the middle, and may further include, in the lower part of the display interface 595, thumbnails of the picture 581, the picture 582, the picture 583, and the picture 584 selected by the user, so that the user can determine a picture that needs to be beautified. An upper right corner of the display interface 595 may further include a total quantity of pictures that need to be beautified and a picture that is currently beautified and that belongs to the first picture.

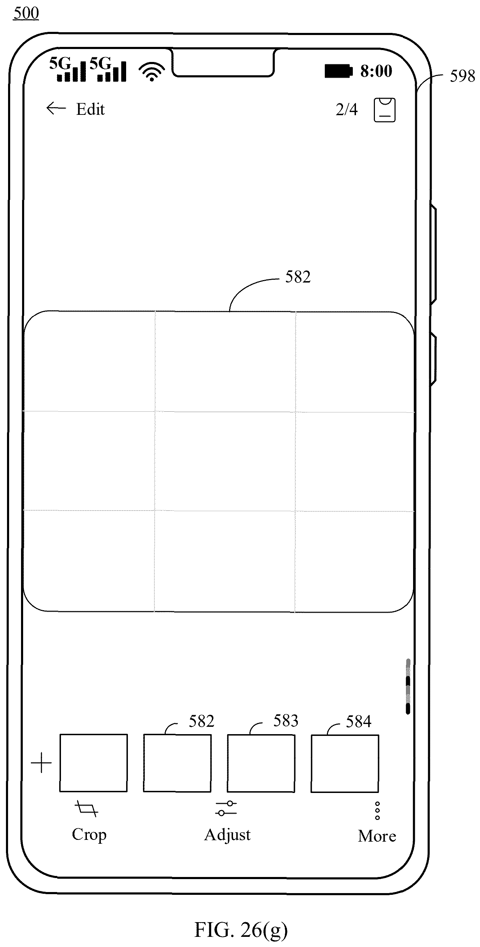

The user may further switch the currently beautified picture by tapping the thumbnails of the pictures in the display interface 595. For example, after detecting an operation of tapping the thumbnail of the picture 582 by the user, the electronic device 500 may display a GUI shown in FIG. 26(g).

Refer to FIG. 26(g). The electronic device 500 may display a display interface 598 for editing the picture 582. The complete picture 582 may be displayed in the middle of the display interface 598, so that the user may beautify the picture 582. Similarly, the thumbnails of the picture 581, the picture 582, the picture 583, and the picture 584 may be included in the lower part of the display interface 598, and an upper right corner of the display interface 598 may also display a total quantity of pictures that need to be beautified and a picture that is currently beautified and that belongs to the second picture.

It may be understood that the user may flexibly beautify the selected picture in the foregoing manner, and does not need to separately beautify one picture each time, to avoid repeating a previous beautifying operation when a plurality of pictures need to be beautified. According to this technical solution, efficiency of beautifying a plurality of pictures by the user can be improved.

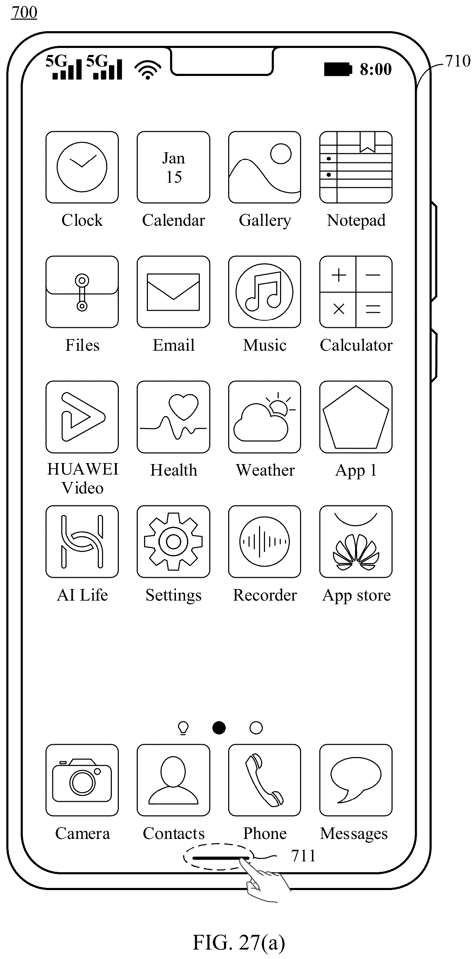

In some cases, as shown in FIG. 27(a) to FIG. 27(f), the user may further invoke the AI service to formulate a menu for a group dinner. FIG. 27(a) to FIG. 27(f) are diagrams of another group of GUIs according to an embodiment of this application.

Refer to FIG. 27(a). A GUI may be a display interface 710 of an electronic device 700. The display interface 710 may be a home screen of the electronic device, and a bottom of the display interface 710 may include an entry indicator 711 of an AI service.

In some other examples, the entry indicator 711 may alternatively be located on a side. This is not limited in embodiments of this application.

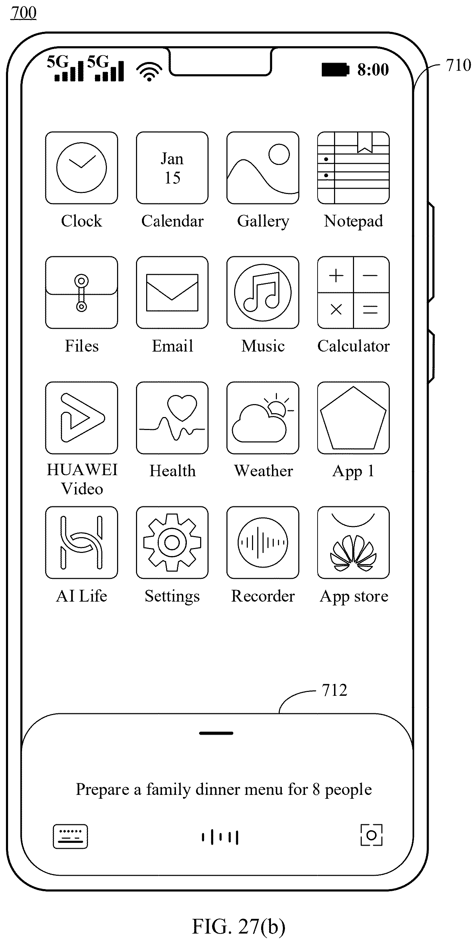

After detecting an operation of touching and holding the entry indicator 711 by the user and inputting "Prepare a family dinner menu for 8 people" through a voice, the electronic device 700 may display a GUI shown in FIG. 27(b).

Refer to FIG. 27(b). The electronic device 700 may display a display interface 712 of the AI service. The display interface 712 may include recognized content "Prepare a family dinner menu for 8 people", a text input icon, a voice input icon, a visual input icon, and the like.

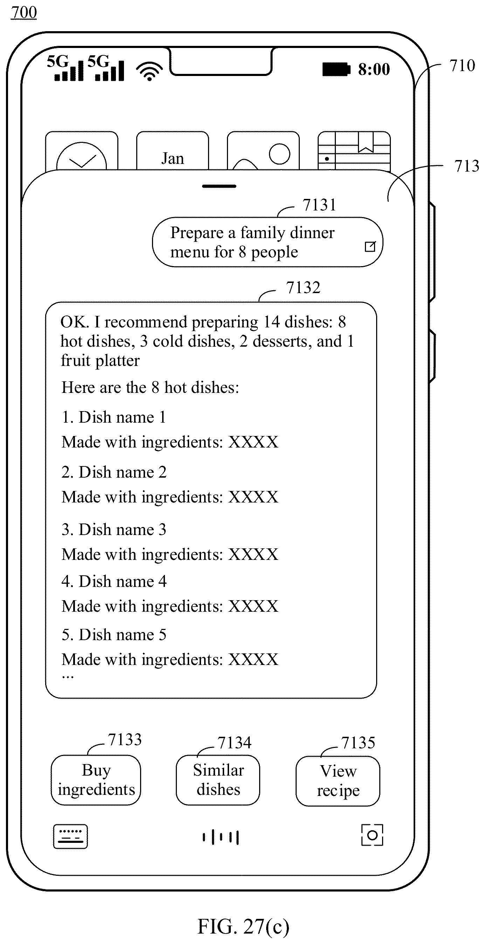

After detecting that a current voice instruction input of the user is completed, the electronic device 700 may display a GUI shown in FIG. 27(c).

Refer to FIG. 27(c). The electronic device 700 may display an interaction display interface 713. The display interface 713 may include a display box 7131 of the instruction and a display box 7132 of an AI service execution result.

For example, the display box 7131 may include the instruction "Prepare a family dinner menu for 8 people" input by the user. The display box 7132 may include "OK. I recommend preparing 14 dishes: 8 hot dishes, 3 cold dishes, 2 desserts, and 1 fruit platter". The display box 7132 may further include names of recommended dishes and ingredients included in the dishes, so that the user can determine the recommended dishes and required ingredients.

The display box 7132 may further include a display box of other content recommended by the AI service to the user, for example, a display box 7133 for buying ingredients, a display box 7134 for similar dishes, and a display box 7135 for viewing a recipe.

In this way, the user can conveniently invoke the AI service to formulate some menus for a group dinner. Then, the user may further input an instruction to adjust the menu recommended by the AI service.

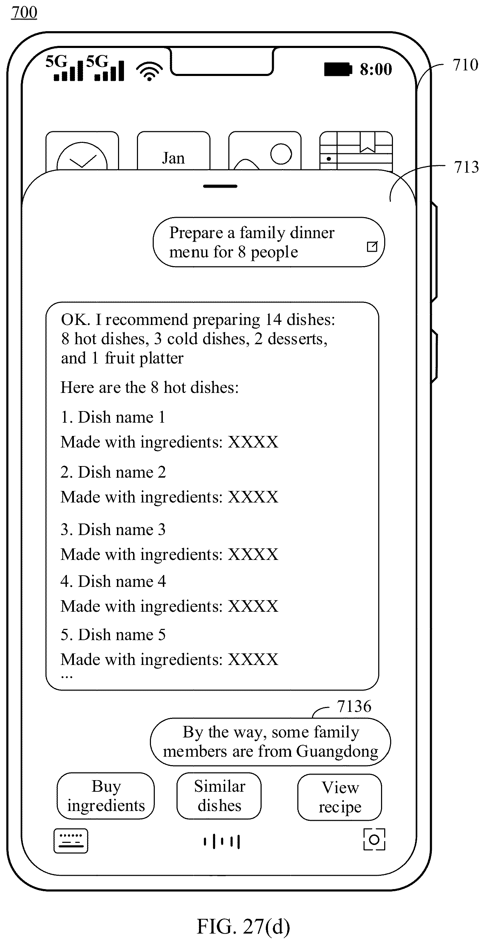

When the user further inputs a voice instruction "By the way, some family members are from Guangdong", the electronic device 700 may display a GUI shown in FIG. 27(d).

Refer to FIG. 27(d). A display box 7136 appears on the display interface 713 of the electronic device 700, and the display box 7136 may include the recognized voice instruction "By the way, some family members are from Guangdong".

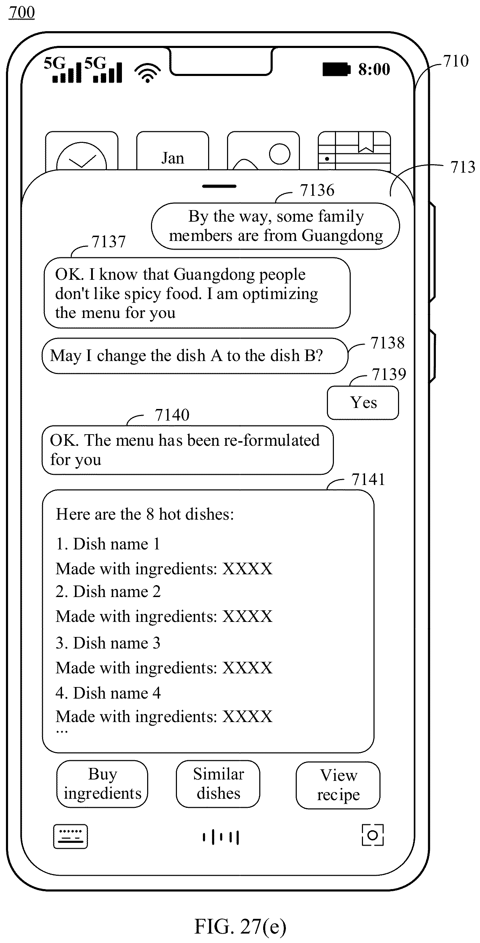

Then, the electronic device 700 may display a GUI shown in FIG. 27(e).

Refer to FIG. 27(e). A display box 7137 and a display box 7138 may continue to appear in the display interface 713 of the electronic device 700. The display box 7137 may include "OK. I know that Guangdong people don't like spicy food. I am optimizing the menu for you", and the display box 7138 may include "May I change the dish A to the dish B?".

When a deterministic instruction like "Yes" of the user is detected, a display box 7139 is displayed in the display interface 713, and the display box 7139 may include the recognized instruction "Yes". Then, a display box 7140 and a display box 7141 are displayed in the display interface 713.

The display box 7140 may include "OK. The menu has been re-formulated for you", and the display box 7141 may display dish names and ingredients included in the adjusted menu.

In this way, the electronic device 700 may further adjust the menu recommended by the AI service by using an instruction of the user.

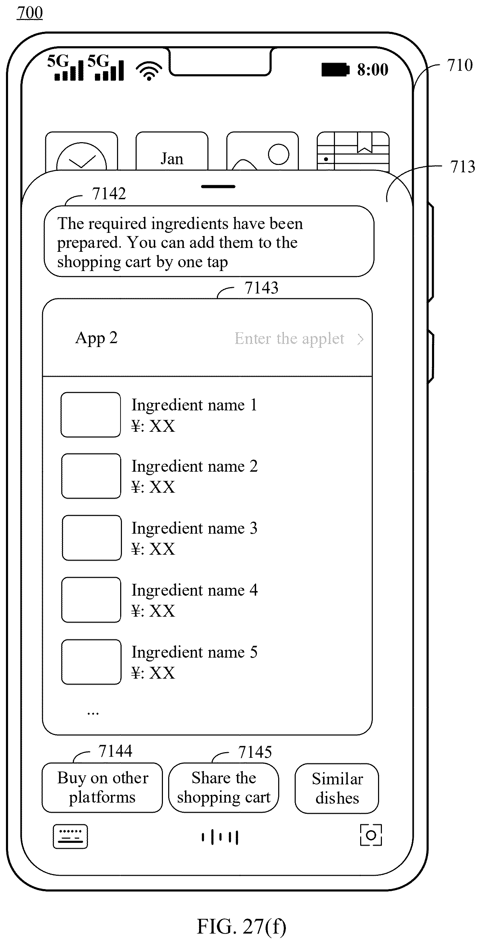

Then, the electronic device 700 may display a GUI shown in FIG. 27(f).

Refer to FIG. 27(f). The display widget 7132 of the electronic device 700 may continue to display a display box 7142 and a display widget 7143. The display box 7142 may include "The required ingredients have been prepared. You can add them to the shopping cart by one tap". The display widget 7143 may be a display widget of a dish purchase applet, for example, may be an applet of a supermarket or a store. The display widget 7143 may include a name of an application and various ingredients required by the foregoing menu.

In this way, the AI service of the electronic device may sort out ingredients required by the dish for the user, and the user may implement one-tap purchase, thereby improving user experience.

The display interface 713 may further include a display box of other content recommended by the AI service for the user, for example, a display box 7144 of another platform or a display box 7145 for sharing the shopping cart.

It may be understood that content in the display box or the display widget included in the display interface 713 is merely an example, and specific content of the display box or the display widget is not limited in embodiments of this application.

In some other examples, when the electronic device 700 obtains authorization of the user, the AI service of the electronic device 700 may further automatically place an order for the user to purchase the foregoing ingredients.

It may be understood that the technical solutions in the foregoing embodiments may be combined with each other or partially combined to form a new technical solution. Such a solution should not be considered as falling beyond the protection scope of this application. Alternatively, some parts in embodiments may be independently formed into a new technical solution. Such a solution should not be considered as falling beyond the protection scope of this application.

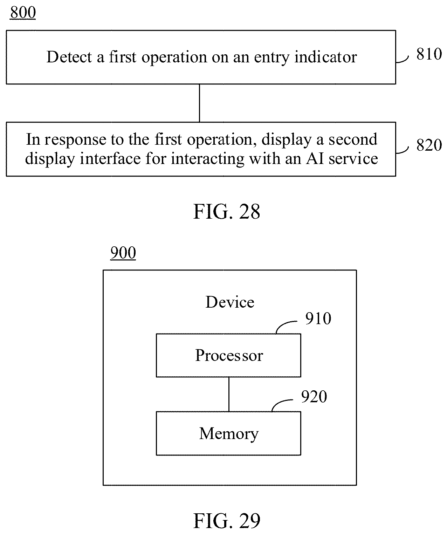

FIG. 28 is a schematic flowchart of a display method according to an embodiment of this application. As shown in FIG. 28, the method 800 may be applied to an electronic device. A first display interface of the electronic device includes an entry indicator for invoking an artificial intelligence AI service. The method 800 may include step 810 and step 820.

810: The electronic device detects a first operation on the entry indicator.

The entry indicator may be located at a bottom of the first display interface, or may be located at a side of the first display interface. The first display interface may be a lock screen display interface of the electronic device, a home screen, a display interface of an application, or the like.

For example, refer to FIG. 3(a) to FIG. 3(c). The first display interface may be the display interface 310 of the electronic device, and the entry indicator may be the entry indicator 311.

For example, refer to FIG. 16(a) to FIG. 16(c). The first display interface may be the display interface 570 of the electronic device, and the entry indicator may be the entry indicator 571 or 572.

The entry indicator may be a bar indicator having a preset length, or may be an icon, an AI status bar, or the like.

For example, refer to FIG. 3(a) to FIG. 3(c). The entry indicator may be the entry indicator 311.

For example, refer to FIG. 16(a). The entry indicator may be the AI icon 562.

For example, refer to FIG. 14(a) to FIG. 14(e). The entry indicator may be the AI status bar.

The first operation may be an operation like a tap, touch and hold, double tap, or a slide. This is not limited in embodiments of this application.

820: In response to the first operation, the electronic device displays a second display interface for interacting with the AI service.

For example, refer to FIG. 3(a) to FIG. 3(c). The second display interface may be the display interface 312.

The second display interface may overlay a part of the first display interface, or the second display interface may be displayed in full screen, or the like.

In an embodiment of this application, the first display interface of the electronic device may include the entry indicator for invoking the AI service. When detecting the first operation of a user on the entry indicator, the electronic device may display the second display interface for interacting with the AI service. According to this technical solution, the user can conveniently use the AI service on the electronic device.

In some embodiments, before the first operation of the user on the entry indicator is detected, the method 800 may further include:
determining that the AI service has content that needs to be recommended to the user; and
changing the entry indicator from a first form to a second form in response to determining that the AI service has the content that needs to be recommended to the user.

For example, the first form may be single-color display, and the second form may be color display and display a flowing light effect. Alternatively, the first form may be a bar indicator with a preset length, and the second form may be a circular indicator or an indicator longer than the bar indicator in the first form.

For example, the electronic device may determine, based on a confidence level of the recommended content in the foregoing, whether to recommend the related content to the user, or the electronic device may determine, based on information such as a priority, whether to recommend the related content to the user.

Based on embodiments of this application, when determining that the AI service has the content that needs to be recommended to the user, the electronic device changes the entry indicator from the first form to the second form, to remind the user that there is recommended content currently.

In some embodiments, the second display interface includes a display control of recommended content. For example, the display control may be a display widget, a display box, or the like.

For example, refer to FIG. 8(b). The second display interface is the display interface 342, and the display interface includes the recommended display widget 346.

In some other examples, the display widget 346 in the display interface may be replaced with a display box. This is not limited in embodiments of this application.

Based on embodiments of this application, the second display interface may include a display widget or a display box of the recommended content, so that the user can directly access a corresponding display interface through the display widget or the display box, without using a corresponding application. This can improve efficiency of accessing the display interface by the user.

In some embodiments, the method 800 further includes:
in response to an operation of dragging target content in the first display interface to the entry indicator, displaying the entry indicator as an input control, and displaying the target content in the input control; and
displaying a third display interface, where the third display interface includes a display control that uses the target content as a first task instruction and a display control that is used by the electronic device to execute the first task instruction by using the AI service.

For example, refer to FIG. 11(a) to FIG. 11(e). The entry indicator is the entry indicator 311, the first display interface is the display interface 320, the target content is the dragged text AXX (which may also be a picture or the like), the input control is the input box 321, the third display interface is the display interface 327, the display control of the first task instruction is the display box 3271, and the display control for executing the first task instruction is the display box 3272.

For example, the target content may be text, a picture, a table, or the like.

Based on embodiments of this application, the user may drag, to the input control formed at the entry indicator, content such as text or a picture that the user expects to query in a display interface. The electronic device may perform a corresponding operation based on the corresponding content, and display an execution result. This can improve convenience of performing query by the user by using the AI service.

In some embodiments, the method 800 further includes:
displaying a fourth display interface in response to an operation of inputting a second task instruction, where the fourth display interface includes a display control of the second task instruction and a display control for executing the second task instruction; and
collapsing the fourth display interface in response to a second operation of the user in the fourth display interface.

For example, refer to FIG. 12(a) and FIG. 12(b). The second task instruction is the problem B, the fourth display interface is the display interface 355, the display control of the second task instruction is 3551, and the display control for executing the second task instruction is the display box 3552. The second operation may be the operation of sliding upward or downward on the display interface 355.

Based on embodiments of this application, the electronic device may collapse the display interface of the AI service based on an operation of the user.

In some embodiments, collapsing the fourth display interface includes:
if the second task instruction is not completely executed, collapsing the fourth display interface into a collapsed display control having a task incomplete indicator, where the collapsed display control is located in a status bar of the electronic device or in the first display interface.

For example, refer to FIG. 12(c). The fourth display interface is collapsed into a display box, and the display box may include "Processing...", and the task incomplete indicator may be the text content. It should be understood that the task incomplete indicator may be in another form, for example, an icon.

Based on embodiments of this application, when the second task instruction is not completely executed, the electronic device may collapse the fourth display interface into the collapsed display control having the task incomplete indicator, so that after the fourth display interface is collapsed, the electronic device can still remind the user that there is a task that is being executed.

In some embodiments, the method further includes:
displaying a task completed indicator in the collapsed display control after the second task instruction is completely executed; and
displaying the fourth display interface in response to a third operation on the collapsed display control.

For example, refer to FIG. 12(d) and FIG. 12(e). The task completed indicator may be text content of "Completed", or may be in another form, for example, an icon. The third operation may be an operation of tapping the collapsed display box.

Based on embodiments of this application, after the second task instruction is completely executed, the task completed indicator may be displayed in the collapsed display control, so that the electronic device can remind the user that the current task has been completely executed.

In some embodiments, the fourth display interface is collapsed into the entry indicator, and the method 800 further includes:
displaying a fifth display interface in response to a fourth operation on the entry indicator, where the fifth display interface includes a display control that is executing the second task instruction.

For example, refer to FIG. 13(c) and FIG. 13(d). The fourth operation may be the operation of tapping or touching and holding the entry indicator 311, the fifth display interface may be the display interface 363, and the display control of the second task instruction may be the display widget 3631 of the task for snapping up tickets.

Based on embodiments of this application, the fourth display interface is collapsed into the entry indicator. When the user performs the fourth operation (for example, a tap) on the entry indicator, the fifth display interface may be displayed. The fifth display interface may include the display control for executing the second task instruction by the AI service, so that the user can invoke the display interface of the AI service again through a simple operation after the display interface is collapsed, and can obtain related information of the task that is being executed.

In some embodiments, the method 800 further includes:
displaying a sixth display interface in response to an operation of inputting a third task instruction, where the sixth display interface includes a display control of the third task instruction, a display control for executing the third task instruction, and an indicator indicating that the second task instruction is being executed.

For example, refer to FIG. 13(e) and FIG. 13(f). The third task instruction may be the task B, the sixth display interface may be the display interface 364, the display control of the third task instruction may be the display box 3641, the display control for executing the third task instruction may be the display box 3642, and the indicator indicating that the second task instruction is being executed may be the display box 3643.

Based on embodiments of this application, when detecting the third task instruction, the electronic device may display the display, in the sixth display interface control, related to the third task instruction, and display the indicator indicating that the second task instruction is not completely executed, so that the electronic device can remind the user that there is still a task that is not completely executed.

In some embodiments, the entry indicator is a bar indicator that has a preset length and that is located at a bottom or a side of the first display interface.

In some embodiments, a location of the entry indicator in the first display interface is adjustable. Based on embodiments of this application, the location of the entry indicator may be adjusted based on an operation of the user, so that flexibility of the entry indicator can be improved.

In some embodiments, the entry indicator is an AI status bar, the AI status bar is located at the bottom of the first display interface, and the method 800 further includes:
hiding the AI status bar in response to an operation of sliding downward on the AI status bar by the user; and
re-displaying the AI status bar at the bottom of the first display interface in response to an operation of sliding upward at the bottom of the first display interface by the user.

For example, refer to FIG. 14(a) to FIG. 14(e). The AI status bar may include the search icon 511 and the visual input icon 512.

Based on embodiments of this application, the entry indicator may be the AI status bar, and the electronic device may hide the AI status bar or invoke the AI status bar based on an operation of the user, so that display flexibility of the AI status bar can be improved.

In some embodiments, the first display interface is a home screen of the electronic device, the entry indicator is an AI icon, and the method 800 further includes:
displaying a seventh display interface of an application in response to an operation of starting the application, where the seventh display interface includes the AI icon, and a location of the AI icon in the seventh display interface is adjustable.

For example, refer to FIG. 16(a) to FIG. 16(c). The AI icon may be the AI chart 562. The seventh display interface is the display interface 570.

Based on embodiments of this application, the entry indicator may be the AI icon, and the AI icon is also displayed in the display interface of the application, and the user can conveniently adjust a location of the AI icon.

In some embodiments, the seventh display interface further includes a target display control of content recommended by the AI service, and the method 800 further includes:
displaying an eighth display interface in response to an operation of tapping the target display control by the user, where the eighth display interface includes content related to the content in the target display control; or
displaying the seventh display interface and an eighth display interface in split-screen mode in response to an operation of tapping the target display control by the user, where the eighth display interface includes content related to the content in the target display control.

For example, refer to FIG. 20(a) and FIG. 20(b). The target display control is the display box 576 of smart summary, and the eighth display interface is the display interface 577.

For example, refer to FIG. 21(a) and FIG. 21(b). The target display control is the smart summary display box 611, and the eighth display interface is the display interface 620.

Based on embodiments of this application, when the seventh display interface includes the target display control of the content recommended by the AI service, when the user taps the target display control, the electronic device may display corresponding content; or the electronic device may further display the seventh display interface and the content recommended by the AI service in split-screen mode.

In some embodiments, the method further includes: closing the second display interface in response to a fifth operation on the second display interface.

For example, refer to FIG. 3(a) to FIG. 3(c). The fifth operation may be an operation on the collapse button 3126.

In some embodiments, the second display interface includes a plurality of instruction input icons, and the instruction input icon is used to trigger an instruction input.

For example, refer to FIG. 3(b). The instruction input icon may include the text input icon 3121, the voice input icon 3122, the visual input icon 3123, and the like.

FIG. 29 is a block diagram of an electronic device according to an embodiment of this application. As shown in FIG. 29, an electronic device 900 may include one or more processors 910 and one or more memories 920. The one or more memories 920 store one or more instructions. When the instructions are executed by the one or more processors 910, the display method according to any one of the foregoing possible implementations is performed.

For example, the device 900 may be the electronic device 100, the electronic device 300, the electronic device 400, the electronic device 500, the electronic device 600, the electronic device 700, or the like in the foregoing descriptions.

An embodiment of this application further provides a chip, including a processor and a communication interface. The communication interface is configured to receive a signal, and transmit the signal to the processor. The processor processes the signal, so that the display method according to any one of the foregoing possible implementations is performed.

The chip may be a chip system, an independent chip, or the like.

An embodiment further provides a readable storage medium. The readable storage medium stores instructions. When the instructions are run on an electronic device, the electronic device is enabled to perform the related method steps, to implement the display method in the foregoing embodiments.

An embodiment further provides a program product. When the program product is run on an electronic device, the electronic device is enabled to perform the foregoing related steps, to implement the display method in the foregoing embodiments.

In addition, an embodiment of this application further provides an apparatus. The apparatus may be specifically a chip, a component, or a module. The apparatus may include a processor and a memory that are connected to each other. The memory is configured to store instructions. When the apparatus runs, the processor may execute the instructions stored in the memory, to enable the apparatus to perform the display method in the foregoing method embodiments.

The device, the readable storage medium, the program product, or the apparatus provided in embodiments is configured to perform the corresponding method provided above. Therefore, for beneficial effects that can be achieved, refer to the beneficial effects in the corresponding method provided above. Details are not described herein again.

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method is applied to an electronic device, a first display interface of the electronic device comprises an entry indicator for invoking an artificial intelligence AI service, and the method comprises:
detecting a first operation on the entry indicator; and
in response to the first operation, displaying a second display interface for interacting with the AI service.

2. The method according to claim 1, wherein before detecting the first operation of a user on the entry indicator, the method further comprises:
determining that the AI service has content that needs to be recommended to the user; and
changing the entry indicator from a first form to a second form in response to determining that the AI service has the content that needs to be recommended to the user.

3. The method according to claim 2, wherein the second display interface comprises a display control of recommended content.

4. The method according to any one of claims 1 to 3, wherein the method further comprises:
in response to an operation of dragging target content in the first display interface to the entry indicator, displaying the entry indicator as an input control, and displaying the target content in the input control; and
displaying a third display interface, wherein the third display interface comprises a display control that uses the target content as a first task instruction and a display control that is used by the electronic device to execute the first task instruction by using the AI service.

5. The method according to any one of claims 1 to 3, wherein the method further comprises:
displaying a fourth display interface in response to an operation of inputting a second task instruction, wherein the fourth display interface comprises a display control of the second task instruction and a display control for executing the second task instruction; and
collapsing the fourth display interface in response to a second operation of the user in the fourth display interface.

6. The method according to claim 5, wherein collapsing the fourth display interface comprises:
if the second task instruction is not completely executed, collapsing the fourth display interface into a collapsed display control having a task incomplete indicator, wherein the collapsed display control is located in a status bar of the electronic device or in the first display interface.

7. The method according to claim 6, wherein the method further comprises:
displaying a task completed indicator in the collapsed display control after the second task instruction is completely executed; and
displaying the fourth display interface in response to a third operation on the collapsed display control.

8. The method according to claim 5, wherein the fourth display interface is collapsed into the entry indicator, and the method further comprises:
displaying a fifth display interface in response to a fourth operation on the entry indicator, wherein the fifth display interface comprises a display control that is executing the second task instruction.

9. The method according to claim 8, wherein the method further comprises:
displaying a sixth display interface in response to an operation of inputting a third task instruction, wherein the sixth display interface comprises a display control of the third task instruction, a display control for executing the third task instruction, and an indicator indicating that the second task instruction is being executed.

10. The method according to any one of claims 1 to 9, wherein the entry indicator is a bar indicator that has a preset length and that is located at a bottom or a side of the first display interface.

11. The method according to any one of claims 1 to 10, wherein a location of the entry indicator in the first display interface is adjustable.

12. The method according to any one of claims 1 to 11, wherein the entry indicator is an AI status bar, the AI status bar is located at the bottom of the first display interface, and the method further comprises:
hiding the AI status bar in response to an operation of sliding downward on the AI status bar by the user; and
re-displaying the AI status bar at the bottom of the first display interface in response to an operation of sliding upward at the bottom of the first display interface by the user.

13. The method according to any one of claims 1 to 11, wherein the first display interface is a home screen of the electronic device, the entry indicator is an AI icon, and the method further comprises:
displaying a seventh display interface of an application in response to an operation of starting the application, wherein the seventh display interface comprises the AI icon, and a location of the AI icon in the seventh display interface is adjustable.

14. The method according to claim 13, wherein the seventh display interface further comprises a target display control of content recommended by the AI service, and the method further comprises:
displaying an eighth display interface in response to an operation of tapping the target display control by the user, wherein the sixth display interface comprises content related to the content in the target display control; or
displaying the seventh display interface and an eighth display interface in split-screen mode in response to an operation of tapping the target display control by the user, wherein the eighth display interface comprises content related to the content in the target display control.

15. The method according to any one of claims 1 to 14, wherein the second display interface overlays a part of the first display interface.

16. The method according to any one of claims 1 to 15, wherein the method further comprises:
closing the second display interface in response to a fifth operation on the second display interface.

17. The method according to any one of claims 1 to 16, wherein the second display interface comprises a plurality of instruction input icons, and the instruction input icon is used to trigger an instruction input.

18. An electronic device, comprising one or more processors and one or more memories, wherein the one or more memories store one or more programs, and when the one or more programs are executed by the one or more processors, the display method according to any one of claims 1 to 17 is performed.

19. A chip, wherein the chip comprises a processor and a communication interface, the communication interface is configured to: receive a signal, and transmit the signal to the processor, and the processor processes the signal, so that the display method according to any one of claims 1 to 17 is performed.

20. A readable storage medium, wherein the readable storage medium stores instructions, and when the instructions are run on an electronic device, the display method according to any one of claims 1 to 17 is performed.
